(19) Europäisches Patentamt / European Patent Office / Office européen des brevets

(11) **EP 3 907 899 B1**

(12) **EUROPEAN PATENT SPECIFICATION**

(45) Date of publication and mention
of the grant of the patent:
**08.01.2025 Bulletin 2025/02**

(21) Application number: **21166933.8**

(22) Date of filing: **24.02.2017**

(51) International Patent Classification (IPC):
**H04B 7/0456** *(2017.01)*   **H04B 7/0417** *(2017.01)*
**H04B 7/08** *(2006.01)*   **H04B 7/06** *(2006.01)*
**H04W 72/02** *(2009.01)*

(52) Cooperative Patent Classification (CPC):
**H04B 7/0689; H04B 7/0478; H04B 7/0626;
H04B 7/063; H04B 7/0632; H04B 7/0639;
H04B 7/065; H04B 7/066; H04L 1/003; H04L 5/005;
H04W 72/046; H04W 72/23;** H04B 7/0469;
H04B 7/0486

(54) **METHOD AND APPARATUS FOR CHANNEL STATE INFORMATION (CSI) REPORTING**

VERFAHREN UND VORRICHTUNG FÜR KANALSTATUSINFORMATIONSMELDUNG

PROCÉDÉ ET APPAREIL POUR UN RAPPORT D'INFORMATIONS D'ÉTAT DE CANAL (CSI)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2016 US 201662299227 P
07.03.2016 US 201662304631 P
17.03.2016 US 201662309760 P
30.03.2016 US 201662315366 P
31.03.2016 US 201662316224 P
07.04.2016 US 201662319636 P
20.05.2016 US 201662339455 P
20.02.2017 US 201715437363**

(43) Date of publication of application:
**10.11.2021 Bulletin 2021/45**

(62) Document number(s) of the earlier application(s) in
accordance with Art. 76 EPC:
**17756870.6 / 3 406 033**

(73) Proprietor: **Samsung Electronics Co., Ltd.**
**Suwon-si, Gyeonggi-do 16677 (KR)**

(72) Inventors:
• **Onggosanusi, Eko**
**Santa Clara, 94043 (US)**
• **Rahman, Md Saifur**
**Santa Clara, 94043 (US)**
• **Noh, Hoondong**
**16698 Suwon-si (KR)**
• **Kwak, Youngwoo**
**16514 Suwon-si (KR)**

(74) Representative: **Nederlandsch Octrooibureau**
**P.O. Box 29720**
**2502 LS The Hague (NL)**

(56) References cited:
**EP-A1- 3 382 903**

• **"Foreword", 15 November 2015 (2015-11-15),
XP051022818, Retrieved from the Internet
<URL:http://www.3gpp.
org/ftp/tsg_ran/WG1_RL1/TSGR1_83/Docs/>
[retrieved on 20151115]**
• **SAMSUNG: "Handling collision between
nonPrecoded type and beamformed type CSI
reports", 3GPP DRAFT; R1-160534 PRIORITY
CLASS A B, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG1, no. St Julian's, Malta; 20160215 - 20160219,
5 February 2016 (2016-02-05), XP051063837,
Retrieved from the Internet <URL:http://www.3gpp.
org/ftp/tsg_ran/WG1_RL1/TSGR1_84/Docs/>
[retrieved on 20160205]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### [Technical Field]

The present disclosure relates generally to transmission method and channel state information (CSI) reporting for multiple transmit antennas which includes two dimensional arrays. Such two dimensional arrays can be associated, for example, with a type of multiple-input multiple-output (MIMO) system often termed "full-dimension" MIMO (FD-MIMO) or massive MIMO or 3D-MIMO.

### [Background Art]

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

Wireless communication has been one of the most successful innovations in modern history. The demand of wireless data traffic is rapidly increasing due to the growing popularity among consumers and businesses of smart phones and other mobile data devices, such as tablets, "note pad" computers, net books, eBook readers, and machine type of devices. To meet the high growth in mobile data traffic and support new applications and deployments, improvements in radio interface efficiency and coverage is of paramount importance.

A mobile device or user equipment can measure the quality of the downlink channel and report this quality to a base station so that a determination can be made regarding whether or not various parameters should be adjusted during communication with the mobile device.

The 3GPP Draft; 36213-C70 S00-S09 EBFDMIMO213 DRAFTCR R1-157500, of 15 November 2015, describes various details relating to channel state information, CSI, reporting in LTE Release 12.

3GPP TSG RAN WG1 Meeting #84, R1-160534, "Handling collision between nonPrecoded type and beamformed type CSI reports" describes priority and dropping rules for handling collisions between two types of CSI reporting.

EP 3 382 903 A1, which was cited under Art. 54(3) EPC, describes methods and apparatus for transmitting and receiving channel state information in wireless communication systems.

**[Disclosure of Invention]**

**[Technical Problem]**

Existing channel quality reporting processes in wireless communications systems do not sufficiently accommodate reporting of channel state information associated with large, two dimensional array transmit antennas or, in general, antenna array geometry which accommodates a large number of antenna elements.

**[Solution to Problem]**

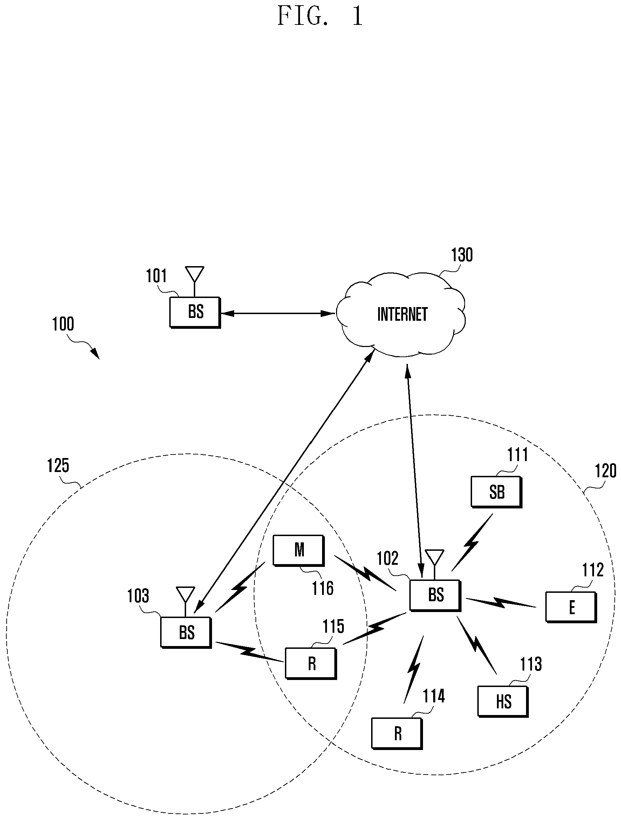

The scope of protection of the invention is exclusively set out in the appended set of claims. Fig.1-4,5C,6B,8,9 fall under the scope of the claimed invention. The other fig. do not fall under the scope of the claimed invention.

Various embodiments of the present disclosure provide methods and apparatuses for CSI reporting.

In one embodiment, a user equipment (UE) is provided. The UE includes a transceiver and a processor operably connected to the transceiver. The transceiver is configured to receive configuration information including a channel state information (CSI) process, a first multiple-input multiple-output (MIMO) Type, and a second MIMO Type. The processor is configured to calculate and report, in response to receipt of the configuration information, a CSI for each of the first and second MIMO Types. The second MIMO Type is Class B and is associated with a single non-zero-power CSI reference signal (NZP CSI-RS) resource that includes at most 8 antenna ports.

In another embodiment, a base station (BS) is provided. The BS includes a processor and a transceiver operably connected to the processor. The processor is configured to generate, for a UE, configuration information including a CSI process, a first MIMO Type, and a second MIMO Type; and generate, for the UE, a NZP CSI-RS setting and a CSI-RS associated with the NZP CSI-RS setting, the NZP CSI-RS setting and associated CSI-RS corresponding to each of the first and second MIMO Types. The transceiver is configured to transmit, to the UE, the configuration information and the CSI-RS corresponding to each of the first and second MIMO Types; and receive, from the UE, a CSI report corresponding to each of the first and second MIMO Types on an uplink channel. The second MIMO Type is Class B and is associated with a single non-zero-power CSI NZP CSI-RS resource that includes at most 8 antenna ports.

In another embodiment, a method for operating a UE is provided. The method includes receiving, by the UE, configuration information including a CSI process, a first MIMO Type, and a second MIMO Type; and in response to receipt of the configuration information, calculating and reporting, by the UE, a CSI for each of the first and second MIMO Types. The second MIMO Type is Class B and is associated with a single non- NZP CSI-RS resource that includes at most 8 antenna ports.

The present disclosure relates to a pre-5th-Generation (5G) or 5G communication system to be provided for supporting higher data rates Beyond 4th-Generation (4G) communication system such as Long Term Evolution (LTE).

Other technical features may be readily apparent to one skilled in the art from the following figures, descriptions, and claims.

Before undertaking the DETAILED DESCRIPTION below, it can be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller can be implemented in hardware or a combination of hardware and software and/or firmware. The functionality associated with any particular controller can be centralized or distributed, whether locally or remotely. The phrase "at least one of," when used with a list of items, means that different combinations of one or more of the listed items can be used, and only one item in the list can be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

**[Advantageous Effects of Invention]**

Efficient allocation of CSI-RS resources not only increases throughput for the desired cell, but also reduces inter-cell interference. To harness their full potential, CSI-RS resource allocation schemes such as hybrid CSI-RS can be used together with a supporting CSI calculation and reporting schemes.

**[Brief Description of Drawings]**

For a more complete understanding of the present disclosure and its advantages, reference is now made to the following description taken in conjunction with the accompanying drawings, in which like reference numerals represent like parts:

FIGURE 1 illustrates an example wireless network according to various embodiments of the present disclosure;
FIGURES 2A and 2B illustrate example wireless transmit and receive paths according to various embodiments of the present disclosure;
FIGURE 3A illustrates an example user equipment according to various embodiments of the present disclosure;
FIGURE 3B illustrates an example enhanced NodeB (eNB) according to various embodiments of the present disclosure;
FIGURE 4 illustrates example two-dimensional (2D) antenna arrays constructed from 16 dual-polarized elements arranged in a 4×2 or 2×4 rectangular format which can be utilized in various embodiments of the present disclosure;
FIGURE 5A illustrates two example schemes with a CSI process, two CSI-RS resources, and Class A as a first out of the two eMIMO-Types according to an embodiment of the present disclosure;
FIGURE 5B illustrates an example scheme with a CSI process, two CSI-RS resources, and Class A as a first out of the two eMIMO-Types according to an embodiment of the present disclosure;
FIGURE 5C illustrates an example scheme with a CSI process, two CSI-RS resources, and Class A as a first out of the two eMIMO-Types according to an embodiment of the present disclosure;
FIGURE 5D illustrates an example scheme with two CSI processes, two CSI-RS resources, and Class A as a first out of the two eMIMO-Types according to an embodiment of the present disclosure;
FIGURE 5E illustrates an example scheme with two CSI processes, two CSI-RS resources, and Class A as a first out of the two eMIMO-Types according to an embodiment of the present disclosure;
FIGURE 5F illustrates an example scheme with two CSI processes, two CSI-RS resources, and Class A as a first out of the two eMIMO-Types according to an embodiment of the present disclosure;
FIGURE 6A illustrates an example scheme with a CSI process, two CSI-RS resources, and Class A as a first out of the two eMIMO-Types according to an embodiment of the present disclosure;
FIGURE 6B illustrates an example scheme with a CSI process, two CSI-RS resources, and Class A as a first out of the two eMIMO-Types according to an embodiment of the present disclosure;
FIGURE 6C illustrates an example scheme with a CSI process, two CSI-RS resources, and Class A as a first out of the two eMIMO-Types according to an embodiment of the present disclosure;
FIGURE 7A illustrates an example of CSI-RS sub-sampling where CSI-RS ports are partitioned into multiple port subsets according to an embodiment of the present disclosure;
FIGURE 7B illustrates an example of CSI-RS sub-sampling where a horizontal and a vertical port subset are used according to an embodiment of the present disclosure;
FIGURE 7C illustrates an example of CSI-RS sub-sampling where a horizontal and a vertical port subset are used according to an embodiment of the present disclosure;
FIGURE 8 illustrates a flowchart for an example method where a UE receives configuration information including a CSI process, a first MIMO Type, and a second MIMO Type according to an embodiment of the present disclosure; and
FIGURE 9 illustrates a flowchart for an example method where a BS configures a UE (labeled as UE-k) with a CSI process, a first MIMO Type, and a second MIMO Type according to an embodiment of the present disclosure.

**[Mode for the Invention]**

FIGURES 1 through 9, discussed below, and the various embodiments used to describe the principles of the present disclosure in this patent document are by way of illustration only and should not be construed in any way to limit the scope of the disclosure. Those skilled in the art will understand that the principles of the present disclosure can be implemented in any suitably arranged wireless communication system.

List of acronyms

- 2D: two-dimensional
- MIMO: multiple-input multiple-output
- SU-MIMO: single-user MIMO
- MU-MIMO: multi-user MIMO
- 3GPP: 3rd generation partnership project
- LTE: long-term evolution
- UE: user equipment
- eNB: evolved Node B or "eNB"
- BS: base station
- DL: downlink
- UL: uplink
- CRS: cell-specific reference signal(s)
- DMRS: demodulation reference signal(s)
- SRS: sounding reference signal(s)
- UE-RS: UE-specific reference signal(s)
- CSI-RS: channel state information reference signals
- SCID: scrambling identity
- MCS: modulation and coding scheme
- RE: resource element
- CQI: channel quality information
- PMI: precoding matrix indicator
- RI: rank indicator
- MU-CQI: multi-user CQI
- CSI: channel state information
- CSI-IM: CSI interference measurement
- CoMP: coordinated multi-point
- DCI: downlink control information
- UCI: uplink control information
- PDSCH: physical downlink shared channel
- PDCCH: physical downlink control channel
- PUSCH: physical uplink shared channel
- PUCCH: physical uplink control channel
- PRB: physical resource block
- RRC: radio resource control
- AoA: angle of arrival
- AoD: angle of departure

The following documents and standards descriptions are hereby incorporated by reference into the present disclosure as if fully set forth herein: 3GPP Technical Specification (TS) 36.211 version 12.4.0, "E-UTRA, Physical channels and modulation" ("REF 1"); 3GPP TS 36.212 version 12.3.0, "E-UTRA, Multiplexing and Channel coding" ("REF 2"); 3GPP TS 36.213 version 12.4.0, "E-UTRA, Physical Layer Procedures" ("REF 3"); 3GPP TS 36.321 version 12.4.0, "E-UTRA, Medium Access Control (MAC) Protocol Specification" ("REF 4"); and 3GPP TS 36.331 version 12.4.0, "E-UTRA, Radio Resource Control (RRC) Protocol Specification" ("REF 5").

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'.

The 5G communication system is considered to be implemented in higher frequency (mmWave) bands, e.g.,

60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid FSK and QAM Modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

FIGURE 1 illustrates an example wireless network 100 according to various embodiments of the present disclosure. The embodiment of the wireless network 100 shown in FIGURE 1 is for illustration only. Other embodiments of the wireless network 100 could be used without departing from the scope of the present disclosure.

The wireless network 100 includes an eNodeB (eNB) 101, an eNB 102, and an eNB 103. The eNB 101 communicates with the eNB 102 and the eNB 103. The eNB 101 also communicates with at least one Internet Protocol (IP) network 130, such as the Internet, a proprietary IP network, or other data network. Instead of "eNB", an alternative term "gNB" (general Node B) can also be used. Depending on the network type, other well-known terms can be used instead of "eNB" or "BS," such as "base station" or "access point." For the sake of convenience, the terms "eNB" and "BS" are used in this patent document to refer to network infrastructure components that provide wireless access to remote terminals. Also, depending on the network type, other well-known terms can be used instead of "user equipment" or "UE," such as "mobile station," "subscriber station," "remote terminal," "wireless terminal," or "user device." For the sake of convenience, the terms "user equipment" and "UE" are used in this patent document to refer to remote wireless equipment that wirelessly accesses an eNB, whether the UE is a mobile device (such as a mobile telephone or smartphone) or is normally considered a stationary device (such as a desktop computer or vending machine).

The eNB 102 provides wireless broadband access to the network 130 for a first plurality of user equipments (UEs) within a coverage area 120 of the eNB 102. The first plurality of UEs includes a UE 111, which can be located in a small business (SB); a UE 112, which can be located in an enterprise (E); a UE 113, which can be located in a WiFi hotspot (HS); a UE 114, which can be located in a first residence (R); a UE 115, which can be located in a second residence (R); and a UE 116, which can be a mobile device (M) like a cell phone, a wireless laptop, a wireless PDA, or the like. The eNB 103 provides wireless broadband access to the network 130 for a second plurality of UEs within a coverage area 125 of the eNB 103. The second plurality of UEs includes the UE 115 and the UE 116. In some embodiments, one or more of the eNBs 101-103 can communicate with each other and with the UEs 111-116 using 5G, LTE, LTE-A, WiMAX, or other advanced wireless communication techniques.

Dotted lines show the approximate extents of the coverage areas 120 and 125, which are shown as approximately circular for the purposes of illustration and explanation only. It should be clearly understood that the coverage areas associated with eNBs, such as the coverage areas 120 and 125, can have other shapes, including irregular shapes, depending upon the configuration of the eNBs and variations in the radio environment associated with natural and man-made obstructions.

As described in more detail below, one or more of eNB 101, eNB 102, and eNB 103 transmit to UEs 111-116 with precoder cycling and configure UEs 111-116 for CSI reporting as described in embodiments of the present disclosure. In various embodiments, one or more of UEs 111-116 perform calculation and reporting for of CSI.

Although FIGURE 1 illustrates one example of a wireless network 100, various changes can be made to FIGURE 1. For example, the wireless network 100 could include any number of eNBs and any number of UEs in any suitable arrangement. Also, the eNB 101 could communicate directly with any number of UEs and provide those UEs with wireless broadband access to the network 130. Similarly, each eNB 102-103 could communicate directly with the network 130 and provide UEs with direct wireless broadband access to the network 130. Further, the eNB 101, 102, and/or 103 could provide access to other or additional external networks, such as external telephone networks or other types of data networks.

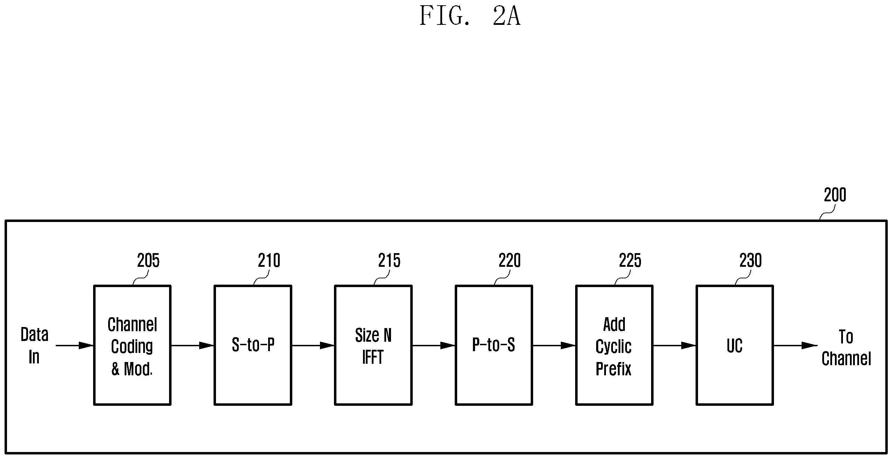

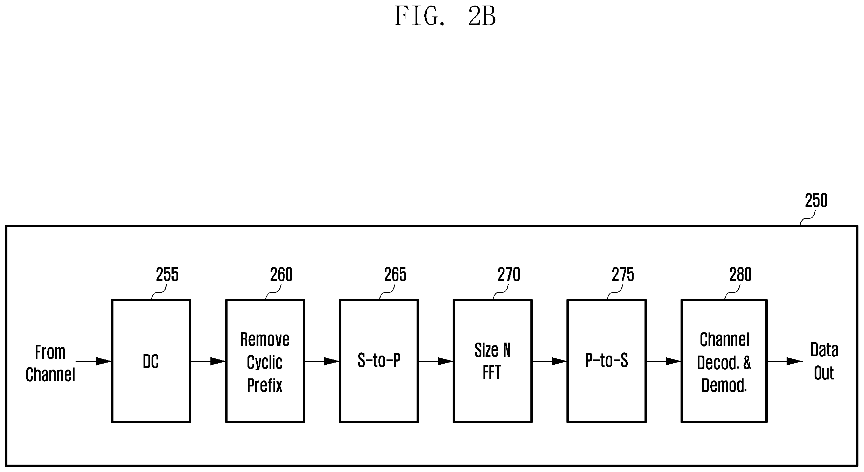

FIGURES 2A and 2B illustrate example wireless transmit and receive paths according to the present disclosure. In the following description, a transmit path 200 can be described as being implemented in an eNB (such as eNB 102), while a receive path 250 can be described as being implemented in a UE (such as UE 116). However, it will be understood that the receive path 250 could be implemented in an eNB and that the transmit path 200 could be implemented in a UE. In some embodiments, the receive path 250 is configured to support channel quality measurement and reporting as described in embodiments of the present disclosure.

The transmit path 200 includes a channel coding and modulation block 205, a serial-to-parallel (S-to-P) block 210, a size N Inverse Fast Fourier Transform (IFFT) block 215, a parallel-to-serial (P-to-S) block 220, an add cyclic prefix block 225, and an up-converter (UC) 230. The receive path 250 includes a down-converter (DC) 255, a remove cyclic prefix block 260, a serial-to-parallel (S-to-P) block 265, a size N Fast Fourier Transform (FFT) block 270, a parallel-to-serial (P-to-S) block 275, and a channel decoding and demodulation block 280.

In the transmit path 200, the channel coding and modulation block 205 receives a set of information bits, applies coding (such as convolutional, Turbo, or low-density parity check (LDPC) coding), and modulates the input bits (such as with Quadrature Phase Shift Keying (QPSK) or Quadrature Amplitude Modulation (QAM)) to generate a sequence of frequency-domain modulation symbols. The serial-to-parallel block 210 converts (such as demultiplexes) the serial modulated symbols to parallel data in order to generate N parallel symbol streams, where N is the IFFT/FFT size used in the eNB 102 and the UE 116. The size N IFFT block 215 performs an IFFT operation on the N parallel symbol streams to generate time-domain output signals. The parallel-to-serial block 220 converts (such as multiplexes) the parallel time-domain output symbols from the size N IFFT block 215 in order to generate a serial time-domain signal. The 'add cyclic prefix' block 225 inserts a cyclic prefix to the time-domain signal. The up-converter 230 modulates (such as up-converts) the output of the 'add cyclic prefix' block 225 to an RF frequency for transmission via a wireless channel. The signal can also be filtered at baseband before conversion to the RF frequency.

A transmitted RF signal from the eNB 102 arrives at the UE 116 after passing through the wireless channel, and reverse operations to those at the eNB 102 are performed at the UE 116. The down-converter 255 down-converts the received signal to a baseband frequency, and the remove cyclic prefix block 260 removes the cyclic prefix to generate a serial time-domain baseband signal. The serial-to-parallel block 265 converts the time-domain baseband signal to parallel time domain signals. The size N FFT block 270 performs an FFT algorithm to generate N parallel frequency-domain signals. The parallel-to-serial block 275 converts the parallel frequency-domain signals to a sequence of modulated data symbols. The channel decoding and demodulation block 280 demodulates and decodes the modulated symbols to recover the original input data stream.

As described in more detail below, the transmit path 200 or the receive path 250 can perform signaling for CSI reporting. Each of the eNBs 101-103 can implement a transmit path 200 that is analogous to transmitting in the downlink to UEs 111-116 and can implement a receive path 250 that is analogous to receiving in the uplink from UEs 111-116. Similarly, each of UEs 111-116 can implement a transmit path 200 for transmitting in the uplink to eNBs 101-103 and can implement a receive path 250 for receiving in the downlink from eNBs 101-103.

Each of the components in FIGURES 2A and 2B can be implemented using only hardware or using a combination of hardware and software/firmware. As a particular example, at least some of the components in FIGURES 2A and 2B can be implemented in software, while other components can be implemented by configurable hardware or a mixture of software and configurable hardware. For instance, the FFT block 270 and the IFFT block 215 can be implemented as configurable software algorithms, where the value of size N can be modified according to the implementation.

Furthermore, although described as using FFT and IFFT, this is by way of illustration only and should not be construed to limit the scope of the present disclosure. Other types of transforms, such as Discrete Fourier Transform (DFT) and Inverse Discrete Fourier Transform (IDFT) functions, could be used. It will be appreciated that the value of the variable N can be any integer number (such as 1, 2, 3, 4, or the like) for DFT and IDFT functions, while the value of the variable N can be any integer number that is a power of two (such as 1, 2, 4, 8, 16, or the like) for FFT and IFFT functions.

Although FIGURES 2A and 2B illustrate examples of wireless transmit and receive paths, various changes can be made to FIGURES 2A and 2B. For example, various components in FIGURES 2A and 2B could be combined, further subdivided, or omitted and additional components could be added according to particular needs. Also, FIGURES 2A and 2B are meant to illustrate examples of the types of transmit and receive paths that could be used in a wireless network. Other suitable architectures could be used to support wireless communications in a wireless network.

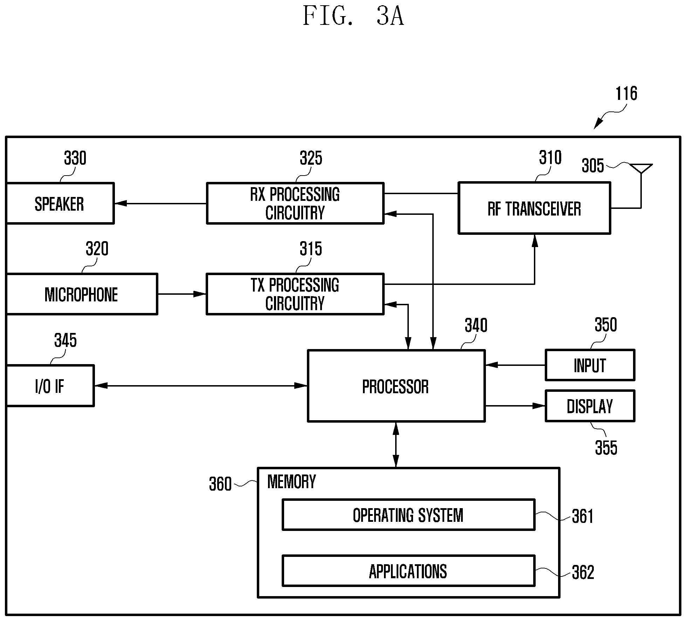

FIGURE 3A illustrates an example UE 116 according to the present disclosure. The embodiment of the UE 116 illustrated in FIGURE 3A is for illustration only, and the UEs 111-115 of FIGURE 1 could have the same or similar configuration. However, UEs come in a wide variety of configurations, and FIGURE 3A does not limit the scope of the present disclosure to any particular implementation of a UE.

The UE 116 includes an antenna 305, a radio frequency (RF) transceiver 310, transmit (TX) processing circuitry 315, a microphone 320, and receive (RX) processing circuitry 325. The UE 116 also includes a speaker 330, a processor 340, an input/output (I/O) interface (IF) 345, an input 350, a display 355, and a memory 360. The memory 360 includes an operating system (OS) program 361 and one or more applications 362.

The RF transceiver 310 receives, from the antenna 305, an incoming RF signal transmitted by an eNB of the network 100. The RF transceiver 310 down-converts the incoming RF signal to generate an intermediate frequency (IF) or baseband signal. The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the processor 340 for further processing (such as for web browsing data).

The TX processing circuitry 315 receives analog or digital voice data from the microphone 320 or other outgoing baseband data (such as web data, e-mail, or interactive video game data) from the processor 340. The TX processing circuitry 315 encodes, multiplexes, and/or digitizes the outgoing baseband data to generate a processed baseband or IF

---

signal. The RF transceiver 310 receives the outgoing processed baseband or IF signal from the TX processing circuitry 315 and up-converts the baseband or IF signal to an RF signal that is transmitted via the antenna 305.

The processor 340 can include one or more processors or other processing devices and execute the OS program 361 stored in the memory 360 in order to control the overall operation of the UE 116. For example, processor 340 could control the reception of forward channel signals and the transmission of reverse channel signals by the RF transceiver 310, the RX processing circuitry 325, and the TX processing circuitry 315 in accordance with well-known principles. In some embodiments, the processor 340 includes at least one microprocessor or microcontroller.

The processor 340 is also capable of executing other processes and programs resident in the memory 360, such as operations for CQI measurement and reporting for systems described in embodiments of the present disclosure as described in embodiments of the present disclosure. The processor 340 can move data into or out of the memory 360 as required by an executing process. In some embodiments, the processor 340 is configured to execute the applications 362 based on the OS program 361 or in response to signals received from eNBs or an operator. The processor 340 is also coupled to the I/O interface 345, which provides the UE 116 with the ability to connect to other devices such as laptop computers and handheld computers. The I/O interface 345 is the communication path between these accessories and the processor 340.

The processor 340 is also coupled to the input 350 (e.g., keypad, touchscreen, button etc.) and the display 355. The operator of the UE 116 can use the input 350 to enter data into the UE 116. The display 355 can be a liquid crystal display or other display capable of rendering text and/or at least limited graphics, such as from web sites.

The memory 360 is coupled to the processor 340. Part of the memory 360 could include a random access memory (RAM), and another part of the memory 360 could include a Flash memory or other read-only memory (ROM).

As described in more detail below, the UE 116 can perform signaling and calculation for CSI reporting. Although FIGURE 3A illustrates one example of UE 116, various changes can be made to FIGURE 3A. For example, various components in FIGURE 3A could be combined, further subdivided, or omitted and additional components could be added according to particular needs. As a particular example, the processor 340 could be divided into multiple processors, such as one or more central processing units (CPUs) and one or more graphics processing units (GPUs). Also, while FIGURE 3A illustrates the UE 116 configured as a mobile telephone or smartphone, UEs could be configured to operate as other types of mobile or stationary devices.

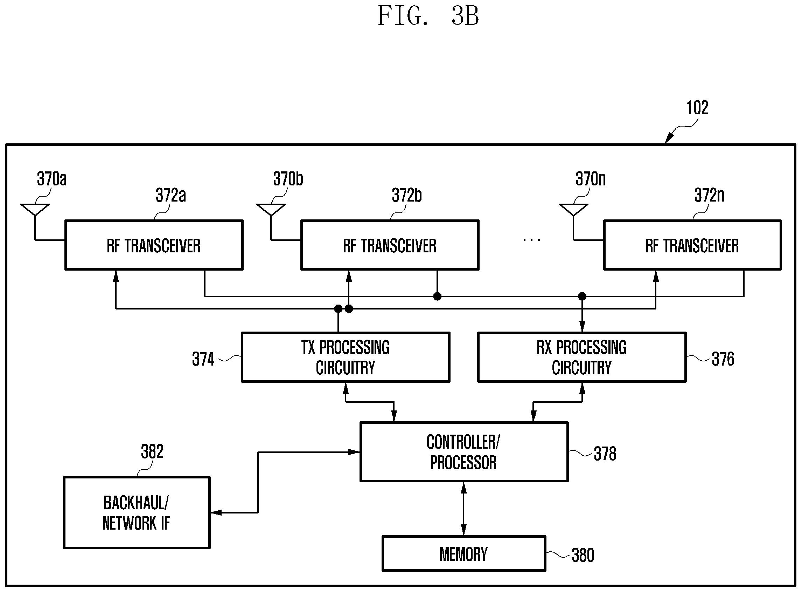

FIGURE 3B illustrates an example eNB 102 according to the present disclosure. The embodiment of the eNB 102 shown in FIGURE 3B is for illustration only, and other eNBs of FIGURE 1 could have the same or similar configuration. However, eNBs come in a wide variety of configurations, and FIGURE 3B does not limit the scope of the present disclosure to any particular implementation of an eNB. eNB 101 and eNB 103 can include the same or similar structure as eNB 102.

As shown in FIGURE 3B, the eNB 102 includes multiple antennas 370a-370n, multiple RF transceivers 372a-372n, transmit (TX) processing circuitry 374, and receive (RX) processing circuitry 376. In certain embodiments, one or more of the multiple antennas 370a-370n include 2D antenna arrays. The eNB 102 also includes a controller/-processor 378, a memory 380, and a backhaul or network interface 382.

The RF transceivers 372a-372n receive, from the antennas 370a-370n, incoming RF signals, such as signals transmitted by UEs or other eNBs. The RF transceivers 372a-372n down-convert the incoming RF signals to generate IF or baseband signals. The IF or baseband signals are sent to the RX processing circuitry 376, which generates processed baseband signals by filtering, decoding, and/or digitizing the baseband or IF signals. The RX processing circuitry 376 transmits the processed baseband signals to the controller/ processor 378 for further processing.

The TX processing circuitry 374 receives analog or digital data (such as voice data, web data, e-mail, or interactive video game data) from the controller/processor 378. The TX processing circuitry 374 encodes, multiplexes, and/or digitizes the outgoing baseband data to generate processed baseband or IF signals. The RF transceivers 372a-372n receive the outgoing processed baseband or IF signals from the TX processing circuitry 374 and up-converts the baseband or IF signals to RF signals that are transmitted via the antennas 370a-370n.

The controller/processor 378 can include one or more processors or other processing devices that control the overall operation of the eNB 102. For example, the controller/processor 378 could control the reception of forward channel signals and the transmission of reverse channel signals by the RF transceivers 372a-372n, the RX processing circuitry 376, and the TX processing circuitry 374 in accordance with well-known principles. The controller/processor 378 could support additional functions as well, such as more advanced wireless communication functions. In some embodiments, the controller/ processor 378 includes at least one microprocessor or microcontroller.

The controller/processor 378 is also capable of executing programs and other processes resident in the memory 380, such as an OS. The controller/processor 378 is also capable of supporting channel quality measurement and reporting for systems having 2D antenna arrays as described in embodiments of the present disclosure. In some embodiments, the controller/processor 378 supports communications between entities, such as web RTC. The controller/processor 378 can move data into or out of the memory 380 as required by an executing process.

The controller/processor 378 is also coupled to the backhaul or network interface 382. The backhaul or network interface 382 allows the eNB 102 to communicate with other devices or systems over a backhaul connection or over a network. The interface 382 could support communications over any suitable wired or wireless connection(s). For example, when the eNB 102 is implemented as part of a cellular communication system (such as one supporting 5G or new radio access technology or NR, LTE, or LTE-A), the interface 382 could allow the eNB 102 to communicate with other eNBs over a wired or wireless backhaul connection. When the eNB 102 is implemented as an access point, the interface 382 could allow the eNB 102 to communicate over a wired or wireless local area network or over a wired or wireless connection to a larger network (such as the Internet). The interface 382 includes any suitable structure supporting communications over a wired or wireless connection, such as an Ethernet or RF transceiver.

The memory 380 is coupled to the controller/processor 378. Part of the memory 380 could include a RAM, and another part of the memory 380 could include a Flash memory or other ROM. In certain embodiments, a plurality of instructions, such as a BIS algorithm is stored in memory. The plurality of instructions are configured to cause the controller/processor 378 to perform the BIS process and to decode a received signal after subtracting out at least one interfering signal determined by the BIS algorithm.

As described in more detail below, the transmit and receive paths of the eNB 102 (implemented using the RF transceivers 372a-372n, TX processing circuitry 374, and/or RX processing circuitry 376) perform configuration and signaling for CSI reporting.

Although FIGURE 3B illustrates one example of an eNB 102, various changes can be made to FIGURE 3B. For example, the eNB 102 could include any number of each component shown in FIGURE 3A. As a particular example, an access point could include a number of interfaces 382, and the controller/processor 378 could support routing functions to route data between different network addresses. As another particular example, while shown as including a single instance of TX processing circuitry 374 and a single instance of RX processing circuitry 376, the eNB 102 could include multiple instances of each (such as one per RF transceiver).

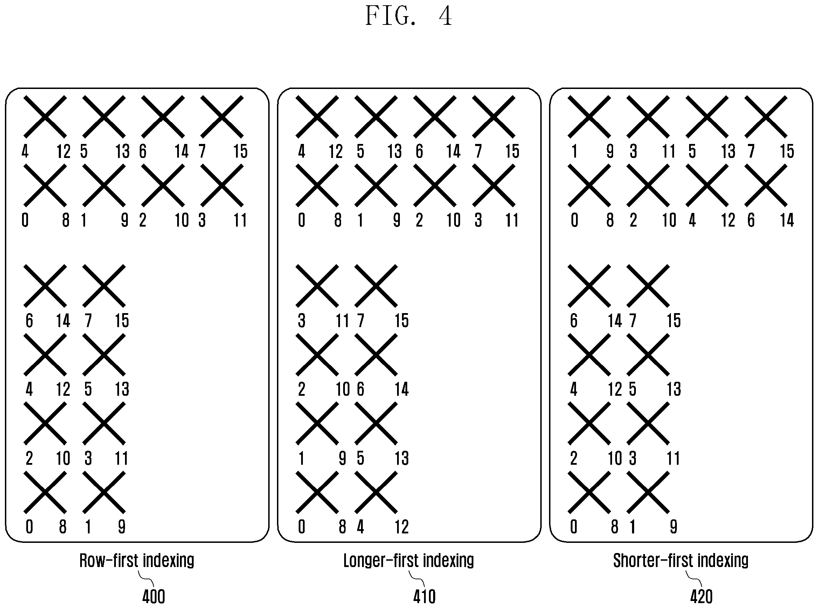

FIGURE 4 illustrates example two-dimensional (2D) antenna arrays constructed from 16 dual-polarized elements arranged in a $4 \times 2$ or $2 \times 4$ rectangular format which can be utilized in various embodiments of the present disclosure. In this illustrative embodiment, the 2D dual-polarized antenna port array includes $M_a$ rows and $N_a$ columns where $(M_a, N_a) = (2,4)$ and $(4,2)$. The embodiment of the 2D dual-polarized antenna port array shown in FIGURE 4 is for illustration only. Other embodiments of the 2D dual-polarized antenna port array could be used without departing from the scope of the present disclosure.

The example 2D dual-polarized antenna port array arrangement results in a total of $2 M_a N_a = 16$ ports, each mapped to one CSI-RS port. The three indices 400, 410, and 420 are three examples in indexing the 16 antenna ports as a means of mapping antenna ports to precoding matrix elements. For row-first indexing 400, antenna ports associated with the same polarization group are indexed in a row-first manner regardless of $(M_a, N_a)$. For longer-first indexing 410, antenna ports associated with the same polarization group are indexed in a column-first manner when $M_a > N_a$, but row-first manner when $M_a \leq N_a$. For shorter-first indexing 420, antenna ports associated with the same polarization group are indexed in a row-first manner when $M_a > N_a$, but column-first manner when $M_a \leq N_a$. Indexing 400 is therefore termed row-first indexing while indexing 410 longer-first indexing and indexing 420 shorter-first indexing.

In these illustrative embodiments, both $M_a$ and $N_a$ can be configured by an eNB for a UE. In another example, rather than defining $M_a$ and $N_a$ as the number of rows and columns of the rectangular array of ports or port pattern, respectively, these two parameters can be defined as two-dimensional precoding codebook parameters. The values of $M_a$ and $N_a$ partly determine the manner in which a codebook (hence each precoding matrix element in the codebook) is mapped onto antenna ports of a one- or two-dimensional antenna array. This configuration can be performed with and without signaling the total number of antenna ports. When a UE is configured with a codebook, these parameters can be included either in a corresponding CSI process configuration or NZP (non-zero-power) CSI-RS resource configuration.

In LTE systems, precoding codebooks are utilized for CSI reporting. Two categories of CSI reporting modes are supported: PUSCH-based aperiodic CSI (A-CSI) and PUCCH-based periodic CSI (P-CSI). In each category, different modes are defined based on frequency selectivity of CQI and/or PMI, that is, whether wideband (one CSI parameter calculated for the "set S subbands") or subband (one CSI parameter calculated for each "set S subband") reporting is performed. The supported CSI reporting modes are given in TABLE 1 and 2.

[Table 1]

| CQI and PMI Feedback Types for PUSCH (Aperiodic) CSI Reporting Modes | | | | |
|---|---|---|---|---|
| ▪ | | **PMI Feedback Type** | | |
| ▪ | | **No PMI** | **Single PMI** | **Multiple PMI** |
| | Wideband (wideband CQI) | | | Mode 1-2 |
| ▪ PUSCH CQI Feedback | UE Selected (subband CQI) | Mode 2-0 | | Mode 2-2 |
| **Type** | Higher Layer-configured (<u>subband</u> CQI) | Mode 3-0 | Mode 3-1 | Mode 3-2 |

[Table 2]

| CQI and PMI Feedback Types for PUCCH (Periodic) CSI Reporting Modes | | | |
|---|---|---|---|
| ▪ | | **PMI Feedback Type** | |
| ▪ | | **No PMI** | **Single PMI** |
| **.PUCCH CQI Feedback Type** | **Wideband (wideband CQI)** | Mode 1-0 | Mode 1-1 |
| | **UE Selected (subband CQI)** | Mode 2-0 | Mode 2-1 |

In Rel.12 LTE, dual-stage precoding codebook enumerated with a first and a second PMI values ($i_1$ and $i_2$, respectively) are supported for 4 and 8 antenna ports. The first PMI value $i_1$ is associated with a group of four DFT beams/precoders. The second PMI value $i_2$, on the other hand, selects one out of four beams/precoders indicated with $i_1$, along with QPSK co-phasing between two polarization groups.

In Rel.13 LTE, a flexible codebook structure which accommodates 2D CSI-RS port patterns is supported for 'CLASS A' eMIMO-Type with 8, 12, and 16 antenna ports, where not only ($N_1$, $N_2$) are configurable, but also oversampling factors for both dimensions ($O_1$, $O_2$) and four types of codebook subset selections configured via RRC parameter codebook-Config. In addition, a single-stage beam selection codebook for 2, 4, or 8 antenna ports is also supported for 'CLASS B' eMIMO-Type.

Based on the above codebook, a resulting precoding matrix can be described in Equation 1. That is, the first stage precoder can be described as a Kronecker product of a first and a second precoding vector (or matrix), which can be associated with a first and a second dimension, respectively. This type is termed partial Kronecker Product (partial KP) codebook. The subscripts $m$ and $n$ in $W_{m,n}(i_{m,n})$ denote precoding stage (first or second stage) and dimension (first or second dimension), respectively. Each of the precoding matrices $W_{m,n}$ can be described as a function of an index which serves as a PMI component. As a result, the precoding matrix $W$ can be described as a function of 3 PMI components $i_{1,1}$, $i_{1,2}, i_2$. The first stage pertains to a long-term component. Therefore, the first stage is associated with long-term channel statistics such as angle-of-departure (AoD) profile and AoD spread. On the other hand, the second stage pertains to a short-term component which performs selection, co-phasing, or any linear operation to the first component precoder $W_{1,1}(i_{1,1}) \otimes W_{1,2}(i_{1,2})$. In the present disclosure, $A \otimes B$ denotes the Kronecker product between two matrices $A$ and $B$. The precoder $W_2(i_2)$, therefore, performs a linear transformation of the long-term component such as a linear combination of a set of basis functions or vectors associated with the column vectors of $W_{1,1}(i_{1,1}) \otimes W_{1,2}(i_{1,2})$

$$W(i_{1,1}, i_{1,2}, i_2) = \frac{(W_{1,1}(i_{1,1}) \otimes W_{1,2}(i_{1,2})) W_2(i_2)}{W_1(i_{1,1}, i_{1,2})} \qquad \text{(Equation 1)}$$

Here, a UE measures a CSI-RS in a subframe designated to carry CSI-RS, calculates a CSI (including PMI, RI, and CQI where each of these three CSI parameters can include multiple components) based on the measurement, and reports the calculated CSI to a serving eNB 102.

The above precoding description is especially suitable when the serving eNB transmits non-precoded CSI-RS (NP CSI-RS). That is, a cell-specific one-to-one mapping between CSI-RS port and TXRU (transceiver unit) is utilized. Here, different CSI-RS ports have the same wide beam width and direction and hence generally cell wide coverage. This use case can be realized when the eNB configures the UE with 'CLASS A' eMIMO-Type which corresponds to NP CSI-RS. Other than CQI and RI, CSI reports associated with 'CLASS A' or 'nonPrecoded' eMIMO-Type include (assuming the partial KP design inherent in the Rel.13 codebook described above) a three-component PMI $\{i_{1,1}, i_{1,2}, i_2\}$.

Another type of CSI-RS applicable to FD-MIMO is beamformed CSI-RS (BF CSI-RS). For example, beamforming operation, either cell-specific or UE-specific, is applied on a non-zero-power (NZP) CSI-RS resource (including multiple ports). Here, at least at a given time/frequency CSI-RS ports have narrow beam widths and hence not cell wide coverage, and (at least from the eNB perspective) at least some CSI-RS port-resource combinations have different beam directions. This beamforming operation is intended to increase CSI-RS coverage or penetration. In addition, when UE-specific beamforming is applied to a CSI-RS resource (termed the UE-specific or UE-specifically beamformed CSI-RS), CSI-RS overhead reduction can be obtained when NZP CSI-RS resources are allocated efficiently through resource sharing (pooling) for multiple UEs either in time domain (for instance, aperiodic transmission), beam domain (UE-specific beamforming), or dynamic CSI-RS resource (re)configuration. When a UE is configured to receive BF CSI-RS from a serving eNB, the UE can be configured to report PMI parameters associated with $W_2$ ($W_{2,1}$ and/or $W_{2,2}$) without $W_1$ ($W_{1,1}$ and/or $W_{1,2}$) or, in general, associated with a single-stage precoder/codebook. This use case can be realized when the eNB configures the UE with 'CLASS B' eMIMO-Type which corresponds to BF CSI-RS. Other than CQI and RI, CSI reports associated with 'CLASS B' or 'beamformed' eMIMO-Type (with one CSI-RS resource and alternative codebook) include a one-component PMI $n$. Although a single PMI defined with respect to a distinct codebook, this PMI can be associated with the second-stage PMI component of 'CLASS A'/'nonPrecoded' codebooks $i_2$.

Therefore, given a precoding codebook (a set of precoding matrices $W(i_{1,1}, i_{1,2}, i_2)$, a UE measures a CSI-RS in a subframe designated to carry CSI-RS, calculates/determines a CSI (including PMI, RI, and CQI where each of these three CSI parameters can include multiple components) based on the measurement, and reports the calculated CSI to a serving eNB. In particular, this PMI is an index of a recommended precoding matrix in the precoding codebook. Similar to that for the first type, different precoding codebooks can be used for different values of RI. The measured CSI-RS can be one of the two types: non-precoded (NP) CSI-RS and beamformed (BF) CSI-RS. As mentioned, in Rel.13, the support of these two types of CSI-RS is given in terms of two *eMIMO-Types*: 'CLASS A' (with one CSI-RS resource) and 'CLASS B' (with one or a plurality of CSI-RS resources),, respectively.

In scenarios where DL long-term channel statistics can be measured through UL signals at a serving eNB, UE-specific BF CSI-RS can be readily used. This is typically feasible when UL-DL duplex distance is sufficiently small. When this condition does not hold, however, some UE feedback is used for the eNB to obtain an estimate of DL long-term channel statistics (or any of its representation thereof). To facilitate such a procedure, a first BF CSI-RS transmitted with periodicity T1 (ms) and a second NP CSI-RS transmitted with periodicity T2 (ms), where T1 ≤ T2. This approach is termed hybrid CSI-RS. The implementation of hybrid CSI-RS is largely dependent on the definition of CSI process and NZP CSI-RS resource.

Efficient allocation of CSI-RS resources not only increases throughput for the desired cell, but also reduces inter-cell interference. To harness their full potential, CSI-RS resource allocation schemes such as hybrid CSI-RS can be used together with a supporting CSI calculation and reporting schemes.

Therefore, there is a need to introduce a CSI calculation and reporting procedure specifically designed when a UE is configured with two eMIMO-Types or CSI-RS types, including but not limited to hybrid CSI-RS.

Terms such as 'non-precoded' (or 'NP') CSI-RS and 'beamformed' (or 'BF') CSI-RS are used throughout the present disclosure. The essence of the present disclosure does not change when different terms or names are used to refer to these two CSI-RS types. For example, 'CSI-RS-A' and 'CSI-RS-B' can refer to or be associated with these two CSI-RS types. Essentially these two CSI-RS types are a first CSI-RS and a second CSI-RS. In another example, CSI-RS resource type can be used to differentiate those two modes of operation instead of CSI-RS type. CSI-RS resources associated with these two types of CSI-RS can be referred to as 'a first CSI-RS resource' and 'a second CSI-RS resource', or 'CSI-RS-A resource' and 'CSI-RS-B resource'. Subsequently, the labels 'NP' and 'BF' (or 'np' and 'bf') are examples and can be substituted with other labels such as '1' and '2', or 'A' and 'B', or TYPE1 and TYPE2, or CLASS-A and CLASS-B. In another example, a MIMO type or eMIMO-Type which can be associated with CSI reporting operation can be used to differentiate those two modes of operation instead of CSI-RS type. For example, a UE is configured with a MIMO type or eMIMO-Type associated with CSI reporting behaviors and, in addition, CSI measurement behaviors. Names of higher-layer or RRC parameters utilized in this invention disclosure are example and illustrative. Other names which serve same functionalities can be utilized.

Throughout this invention, 1D or 2D dual-polarized array is used solely for illustrative purposes, unless stated otherwise. Extensions to 1D or 2D single-polarized array are straightforward for those skilled in the art.

For the above purposes, the present disclosure includes CSI reporting schemes when a UE is configured with two eMIMO-Type settings where each setting is configured with at least one CSI-RS resource (or CSI-RS resource configuration), where different CSI-RS resources (or resource configurations) can be assigned different number of ports. It also includes configurations and signaling to support the disclosed CSI reporting schemes.

For the above purposes, the present disclosure includes at least two components. The first component pertains to CSI reporting schemes. The second component pertains to codebook used for CSI reporting.

The first component of the present disclosure includes six embodiments. The embodiments in the present disclosure are described assuming that a UE is configured with two *eMIMO-Type* settings where each setting can be associated with one or a plurality of CSI-RS resources (or CSI-RS resource configurations). Each *eMIMO-Type* is signaled to the UE via higher-layer (RRC) signaling. Examples of *eMIMO-Type,* as previously described, are 'CLASS A' ('non-Precoded'), 'CLASS B' ('beamformed') with one or more than one CSI-RS resources (or CSI-RS resource configurations), or a new type such as 'CLASS B-2' or 'CLASS C'. In subsequent descriptions, CQI and PMI components ($i_1, i_{1,1}, i_{1,2}$, and/or $i_2$) are calculated conditioned on the last reported RI or the RI reported together with CQI and/or PMI. In some UE implementations, the CSI parameters can be calculated interdependently or jointly. That is, RI is chosen conditioned on hypothetical values of CQI and/or PMI. In this manner, a CSI parameter is calculated conditioned on the other CSI parameters.

In a first embodiment, a first CSI-RS resource (or CSI-RS resource configuration) is associated with *eMIMO-Type* of 'CLASS A' ('nonPrecoded') and a second CSI-RS resource (or CSI-RS resource configuration) is associated with *eMIMO-Type* of 'CLASS B' ('beamformed'). In this case, 'CLASS B' ('beamformed') is associated with one CSI-RS resource. The number of CSI-RS ports for the first 'CLASS A' CSI-RS resource $P_1$ can be different from that for the second 'CLASS B' CSI-RS resources $P_2$ where $P_1 \geq P_2$. At least two sub-embodiments of this embodiment are possible for periodic CSI (P-CSI) reporting.

For the schemes described in this embodiment, PMI $i_1$ denotes the PMI associated with the first index of a 'CLASS A' ('nonPrecoded') codebook. Depending on the codebook configuration, this first index $i_1$ can include one component or two components $\{i_{1,1}, i_{1,2}\}$. The other PMI $i_2$ can denote either the index of a codebook different from the 'CLASS A' ('nonPrecoded') codebook or the second index of a 'CLASS A' ('nonPrecoded') codebook.

When the first index $i_1$ can include one component or two components $\{i_{1,1}, i_{1,2}\}$, an alternative embodiment is possible where the first CSI-RS resource includes two components, for the two dimensions, one to calculate $i_{1,1}$ and the other to calculate $i_{1,2}$. They can be reported jointly or separately. In this case, one joint two-PMI codebook or two separate one-PMI codebook can be used for PMI calculation.

A first sub-embodiment is to associate both a first CSI-RS resource (or CSI-RS resource configuration) and a second CSI-RS resource (or CSI-RS resource configuration) with a single CSI process. Therefore, CSI reports and calculations associated with the two CSI-RS resources (or CSI-RS resource configurations) can be either dependent on or independent of each other -that is, the two CSI reports are associated with one CSI reporting configuration. In the present disclosure, four example schemes (schemes 1, 2, 3, and 4) are described below.

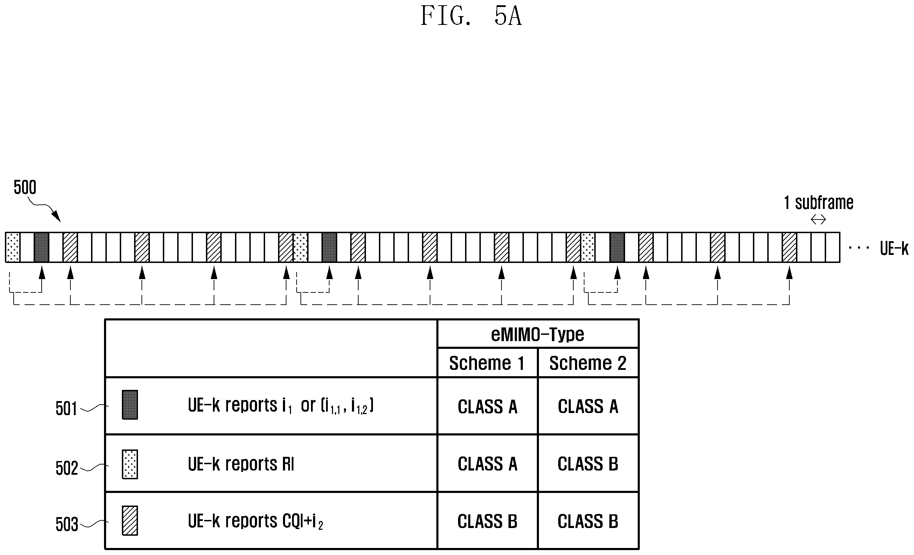

Schemes 1 and 2 are illustrated in UE timing diagram 500 (where one unit of reporting instances in this description is one subframe) of FIGURE 5A. For illustrative purposes, the periodicity of RI and $i_1$ are assumed to be four times of CQI+$i_2$. For these two schemes, three reporting instances are used to report $i_1$ (501), RI (502), and CQI+$i_2$ (503), respectively. In this description, the UE calculates $i_1$, CQI, and $i_2$ conditioned on the last reported periodic RI. In both schemes, the calculation and reporting of $i_1$ are associated with 'CLASS A' ('nonPrecoded') eMIMO-Type whereas the calculation and reporting of CQI+ $i_2$ are associated with 'CLASS B' ('nonPrecoded') eMIMO-Type.

For scheme 1, the calculation and reporting of RI are associated with 'CLASS A' ('nonPrecoded') eMIMO-Type. Therefore, the UE calculates $i_1$ and RI by measuring the same CSI-RS resource associated with the first CSI-RS resource configuration. For scheme 2, the calculation and reporting of RI are associated with 'CLASS B' ('beamformed') eMIMO-Type. Therefore, the UE calculates RI and CQI+$i_2$ by measuring the CSI-RS resource associated with the second CSI-RS resource configuration. For both schemes, $i_1$ can be conditioned upon the last reported periodic RI.

In the example illustration of FIGURE 5A, the calculation and/or reporting of $i_1$ and CQI+$i_2$ are conditioned upon the same last reported periodic RI. Depending on the RI reporting configuration (periodicity and subframe offset), the last reported periodic RI for the subframe containing $i_1$ report can be different from that for CQI+$i_2$. This can happen, for example, when a periodic RI report occurs between an $i_1$ report and a CQI+$i_2$ report. In such cases, two alternatives exist. A first alternative is to introduce a rule to ensure that the calculation of the last reported $i_1$ and CQI+$i_2$ are conditioned on the same RI report (and hence same value of RI). An example of this rule is as follows: both $i_1$ (the first PMI value) and CQI+$i_2$ (CQI and the second PMI value or the single PMI value) are calculated conditioned on the last reported periodic RI prior to both the $i_1$ report and the CQI+$i_2$ report. A second alternative is to allow the RI report used to condition the calculation of the last reported $i_1$ to be different from the RI report used to condition the calculation of the last reported CQI+$i_2$. In this case, an example rule can be stated as follows: $i_1$ (the first PMI value) is calculated conditioned on the last reported periodic RI prior to the $i_1$ report and CQI+$i_2$ (CQI and the second PMI value or the single PMI value) is calculated conditioned on the last reported periodic RI prior to the CQI+$i_2$ report.

For the above schemes, 'CLASS A' ('nonPrecoded') eMIMO-Type is used for the first CSI-RS resource (or CSI-RS resource configuration). In this case, another RRC parameter related to 'CLASS A' ('nonPrecoded') eMIMO-Type can be introduced (for example, i1onlyCSI-nonPrecoded). For scheme 1, this parameter can indicate whether the UE reports RI, $i_1$, CQI+$i_2$ (three reports in separate subframes for Rel. 13 legacy 'CLASS A' CSI reporting) or only RI+$i_1$. For scheme 2, this parameter can indicate whether the UE reports CQI+RI+$i_1$+$i_2$ (Rel.13 legacy 'CLASS A' CSI reporting) or only $i_1$.

For scheme 1, another RRC parameter related to 'CLASS B' ('beamformed') eMIMO-Type can be introduced (for example, RIdisabled-beamformed) to disable RI reporting and use the last reported periodic RI from the other CSI-RS resource configuration or eMIMO-Type. Alternatively, a standalone RRC parameter which can be used for any eMIMO-Type (for example, RIdisabled) can be introduced.

Alternatively, instead of using 'CLASS A' ('nonPrecoded') eMIMO-Type, another eMIMO-Type such as 'CLASS A-2' or 'CLASS C' with RI+ $i_1$-only reporting for scheme 1 or $i_1$-only reporting for scheme 2 can be defined and used.

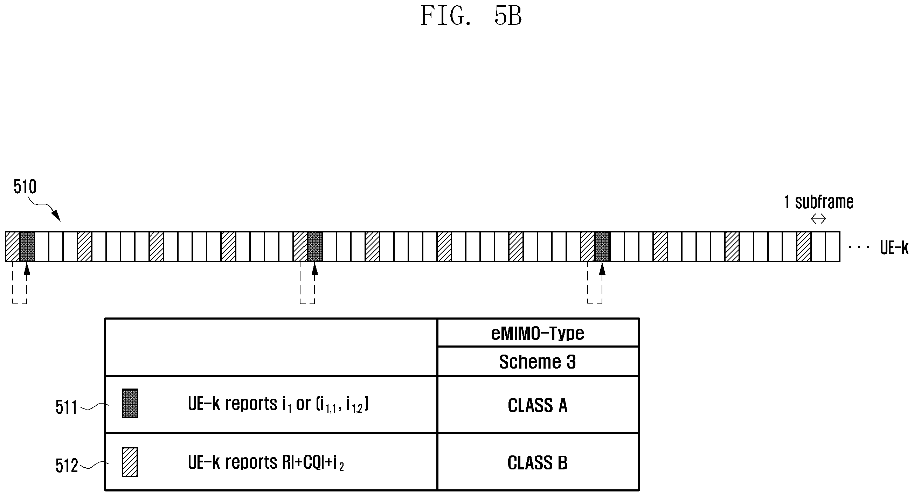

Scheme 3 is illustrated in UE timing diagram 510 (where one unit of reporting instances in this description is one subframe) of FIGURE 5B. For illustrative purposes, the periodicity of $i_1$ is assumed to be four times of RI+CQI+ $i_2$. For this scheme, two reporting instances are used to report $i_1$ (511) and RI+CQI+ $i_2$ (512), respectively. In this case, RI is reported together with, and hence is configured with the same periodicity and subframe offset as CQI (and the second PMI $i_2$). In this description, the UE calculates $i_1$, CQI, and $i_2$ conditioned on the last reported periodic RI. Therefore, for a subframe of 701 where the UE reports $i_1$, the last reported periodic RI is included in the most recent subframe of 702 where RI+CQI+ $i_2$ is reported. In this scheme, the calculation and reporting of $i_1$ are associated with 'CLASS A' ('nonPrecoded') eMIMO-Type whereas the calculation and reporting of RI, CQI, $i_2$ are associated with 'CLASS B' ('nonPrecoded') eMIMO-Type.

For scheme 3, the UE calculates $i_1$ (the first PMI value) by measuring the CSI-RS resource associated with the first CSI-RS resource configuration (corresponding to 'CLASS A'/'nonPrecoded' eMIMO-Type). The UE calculates RI and

CQI+$i_2$ by measuring the CSI-RS resource associated with the second CSI-RS resource configuration (corresponding to 'CLASS B'/'beamformed' eMIMO-Type).

Similar to schemes 1 and 2, for scheme 3, 'CLASS A' ('nonPrecoded') eMIMO-Type is used for the first CSI-RS resource (or CSI-RS resource configuration). In this case, another RRC parameter related to 'CLASS A' ('nonPrecoded') eMIMO-Type can be introduced (for example, i 1onlyCSI-nonPrecoded). This parameter can indicate whether the UE reports RI, $i_1$, CQI+$i_2$ (three reports in separate subframes for Rel. 13 legacy 'CLASS A' CSI reporting) or only $i_1$.

Alternatively, instead of using 'CLASS A' ('nonPrecoded') eMIMO-Type, another eMIMO-Type such as 'CLASS A-2' or 'CLASS C' with $i_1$-only reporting can be defined and used.

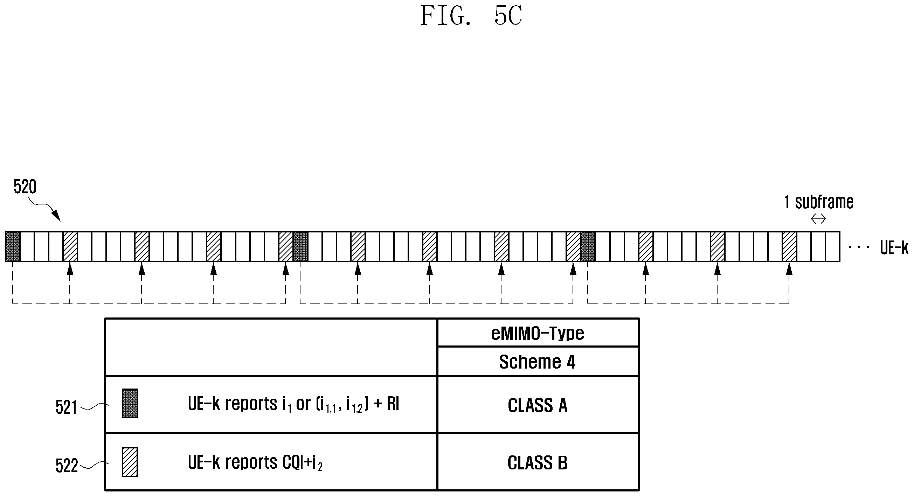

Scheme 4 is illustrated in UE timing diagram 520 (where one unit of reporting instances in this description is one subframe) of FIGURE 5C. For illustrative purposes, the periodicity of RI+$i_1$ is assumed to be four times of CQI+$i_2$. For this scheme, two reporting instances are used to report RI+$i_1$ (521) and CQI+$i_2$ (522), respectively. In this case, RI is reported together with, and hence is configured with the same periodicity and subframe offset as $i_1$ (the first PMI value). In this description, the UE calculates $i_{1, 1}$, CQI, and $i_2$ conditioned on the last reported periodic RI which is reported together with the first PMI value $i_1$. In this scheme, the calculation and reporting of $i_1$ and RI are associated with 'CLASS A' ('nonPrecoded') eMIMO-Type whereas the calculation and reporting of CQI and $i_2$ are associated with 'CLASS B' ('nonPrecoded') eMIMO-Type. Therefore, CQI and $i_2$, which are associated with 'CLASS B' ('beamformed') eMIMO-Type, are calculated conditioned on the last reported periodic RI which is associated with 'CLASS A' ('nonPrecoded') eMIMO-Type within a same CSI process.

For scheme 4, the UE calculates $i_1$ (the first PMI value) and RI by measuring the CSI-RS resource associated with the first CSI-RS resource configuration (corresponding to 'CLASS A'/'nonPrecoded' eMIMO-Type). The UE calculates CQI+$i_2$ by measuring the CSI-RS resource associated with the second CSI-RS resource configuration (corresponding to 'CLASS B'/'beamformed' eMIMO-Type).

Similar to schemes 1 and 2, for scheme 4, 'CLASS A' ('nonPrecoded') eMIMO-Type is used for the first CSI-RS resource (or CSI-RS resource configuration). In this case, another RRC parameter related to 'CLASS A' ('nonPrecoded') eMIMO-Type can be introduced (for example, i1onlyCSI-nonPrecoded). This parameter can indicate whether the UE reports RI, $i_1$, CQI+$i_2$ (three reports in separate subframes for Rel. 13 legacy 'CLASS A' CSI reporting) or only RI+$i_1$.

In addition, another RRC parameter related to 'CLASS B' ('beamformed') eMIMO-Type can be introduced (for example, RIdisabled-beamformed) to disable RI reporting and use the last reported periodic RI from the other CSI-RS resource configuration or eMIMO-Type. Alternatively, a standalone RRC parameter which can be used for any eMIMO-Type (for example, RIdisabled) can be introduced. Alternatively, instead of using 'CLASS A' ('nonPrecoded') eMIMO-Type, another eMIMO-Type such as 'CLASS A-2' or 'CLASS C' with RI+$i_1$-only reporting can be defined and used.

For any of the four schemes in this first sub-embodiment, at least two alternatives exist in the relation between the calculation of the first PMI value $i_1$ (associated with 'CLASS A'/'nonPrecoded' eMIMO-Type) and the second or single PMI value $i_2$ (associated with 'CLASS B'/'beamformed' eMIMO-Type). In a first alternative, the calculation of $i_1$ and $i_2$ can be dependent on each other. This is applicable when $i_1$ (which can include one component or two components $\{i_{1,1}, i_{1,2}\}$) and $i_2$ are two indices of a same 'CLASS A' codebook. Therefore, $i_2$ is calculated conditioned upon the first PMI $i_1$ (which can include one component or two components $\{i_{1,1}, i_{1,2}\}$). In a second alternative, the calculation of $i_1$ and $i_2$ can be independent on each other. Although applicable when $i_1$ (which can include one component or two components $\{i_{1,1}, i_{1,2}\}$) and $i_2$ are two indices of a same 'CLASS A' codebook, this is more relevant when $i_1$ (which can include one component or two components $\{i_{1,1}, i_{1,2}\}$) is the first index of a 'CLASS A' codebook while $i_2$ is the index of a 'CLASS B' codebook different from the CLASS A' codebook.

A second sub-embodiment is to associate a first CSI-RS resource (or CSI-RS resource configuration) with a first CSI process and a second CSI-RS resource (or CSI-RS resource configuration) with a second CSI process. In this sub-embodiment, each CSI process (and hence CSI-RS resource or CSI-RS resource configuration) is assigned a CSI reporting configuration. Therefore, two sets of CSI calculations and reports associated with the two CSI process can be defined independently - that is, one set of CSI reports is not calculated assuming the other one.

The above four schemes (as illustrated in FIGURES 5A, 5B, and 5C) of the first sub-embodiment are also applicable to the second sub-embodiment. But since only one RI reporting is used in these four schemes, only one of the two configured CSI processes is configured with RI reporting. For this purpose, one of the two configured CSI processes is set as 'RI-reference CSI process'. Denoting these four schemes (as illustrated in FIGURES 5A, 5B, and 5C) as schemes 1B, 2B, 3B, and 4B, respectively, they can be described as follows.

Scheme 1B can be described similarly to scheme 1 with the CSI process associated with 'CLASS A' ('non-Precoded') eMIMO-Type assigned as the 'RI-reference CSI process'. In this case, CQI and the PMI value $i_2$ associated with the CSI process configured with 'CLASS B' ('beamformed') eMIMO-Type as well as the PMI value $i_1$ associated with the CSI process configured with 'CLASS A' ('nonPrecoded') eMIMO-Type are calculated conditioned on the reported periodic RI for the 'configured 'RI-reference CSI process' (in this case, the CSI process associated with the CSI process configured with 'CLASS A' ('nonPrecoded') eMIMO-Type) in the most recent RI reporting instance for the CSI process.

Scheme 2B can be described similarly to scheme 2 with the CSI process associated with 'CLASS B' ('beamformed') eMIMO-Type assigned as the 'RI-reference CSI process'. In this case, CQI and the PMI value $i_2$ associated with the CSI process configured with 'CLASS B' ('beamformed') eMIMO-Type as well as the PMI value $i_1$ associated with the CSI process configured with 'CLASS A' ('nonPrecoded') eMIMO-Type are calculated conditioned on the reported periodic RI for the configured 'RI-reference CSI process' (in this case, the CSI process configured with 'CLASS B' ('beamformed') eMIMO-Type) in the most recent RI reporting instance for the CSI process.

Scheme 3B can be described similarly to scheme 3 with the CSI process associated with 'CLASS B' ('beamformed') eMIMO-Type assigned as the 'RI-reference CSI process'. In this case, CQI and the PMI value $i_2$ associated with the CSI process configured with 'CLASS B' ('beamformed') eMIMO-Type as well as the PMI value $i_1$ associated with the CSI process configured with 'CLASS A' ('nonPrecoded') eMIMO-Type are calculated conditioned on the reported periodic RI for the configured 'RI-reference CSI process' (in this case, the CSI process configured with 'CLASS B' ('beamformed') eMIMO-Type) in the most recent RI reporting instance for the CSI process.

Scheme 4B can be described similarly to scheme 4 with the CSI process associated with 'CLASS A' ('nonPrecoded') eMIMO-Type assigned as the 'RI-reference CSI process'. In this case, CQI and the PMI value $i_2$ associated with the CSI process configured with 'CLASS B' ('beamformed') eMIMO-Type as well as the PMI value $i_1$ associated with the CSI process configured with 'CLASS A' ('nonPrecoded') eMIMO-Type are calculated conditioned on the reported periodic RI for the 'configured 'RI-reference CSI process' (in this case, the CSI process associated with the CSI process configured with 'CLASS A' ('nonPrecoded') eMIMO-Type) in the most recent RI reporting instance for the CSI process.

In the present disclosure, three additional example schemes (schemes 5, 6, and 7) for the second sub-embodiment are described below.

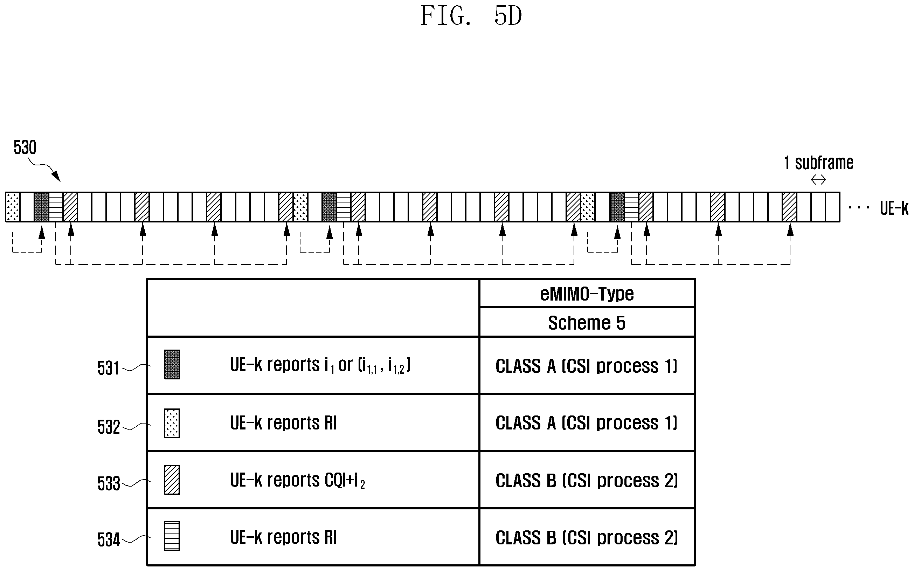

Scheme 5 can be illustrated in UE timing diagram 530 (where one unit of reporting instances in this description is one subframe) of FIGURE 5D. For illustrative purposes, the periodicity of two RI reports (532 and 534) and $i_1$ (531) are assumed to be four times of CQI+$i_2$ (533). For this scheme, four reporting instances are used to report $i_1$ (531), RI associated with the same CSI process and CSI-RS resource configuration as $i_1$ (532), and CQI+$i_2$ (533), and RI associated with the same CSI process and CSI-RS resource configuration as CQI+$i_2$ (534), respectively. In this description, the UE calculates $i_1$ conditioned on the last reported periodic RI in a first CSI process configured with 'CLASS A' ('nonPrecoded') eMIMO-Type. The UE calculates CQI and $i_2$ conditioned on the last reported periodic RI in a second CSI process configured with 'CLASS B' ('beamformed') eMIMO-Type.

For scheme 5, the UE calculates $i_1$ (the first PMI value) and a RI by measuring the CSI-RS resource associated with the first CSI-RS resource configuration (corresponding to 'CLASS A'/'nonPrecoded' eMIMO-Type). The UE calculates a RI (different from the first RI) and CQI+$i_2$ by measuring the CSI-RS resource associated with the second CSI-RS resource configuration (corresponding to 'CLASS B'/'beamformed' eMIMO-Type). For scheme 5, 'CLASS A' ('nonPrecoded') eMIMO-Type is used for the first CSI-RS resource (or CSI-RS resource configuration). In this case, another RRC parameter related to 'CLASS A' ('nonPrecoded') eMIMO-Type can be introduced (for example, i1onlyCSI-nonPrecoded). This parameter can indicate whether the UE reports RI, $i_{1,1}$, CQI+$i_2$ (three reports in separate subframes for Rel. 13 legacy 'CLASS A' CSI reporting) or only RI and $i_1$.

In a variation of this embodiment, the RI reporting associated with the first eMIMO-Type of 'CLASS A' ('nonPrecoded') can be enabled or disabled. Such configurability can be attained, for example, via higher-layer signaling using an RRC parameter which enables or disables RI reporting (for example, RIenabled). Therefore, when RI reporting is enabled, RI+ $i_1$ is reported for the first eMIMO-Type of 'CLASS A' ('nonPrecoded'). When RI reporting is disabled, only $i_1$ is reported for the first eMIMO-Type of 'CLASS A' ('nonPrecoded'). Alternatively, instead of using 'CLASS A' ('nonPrecoded') eMIMO-Type, another eMIMO-Type such as 'CLASS A-2' or 'CLASS C' with $i_1$-only reporting can be defined and used.

The two RI reports 532 and 534 can be calculated independently of each other. Alternatively, an additional restriction can be imposed. For example, if a UE is configured with two CSI processes, one associated with 'CLASS A'/'nonPrecoded' eMIMO-Type, another associated with 'CLASS B'/'beamformed' eMIMO-Type, the last reported periodic RI associated with 'CLASS B'/'beamformed' eMIMO-Type is not greater than that associated with 'CLASS A'/'nonPrecoded' eMIMO-Type. Or the second RI is of the same value as the first RI.

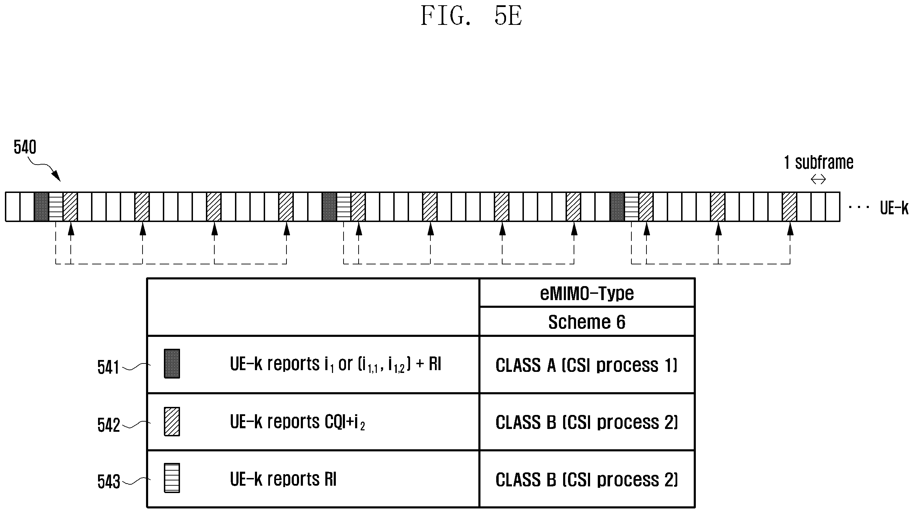

Scheme 6 can be illustrated in UE timing diagram 540 (where one unit of reporting instances in this description is one subframe) of FIGURE 5E. For illustrative purposes, the periodicity of two RI reports (in 541 and 543) and $i_1$ (in 541) are assumed to be four times of CQI+ $i_2$ (542). For this scheme, three reporting instances are used to report RI+ $i_1$ (541) associated with a first CSI process and CSI-RS resource configuration, CQI+$i_2$ (542), and RI associated with the same CSI process and CSI-RS resource configuration as CQI+$i_2$ (542), respectively. In this description, the UE calculates $i_1$ conditioned on the last reported periodic RI in a first CSI process configured with 'CLASS A' ('nonPrecoded') eMIMO-Type which is reported together with $i_1$ (in 541).The UE calculates CQI and $i_2$ conditioned on the last reported periodic RI in a second CSI process configured with 'CLASS B' ('beamformed') eMIMO-Type (in 543).

For scheme 6, the UE calculates $i_1$ (the first PMI value) and a RI by measuring the CSI-RS resource associated with the first CSI-RS resource configuration (corresponding to 'CLASS A'/'nonPrecoded' eMIMO-Type). The UE calculates a RI (different from the first RI) and CQI+$i_2$ by measuring the CSI-RS resource associated with the second CSI-RS resource configuration (corresponding to 'CLASS B'/'beamformed' eMIMO-Type). For scheme 6, 'CLASS A' ('nonPrecoded') eMIMO-Type is used for the first CSI-RS resource (or CSI-RS resource configuration). In this case, another RRC parameter related to 'CLASS A' ('nonPrecoded') eMIMO-Type can be introduced (for example, i1onlyCSI-nonPrecoded). This parameter can indicate whether the UE reports RI, $i_1$, CQI+$i_2$ (three reports in separate subframes for Rel.13 legacy 'CLASS A' CSI reporting) or only RI+$i_1$.

In a variation of this embodiment, the RI reporting associated with the first eMIMO-Type of 'CLASS A' ('nonPrecoded') can be enabled or disabled. Such configurability can be attained, for example, via higher-layer signaling using an RRC parameter which enables or disables RI reporting (for example, RIenabled). Therefore, when RI reporting is enabled, RI+$i_1$ is reported for the first eMIMO-Type of 'CLASS A' ('nonPrecoded'). When RI reporting is disabled, only $i_1$ is reported for the first eMIMO-Type of 'CLASS A' ('nonPrecoded'). Alternatively, instead of using 'CLASS A' ('nonPrecoded') eMIMO-Type, another eMIMO-Type such as 'CLASS A-2' or 'CLASS C' with $i_1$-only reporting can be defined and used.

The two RI reports in 541 and 543 can be calculated independently of each other. Alternatively, an additional restriction can be imposed. For example, if a UE is configured with two CSI processes, one associated with 'CLASS A'/'nonPrecoded' eMIMO-Type, another associated with 'CLASS B'/'beamformed' eMIMO-Type, the last reported periodic RI associated with 'CLASS B'/'beamformed' eMIMO-Type is not greater than that associated with 'CLASS A'/'nonPrecoded' eMIMO-Type. Or the second RI is of the same value as the first RI.

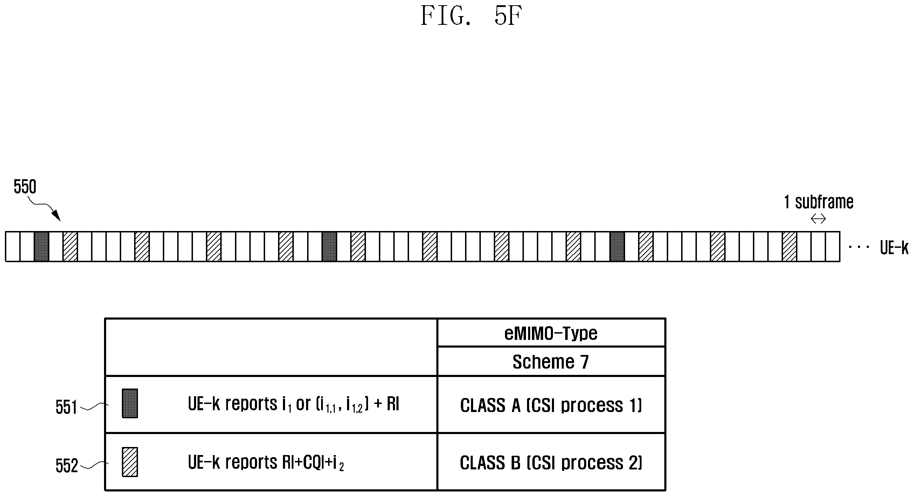

Scheme 7 can be illustrated in UE timing diagram 550 (where one unit of reporting instances in this description is one subframe) of FIGURE 5F. For illustrative purposes, the periodicity of a first RI report and $i_1$ (in 551) is assumed to be four times of the second RI report and CQI+$i_2$ (552). For this scheme, two reporting instances are used to report RI+$i_1$ (551) associated with a first CSI process and CSI-RS resource configuration, and RI+CQI+$i_2$ (552) associated with the same CSI process and CSI-RS resource configuration. In this description, the UE calculates $i_1$ conditioned on the last reported periodic RI in a first CSI process configured with 'CLASS A' ('nonPrecoded') eMIMO-Type which is reported together with $i_1$ (in 551). The UE calculates CQI and $i_2$ conditioned on the last reported periodic RI in a second CSI process configured with 'CLASS B' ('beamformed') eMIMO-Type which is reported together with CQI and $i_2$ (in 552).

For scheme 7, the UE calculates $i_1$ (the first PMI value) and its companion RI by measuring the CSI-RS resource associated with the first CSI-RS resource configuration (corresponding to 'CLASS A'/'nonPrecoded' eMIMO-Type). The UE calculates CQI+$i_2$ and its companion RI by measuring the CSI-RS resource associated with the second CSI-RS resource configuration (corresponding to 'CLASS B'/'beamformed' eMIMO-Type). For scheme 7, 'CLASS A' ('nonPrecoded') eMIMO-Type is used for the first CSI-RS resource (or CSI-RS resource configuration). In this case, another RRC parameter related to 'CLASS A' ('nonPrecoded') eMIMO-Type can be introduced (for example, i1onlyCSI-nonPrecoded). This parameter can indicate whether the UE reports RI, $i_1$, CQI+$i_2$. (three reports in separate subframes for Rel.13 legacy 'CLASS A' CSI reporting) or only RI+$i_1$.

In a variation of this embodiment, the RI reporting associated with the first eMIMO-Type of 'CLASS A' ('nonPrecoded') can be enabled or disabled. Such configurability can be attained, for example, via higher-layer signaling using an RRC parameter which enables or disables RI reporting (for example, RIenabled). Therefore, when RI reporting is enabled, RI+$i_1$ is reported for the first eMIMO-Type of 'CLASS A' ('nonPrecoded'). When RI reporting is disabled, only $i_1$ is reported for the first eMIMO-Type of 'CLASS A' ('nonPrecoded'). Alternatively, instead of using 'CLASS A' ('nonPrecoded') eMIMO-Type, another eMIMO-Type such as 'CLASS A-2' or 'CLASS C' with $i_1$-only reporting can be defined and used.

The two RI reports in 551 and 552 can be calculated independently of each other. Alternatively, an additional restriction can be imposed. For example, if a UE is configured with two CSI processes, one associated with 'CLASS A'/'nonPrecoded' eMIMO-Type, another associated with 'CLASS B'/'beamformed' eMIMO-Type, the last reported periodic RI associated with 'CLASS B'/'beamformed' eMIMO-Type is not greater than that associated with 'CLASS A'/'nonPrecoded' eMIMO-Type. Or the second RI is of the same value as the first RI.

A third sub-embodiment, similar to the first sub-embodiment, is to associate both a first CSI-RS resource (or CSI-RS resource configuration) and a second CSI-RS resource (or CSI-RS resource configuration) with a single CSI process. Therefore, CSI reports and calculations associated with the two CSI-RS resources (or CSI-RS resource configurations) can be either dependent on or independent of each other - that is, the two CSI reports are associated with one CSI reporting configuration. However, different from the first sub-embodiment, schemes of this sub-embodiment category allow RI reporting to occur twice (one RI for one CSI-RS resource). The example schemes illustrated in FIGURES 5D, 5E, and 5F can be extended for this third sub-embodiment. They are denoted as schemes 5B, 6B, and 7B, respectively, and can be described as follows.

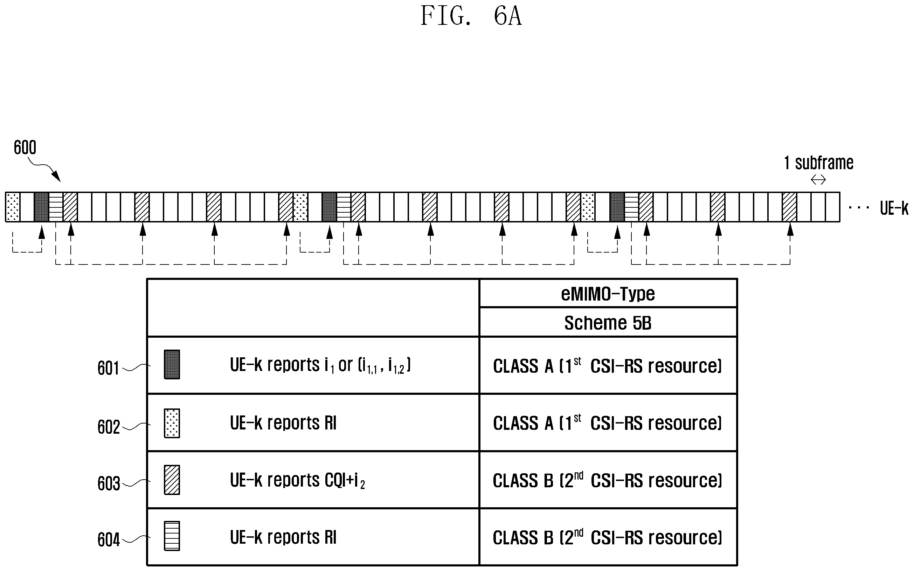

Scheme 5B can be illustrated in UE timing diagram 600 (where one unit of reporting instances in this description is one subframe) of FIGURE 6A. For illustrative purposes, the periodicity of two RI reports (602 and 604) and $i_1$ (601) are assumed to be four times of CQI+$i_2$ (603). For this scheme, four reporting instances are used to report $i_1$ (601), RI associated with the same CSI-RS resource (or CSI-RS resource configuration) as $i_1$ (602), and CQI+$i_2$ (603), and RI associated with the same CSI-RS resource (or CSI-RS resource configuration) as CQI+$i_2$ (604), respectively. In this description, the UE calculates $i_1$ conditioned on the last reported periodic RI in a first CSI-RS resource (or CSI-RS resource configuration) configured with 'CLASS A' ('nonPrecoded') eMIMO-Type. The UE calculates CQI and $i_2$. conditioned on the last reported periodic RI in a second CSI-RS resource (or CSI-RS resource configuration) configured with 'CLASS B' ('beamformed') eMIMO-Type.

For scheme 5B, the UE calculates $i_1$ (the first PMI value) and a (first) RI by measuring the CSI-RS resource associated with the first CSI-RS resource configuration (corresponding to 'CLASS A'/'nonPrecoded' eMIMO-Type). The UE calculates a RI (different from the first RI) and CQI+$i_2$ by measuring the CSI-RS resource associated with the second CSI-RS resource configuration (corresponding to 'CLASS B'/'beamformed' eMIMO-Type). For scheme 5B, 'CLASS A' ('nonPrecoded') eMIMO-Type is used for the first CSI-RS resource (or CSI-RS resource configuration). In this case, another RRC parameter related to 'CLASS A' ('nonPrecoded') eMIMO-Type can be introduced (for example, i1onlyCSI-nonPrecoded). This parameter can indicate whether the UE reports RI, $i_1$, CQI+$i_2$ (three reports in separate subframes for Rel. 13 legacy 'CLASS A' CSI reporting) or only RI and $i_1$.

In a variation of this embodiment, the RI reporting associated with the first eMIMO-Type of 'CLASS A' ('nonPrecoded') can be enabled or disabled. Such configurability can be attained, for example, via higher-layer signaling using an RRC parameter which enables or disables RI reporting (for example, RIenabled). Therefore, when RI reporting is enabled, RI+ $i_1$ is reported for the first eMIMO-Type of 'CLASS A' ('nonPrecoded'). When RI reporting is disabled, only $i_1$ is reported for the first eMIMO-Type of 'CLASS A' ('nonPrecoded'). Alternatively, instead of using 'CLASS A' ('nonPrecoded') eMIMO-Type, another eMIMO-Type such as 'CLASS A-2' or 'CLASS C' with $i_1$-only reporting can be defined and used.

The two RI reports 602 and 604 can be calculated independently of each other. Alternatively, an additional restriction can be imposed. For example, if a UE is configured with two CSI-RS resources (or CSI-RS resource configurations), one associated with 'CLASS A'/'nonPrecoded' eMIMO-Type, another associated with 'CLASS B'/'beamformed' eMIMO-Type, the last reported periodic RI associated with 'CLASS B'/'beamformed' eMIMO-Type i snot greater than that associated with 'CLASS A'/'nonPrecoded' eMIMO-Type. Or the second RI is of the same value as the first RI.

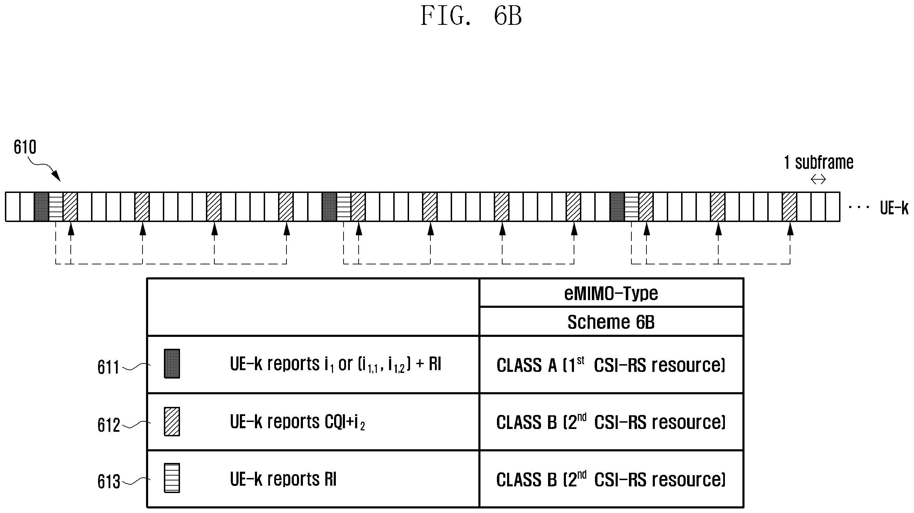

Scheme 6B can be illustrated in UE timing diagram 610 (where one unit of reporting instances in this description is one subframe) of FIGURE 6B. For illustrative purposes, the periodicity of two RI reports (in 611 and 613) and $i_1$ (in 611) are assumed to be four times of CQI+ $i_2$ (612). For this scheme, three reporting instances are used to report RI+ $i_1$ (611) associated with a first CSI-RS resource (or CSI-RS resource configuration), CQI+$i_2$ (612), and RI associated with the same CSI-RS resource (or CSI-RS resource configuration) as CQI+$i_2$ (612), respectively. In this description, the UE calculates $i_1$ conditioned on the last reported periodic RI in a first CSI-RS resource (or CSI-RS resource configuration) configured with 'CLASS A' ('nonPrecoded') eMIMO-Type which is reported together with $i_1$ (in 611).The UE calculates CQI and $i_2$ conditioned on the last reported periodic RI in a second CSI-RS resource (or CSI-RS resource configuration) configured with 'CLASS B' ('beamformed') eMIMO-Type (in 613).

For scheme 6B, the UE calculates $i_1$ (the first PMI value) and a RI by measuring the CSI-RS resource associated with the first CSI-RS resource configuration (corresponding to 'CLASS A'/'nonPrecoded' eMIMO-Type). The UE calculates a RI (different from the first RI) and CQI+$i_2$ by measuring the CSI-RS resource associated with the second CSI-RS resource configuration (corresponding to 'CLASS B'/'beamformed' eMIMO-Type). For scheme 6B, 'CLASS A' ('nonPrecoded') eMIMO-Type is used for the first CSI-RS resource (or CSI-RS resource configuration). In this case, another RRC parameter related to 'CLASS A' ('nonPrecoded') eMIMO-Type can be introduced (for example, i1onlyCSI-nonPrecoded). This parameter can indicate whether the UE reports RI, $i_1$, CQI+$i_2$ (three reports in separate subframes for Rel.13 legacy 'CLASS A' CSI reporting) or only RI+ $i_1$.

In a variation of this embodiment, the RI reporting associated with the first eMIMO-Type of'CLASS A' ('nonPrecoded') can be enabled or disabled. Such configurability can be attained, for example, via higher-layer signaling using an RRC parameter which enables or disables RI reporting (for example, RIenabled). Therefore, when RI reporting is enabled, RI+ $i_1$ is reported for the first eMIMO-Type of'CLASS A' ('nonPrecoded'). When RI reporting is disabled, only $i_1$ is reported for the first eMIMO-Type of'CLASS A' ('nonPrecoded'). Alternatively, instead of using 'CLASS A' ('nonPrecoded') eMIMO-Type, another eMIMO-Type such as 'CLASS A-2' or 'CLASS C' with $i_1$-only reporting can be defined and used.

The two RI reports in 611 and 613 can be calculated independently of each other. Alternatively, an additional restriction can be imposed. For example, if a UE is configured with two CSI-RS resources (or CSI-RS resource configurations), one associated with 'CLASS A'/'nonPrecoded' eMIMO-Type, another associated with 'CLASS B'/'beamformed' eMIMO-Type, the last reported periodic RI associated with 'CLASS B'/'beamformed' eMIMO-Type is not greater than that associated with 'CLASS A'/'nonPrecoded' eMIMO-Type. Or the second RI is of the same value as the first RI.

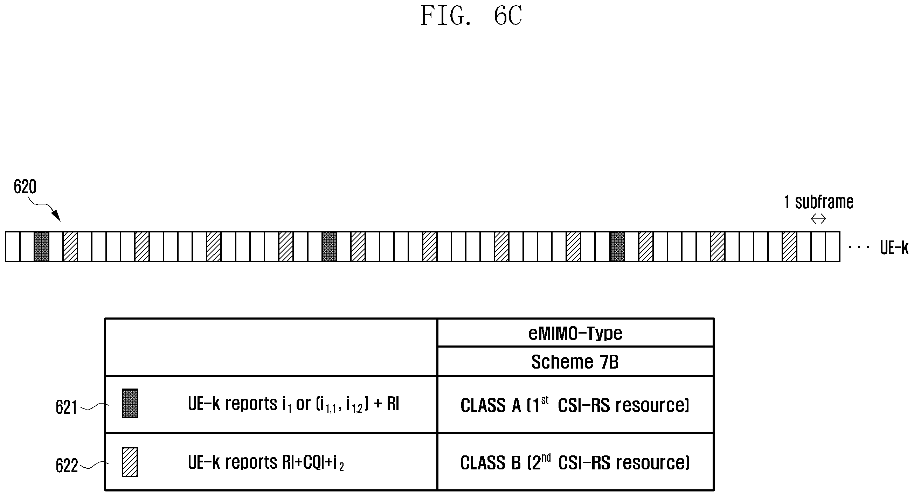

Scheme 7B can be illustrated in UE timing diagram 620 (where one unit of reporting instances in this description is one subframe) of FIGURE 6C. For illustrative purposes, the periodicity of a first RI report and $i_1$ (in 621) is assumed to be four times of the second RI report and CQI+$i_2$ (622). For this scheme, two reporting instances are used to report RI+ $i_1$ (621) associated with a first CSI-RS resource (or CSI-RS resource configuration), and RI+CQI+ $i_2$ (622) associated with the same CSI-RS resource (or CSI-RS resource configuration). In this description, the UE calculates $i_1$ conditioned on the last reported periodic RI in a first CSI-RS resource (or CSI-RS resource configuration) configured with 'CLASS A' ('nonPrecoded') eMIMO-Type which is reported together with $i_1$ (in 621). The UE calculates CQI and $i_2$ conditioned on the last reported periodic RI in a second CSI-RS resource (or CSI-RS resource configuration) configured with 'CLASS B' ('beamformed') eMIMO-Type which is reported together with CQI and $i_2$ (in 622).

For scheme 7B, the UE calculates $i_1$ (the first PMI value) and its companion RI by measuring the CSI-RS resource associated with the first CSI-RS resource configuration (corresponding to 'CLASS A'/'nonPrecoded' *eMIMO-Type). The UE calculates CQI+$i_2$ and its companion RI by measuring the CSI-RS resource associated with the second CSI-RS resource configuration (corresponding to 'CLASS B'/'beamformed' *eMIMO-Type). For scheme 7B, 'CLASS A' ('non-Precoded') *eMIMO-Type* is used for the first CSI-RS resource (or CSI-RS resource configuration). In this case, another RRC parameter related to 'CLASS A' ('nonPrecoded') *eMIMO-Type* can be introduced (for example, *ilonlyCSI-non-Precoded). This parameter can indicate whether the UE reports RI, $i_1$, CQI+$i_2$ (three reports in separate subframes for Rel.13 legacy 'CLASS A' CSI reporting) or only RI+ $i_1$.

In a variation of this embodiment, the RI reporting associated with the first *eMIMO-Type* of 'CLASS A' ('non-Precoded') can be enabled or disabled. Such configurability can be attained, for example, via higher-layer signaling using an RRC parameter which enables or disables RI reporting (for example, *RIenabled).* Therefore, when RI reporting is enabled, RI+ $_2$ is reported for the first *eMIMO-Type* of 'CLASS A' ('nonPrecoded'). When RI reporting is disabled, only $i_1$ is reported for the first *eMIMO-Type* of 'CLASS A' ('nonPrecoded'). Alternatively, instead of using 'CLASS A' ('nonPrecoded') *eMIMO-Type,* another *eMIMO-Type* such as 'CLASS A-2' or 'CLASS C' with $i_1$-only reporting can be defined and used.

The two RI reports in 621 and 622 can be calculated independently of each other. Alternatively, an additional restriction can be imposed. For example, if a UE is configured with two CSI-RS resources (or CSI-RS resource configurations), one associated with 'CLASS A'/'nonPrecoded' *eMIMO-Type,* another associated with 'CLASS B'/'beamformed' *eMIMO-Type,* the last reported periodic RI associated with 'CLASS B'/'beamformed' *eMIMO-Type* is not greater than that associated with 'CLASS A'/'nonPrecoded' *eMIMO-Type.* Or the second RI is of the same value as the first RI.

In the above example schemes of the first embodiment, the first PMI value feedback $i_1$ associated with 'CLASS A' ('nonPrecoded') *eMIMO-Type* is conditioned on the last reported periodic RI associated with either a same or different CSI-RS resource (or CSI-RS resource configuration). In an alternative embodiment, this PMI report/feedback can include more than one values of $i_1$, each associated with a value of RI. These multiple values of RI can either be predetermined/specified/fixed, configured for a UE via higher-layer (RRC) signaling, or reported together with the multiple values of $i_1$. For both the second and the third possibility, the number of values of RI can either be predetermined/specified/fixed or configured via higher-layer (RRC) signaling. For the third possibility, the UE reports multiple RI+ $i_1$ combinations in one complete CSI report. Such multiple RI+ $i_1$ combinations can be signaled together within one reporting instance or multiple reporting instances.

For the sub-embodiments of the first embodiment, the first PMI value $i_1$ associated with 'CLASS A' (nonPrecoded') *eMIMO-Type* can be replaced by a different type of feedback such as channel quantization feedback, quantized eigenvectors, or quantized channel covariance matrix. In such cases, the UE does not report the RI associated with 'CLASS A' (nonPrecoded') *eMIMO-Type.* Alternatively, RI can be reported but represents a channel characteristic such as channel rank or the number of eigenvalues or singular values which indicates the dimensionality of the channel or the number of channel vectors reported by the UE.

In a second embodiment, a first set of *K* CSI-RS resources (or CSI-RS resource configurations) is associated with *eMIMO-Type* of 'CLASS B' ('beamformed') with K>1 CSI-RS resources (or CSI-RS resource configurations) and a second CSI-RS resource (or CSI-RS resource configuration) is associated with *eMIMO-Type* of 'CLASS B' ('beamformed') with one CSI-RS resource (or CSI-RS resource configuration). The total number of CSI-RS ports of the first set

$$P_1 = \sum_{i=1}^{K} P_{1,i}$$

is greater than or equal to the number of CSI-RS ports of the second CSI-RS resource $P_2$. Similar to the first embodiment, two sub-embodiments are possible for periodic CSI (P-CSI) reporting. In a first sub-embodiment, both the first set of *K* CSI-RS resources and the second CSI-RS resource can be associated with one CSI process. In a second sub-embodiment, the first set of *K* CSI-RS resources is associated with a first CSI process and the second CSI-RS resource with a second CSI process. The 'CLASS B' ('beamformed') *eMIMO-Type* associated with the first set of *K* CSI-RS resources can be configured with or without CRI (CSI-RS resource index) reporting. This feature can be used to aggregate

$$P_1 = \sum_{i=1}^{K} P_{1,i}$$

*K* CSI-RS resources into a total of CSI-RS ports, offering a subsampled $P_1$-port CSI-RS. For periodic CSI-RS resource configuration, such subsampling can be performed in time (subframe level), frequency (sub-carrier level), and/or port domain(s).

For the first sub-embodiment of this second embodiment, four schemes analogous to the four schemes (1, 2, 3, and 4) of the first sub-embodiment of the first embodiment apply. The four schemes can be described in a similar manner to that given in FIGURE 5A (schemes 1 and 2), 5B (scheme 3), and 5C (scheme 4), respectively, except that 'CLASS A' ('nonPrecoded') *eMIMO-Type* and its associated one CSI-RS resource (or resource configuration) are substituted with 'CLASS B' (beamformed) *eMIMO-Type* and its associated *K* CSI-RS resources (or resource configurations). Their extensions analogous to the second sub-embodiment of the first embodiment (termed schemes 1A, 2A, 3A, and 4A) can be described similarly -substituting 'CLASS A' ('nonPrecoded') *eMIMO-Type* and its associated one CSI-RS resource (or resource configuration) with 'CLASS B' (beamformed) *eMIMO-Type* and its associated *K* CSI-RS resources (or resource configurations).

When only one CSI process is used for both *eMIMO-Type* settings just as in the first sub-embodiment of this second embodiment, an additional higher layer (RRC) signaling can be introduced to indicate a function of a 'CLASS B' ('beamformed') *eMIMO-Type.* This function can correspond to CSI reporting such as the content of one CSI report. For example, for the first 'CLASS B' ('beamformed') *eMIMO-Type* with $K$ CSI-RS resources (or resource configurations), a CSI report can include a set of $K$ CSI reports, each corresponding to one of the $K$ CSI-RS resources (or resource configurations) and each CSI report can include RI, CQI, and PMI derived from a particular choice of codebook for $P_{1,i}$-port CSI-RS (for the i-th CSI-RS resource). Since this set of $K$ CSI reports can be used by the eNB to estimate CSI for $P_1$-port CSI-RS, these CSI reports can correspond to a same value of RI. For the second 'CLASS B' ('beamformed') *eMIMO-Type* with one CSI-RS resource (or resource configuration), its corresponding CSI report can include RI, CQI, and PMI derived from a particular choice of codebook for $P_2$-port CSI-RS which can be the same as or different from the first choice of codebook. Therefore, this embodiment can be implemented with including a codebook selection parameter for each CSI-RS resource or resource configuration (in this case, each of the $K+1$ CSI-RS resources of resource configurations). This resource- or resource-configuration-specific codebook selection RRC parameter (termed, for example, *CBSelect_CSI-RS_Resource)* can be introduced in an NZP CSI-RS resource configuration information element (IE).

This additional higher layer signaling can also be used for a second sub-embodiment where the first set of $K$ CSI-RS resources is associated with a first CSI process and the second CSI-RS resource with a second CSI process.

A codebook used for a CSI-RS resource can be described in two indices or PMI values $i_1$ and $i_2$. Similar to the first embodiment, PMI $i_1$ denotes the PMI associated with the first index. Depending on the codebook configuration, this first index $i_1$ can include one component or two components $\{i_{1,1}, i_{1,2}\}$. The other PMI $i_2$ denotes the second index of this codebook. Alternatively, a codebook used for a CSI-RS resource can be described in one index or PMI value $i_2$.

In a variation of this first sub-embodiment of the second embodiment, when CRI is reported by the UE for the first set of $K$ CSI-RS resources (associated with *eMIMO-Type* of 'CLASS B' ('beamformed') with $K>1$ CSI-RS resources (or CSI-RS resource configurations)), instead of reporting $K$ CSI reports (each associated with one of the $K$ CSI-RS resources), the UE reports only one CSI containing only CRI (without CQI, without PMI, and without RI). This CRI indicates a recommended selection of one out of $K$ CSI-RS resources. For the second set of one CSI-RS resource (associated with *eMIMO-Type* of 'CLASS B' ('beamformed') with one CSI-RS resource (or CSI-RS resource configuration)), the UE reports one CSI containing CQI, PMI, and RI based on a codebook for $P_2$-port CSI-RS. This CSI calculation is conditioned on the last reported periodic CRI associated with the first set of $K$ CSI-RS resources. Note that although CRI is calculated from the first set of $K >1$ CSI-RS resources and RI from the second set of one CSI-RS resource, CRI can be reported together with RI in a same subframe whenever CRI is reported. This follows the procedure in Rel.13 LTE. Alternatively, CRI can be reported separately (in a different subframe) from this RI.

In a variation of the above scheme, when CRI is reported by the UE for the first set of $K$ CSI-RS resources (associated with *eMIMO-Type* of 'CLASS B' ('beamformed') with $K>1$ CSI-RS resources (or CSI-RS resource configurations)), both CRI and RI are calculated from this first set of $K$ CSI-RS resources. Here RI is calculated or determined conditioned on the reported CRI (recommended selection of one out of $K$ CSI-RS resources). For the second set of one CSI-RS resource (associated with *eMIMO-Type* of 'CLASS B' ('beamformed') with one CSI-RS resource (or CSI-RS resource configuration)), the UE reports one CSI containing CQI and PMI (without RI), based on a codebook for $P_2$-port CSI-RS. This CSI calculation is conditioned on the last reported periodic CRI and the last reported periodic RI associated with the first set of $K$ CSI-RS resources. Note that CRI can be reported together with RI in a same subframe whenever CRI is reported. This follows the procedure in Rel. 13 LTE. Alternatively, CRI can be reported separately (in a different subframe) from this RI.

In yet another variation of this first sub-embodiment of the second embodiment, a first set of K=2 CSI-RS resources (or CSI-RS resource configurations) is associated with *eMIMO-Type* of 'CLASS B' ('beamformed') with $K=2$ CSI-RS resources (or CSI-RS resource configurations) and a second CSI-RS resource (or CSI-RS resource configuration) is associated with *eMIMO-Type* of 'CLASS B' ('beamformed') with one CSI-RS resource (or CSI-RS resource configuration). For the first set of K=2 CSI-RS resources (the first CSI-RS resource with $P_{1,1}$ ports and the second CSI-RS resource with $P_{1,2}$ ports), just as in the first embodiment, the UE can be configured to report only some of the CSI parameters. For example, for the first $P_{1,1}$-port CSI-RS, the UE can report either RI+$i_{1,1}$ only or $i_{1,1}$ only. For the second $P_{1,2}$-port CSI-RS, the UE can report either RI+$i_{1,2}$ only or $i_{1,2}$ only. Either one of the two CSI reports or both CSI reports can be reported with or without RI. If only one of the two CSI reports (labelled as CSI report A) contains an RI, the other CSI report (labelled CSI report B) associated with the other CSI-RS resource is calculated conditioned on the RI from CSI report A. If each of the two CSI reports contains an RI, the two values of RI can be determined independently or set the same (for example, by setting one of CSI-RS resources as a reference for RI reporting). For the second set of one CSI-RS resource (associated with *eMIMO-Type* of 'CLASS B' ('beamformed') with one CSI-RS resource (or CSI-RS resource configuration)), the UE reports one CSI containing CQI, PMI, and RI based on a codebook for $P_2$-port CSI-RS. Alternatively, if RI is already reported for the first set of K=2 CSI-RS resources, only CQI+PMI can be reported for this $P_2$-port CSI-RS. In this case, CQI and PMI are calculated conditioned on the last reported periodic RI associated with the first set of $K=2$ CSI-RS resources (associated with *eMIMO-Type* of 'CLASS B' ('beamformed') with K=2 CSI-RS resources (or CSI-RS resource configurations)).

For calculating $i_{1,1}$ and $i_{1,2}$, a two-dimensional codebook such as a codebook used for 'CLASS A' *eMIMO-Type* can be used where the codebook parameters $(N_1, N_2)$ are set to either $(P_{1,1}, P_{1,2})$ or $(P_{1,1}/2, P_{1,2})$, respectively. This implies that $i_{1,1}$ and $i_{1,2}$ are intended to represent two components of first PMI $i_1$ associated with $2P_{1,1}P_{1,2}$ or $P_{1,1}P_{1,2}$ CSI-RS ports. In this case, the calculation of $i_{1,1}$ and $i_{1,2}$ can be either independent or dependent on each other. For instance, $i_{1,2}$ is calculated conditioned on the last reported periodic $i_{1,1}$, or vice versa.

Alternatively, $i_{1,1}$ can be calculated using a $P_{1,1}$-port codebook while $i_{1,2}$ can be calculated using a $P_{1,2}$-port codebook. Likewise, the calculation of $i_{1,1}$ and $i_{1,2}$ can be either independent or dependent on each other. For instance, $i_{1,2}$ is calculated conditioned on the last reported periodic $i_{1,1}$, or vice versa. When more than one choices of codebook are available for a given number of CSI-RS ports (for each of the two PMI components), a codebook selection parameter for each CSI-RS resource or resource configuration (in this case, each of the *two* CSI-RS resources of resource configurations). This resource- or resource-configuration-specific codebook selection RRC parameter (termed, for example, *CBSelect_CSI-RS_Resource)* can be introduced in an NZP CSI-RS resource configuration information element (IE).

For the second sub-embodiment of this second embodiment, three schemes analogous to the four schemes (5, 6, and 7) of the second sub-embodiment of the first embodiment apply. The three schemes can be described in a similar manner to that given in FIGURE 5D (scheme 5), 5E (scheme 6), and 5F (scheme 7), respectively, except that 'CLASS A' ('nonPrecoded') *eMIMO-Type* and its associated one CSI-RS resource (or resource configuration) are substituted with 'CLASS B' (beamformed) *eMIMO-Type* and its associated K CSI-RS resources (or resource configurations).

When two CSI processes are used (one for the first 'CLASS B' *eMIMO-Type* with *K* CSI-RS resources, another for the second 'CLASS B' *eMIMO-Type* with 1 CSI-RS resources), a codebook selection indicator can be introduced for each of the two CSI processes.

In a third embodiment, an aperiodic CSI (A-CSI) counterpart of the first embodiment, a first CSI-RS resource (or CSI-RS resource configuration) is associated with *eMIMO-Type* of'CLASS A' ('nonPrecoded') and a second CSI-RS resource (or CSI-RS resource configuration) is associated with *eMIMO-Type* of'CLASS B' ('beamformed'). In this case, 'CLASS B' ('beamformed') is associated with one CSI-RS resource. The number of CSI-RS ports for the first 'CLASS A' CSI-RS resource $P_1$ can be different from that for the second 'CLASS B' CSI-RS resources $P_2$ where $P_1 \geq P_2$. As specified, a UE performs aperiodic CSI reporting using the PUSCH in subframe $n+k$ on serving cell c, upon decoding in subframe $n$ either an uplink DCI format, or a Random Access Response Grant, for serving cell c if the respective CSI request field is set to trigger a report and is not reserved.

In this third embodiment, a UE performs an A-CSI reporting of a type associated with *eMIMO-Type* of'CLASS A' ('nonPrecoded') if the respective CSI request field is set to trigger a CSI report associated with this *eMIMO-Type* of'CLASS A' ('nonPrecoded'). Else, a UE performs an A-CSI reporting of a type associated with *eMIMO-Type* of'CLASS B' ('beamformed') if the respective CSI request field is set to trigger a CSI report associated with this *eMIMO-Type* of'CLASS B' ('beamformed'). In this embodiment, the number of bits for CSI request field can be increased by 1 bit to facilitate triggering of CSI reports for these two *eMIMO-Types.* Alternatively, a third hypothesis can be added on the above two hypotheses. That is, a UE performs an A-CSI reporting which includes CSI associated with both *eMIMO-Type* of'CLASS A' ('nonPrecoded') and *eMIMO-Type* of'CLASS B' ('beamformed') if the respective CSI request field is set to trigger a CSI report associated with both *eMIMO-Types.*

Alternatively, instead of increasing the number of bits for CSI request field, a separate one or two-bit CSI request parameter can be introduced for the purpose of triggering an A-CSI report associated with one of the two or three *eMIMO-Type* hypotheses above.

Analogous to the first embodiment, two sub-embodiments apply depending on the number of CSI processes associated with these two *eMIMO-Types.*

A first sub-embodiment is to associate both a first CSI-RS resource (or CSI-RS resource configuration, hence *eMIMO-Type* of'CLASS A'/'nonPrecoded') and a second CSI-RS resource (or CSI-RS resource configuration, hence *eMIMO-Type* of'CLASS B'/'beamformed') with a single CSI process. Therefore, CSI reports and calculations associated with the two CSI-RS resources (or CSI-RS resource configurations) can be either dependent on or independent of each other - that is, the two CSI reports are associated with one CSI reporting configuration. In the present disclosure, several example schemes are described in TABLE 3 below. CSI content for each scheme is given. Depending on the configured CSI reporting mode, the reported CQI can be wideband (one CQI for each codeword calculated for the set S subbands) or subband (one CQI for each codeword for each subband in the set S subbands). Likewise, the reported second or single PMI $i_2$ can be wideband (one PMI calculated for the set S subbands) or subband (one PMI for each subband in the set S subbands). The first PMI $i_1$ is reported as a wideband (one PMI calculated for the set S subbands) PMI.

For the schemes described in this sub-embodiment, PMI $i_1$ denotes the PMI associated with the first index of a 'CLASS A' ('nonPrecoded') codebook. Depending on the codebook configuration, this first index $i_1$ can include one component or two components $\{i_{1,1}, i_{1,2}\}$. The other PMI $i_2$ can denote either the index of a codebook different from the 'CLASS A' ('nonPrecoded') codebook or the second index of a 'CLASS A' ('nonPrecoded') codebook.

In scheme 3.1, a UE reports only $i_1$ upon decoding in subframe $n$ either an uplink DCI format, or a Random Access Response Grant containing a CSI request field which is set to trigger a CSI report associated with *eMIMO-Type* of 'CLASS A' ('nonPrecoded'). Else, a UE reports CQI, $i_2$, and RI upon decoding in subframe n either an uplink DCI format, or a Random Access Response Grant containing a CSI request field which is set to trigger a CSI report associated with *eMIMO-Type* of 'CLASS B' ('beamformed'). Here, $i_1$ is calculated conditioned upon the last reported RI. In this case, three possibilities exist: 1) the last reported periodic RI; 2) the RI reported from the last A-CSI report; 3) the last reported RI in the same CSI process.

In scheme 3.2, a UE reports $i_1$ and RI upon decoding in subframe n either an uplink DCI format, or a Random Access Response Grant containing a CSI request field which is set to trigger a CSI report associated with *eMIMO-Type* of 'CLASS A' ('nonPrecoded'). The first PMI $i_1$ is calculated conditioned on the reported RI in the same A-CSI report. Else, a UE reports CQI, $i_2$, and RI upon decoding in subframe n either an uplink DCI format, or a Random Access Response Grant containing a CSI request field which is set to trigger a CSI report associated with *eMIMO-Type* of 'CLASS B' ('beamformed'). The PMI $i_2$ and CQI are calculated conditioned on the reported RI in the same A-CSI report. The value of RI in the CSI report triggered for *eMIMO-Type* of 'CLASS A' ('nonPrecoded') can be the same (either calculated jointly or the second RI is restricted to be the same as the first RI) or different (calculated independently) from that in the CSI report triggered for *eMIMO-Type* of 'CLASS B' ('beamformed').

In scheme 3.3, a UE reports $i_1$ and RI upon decoding in subframe n either an uplink DCI format, or a Random Access Response Grant containing a CSI request field which is set to trigger a CSI report associated with *eMIMO-Type* of 'CLASS A' ('nonPrecoded'). Else, a UE reports CQI and $i_2$ upon decoding in subframe n either an uplink DCI format, or a Random Access Response Grant containing a CSI request field which is set to trigger a CSI report associated with *eMIMO-Type* of 'CLASS B' ('beamformed'). Here, CQI and $i_2$ are calculated conditioned upon the last reported RI. In this case, three possibilities exist: 1) the last reported periodic RI; 2) the RI reported from the last A-CSI report; 3) the last reported RI in the same CSI process.

[Table 3]

| | Schemes for the third embodiment (A-CSI with one CSI process), sub-embodiment 1 | |
|---|---|---|
| Scheme | CSI content for A-CSI request indicating 'CLASS A' *eMIMO-Type* | CSI content for A-CSI request indicating 'CLASS B' *eMIMO-Type* |
| 3.1 | $i_1$ | CQI+$i_2$+RI |
| 3.2 | $i_1$+RI | CQI+$i_2$+RI |
| 3.3 | $i_1$+RI | CQI+$i_2$ |

A second sub-embodiment is to associate a first CSI-RS resource (or CSI-RS resource configuration) with a first CSI process and a second CSI-RS resource (or CSI-RS resource configuration) with a second CSI process. In this sub-embodiment, each CSI process (and hence CSI-RS resource or CSI-RS resource configuration) is assigned a CSI reporting configuration. Therefore, two sets of CSI calculations and reports associated with the two CSI process can be defined independently - that is, one set of CSI reports is not calculated assuming the other one.

The three schemes of the first sub-embodiment (TABLE 3) are also applicable to the second sub-embodiment and replicated below in TABLE 4. Depending on the configured CSI reporting mode, the reported CQI can be wideband (one CQI for each codeword calculated for the set S subbands) or subband (one CQI for each codeword for each subband in the set S subbands). Likewise, the reported second or single PMI $i_2$ can be wideband (one PMI calculated for the set S subbands) or subband (one PMI for each subband in the set S subbands). The first PMI $i_1$ is reported as a wideband (one PMI calculated for the set S subbands) PMI.

For the schemes described in this sub-embodiment, PMI $i_1$ denotes the PMI associated with the first index of a 'CLASS A' ('nonPrecoded') codebook. Depending on the codebook configuration, this first index $i_1$ can include one component or two components $\{i_{1,1}, i_{1,2}\}$. The other PMI $i_2$ can denote either the index of a codebook different from the 'CLASS A' ('nonPrecoded') codebook or the second index of a 'CLASS A' ('nonPrecoded') codebook.

For schemes 3.4 and 3.6 in this sub-embodiment, only one of the two configured CSI processes is configured with RI reporting. For this purpose, one of the two configured CSI processes is set as 'RI-reference CSI process'.

In scheme 3.4, a UE reports only $i_1$ upon decoding in subframe n either an uplink DCI format, or a Random Access Response Grant containing a CSI request field which is set to trigger a CSI report associated with *eMIMO-Type* of 'CLASS A' ('nonPrecoded'). Else, a UE reports CQI, $i_2$, and RI upon decoding in subframe $n$ either an uplink DCI format, or a Random Access Response Grant containing a CSI request field which is set to trigger a CSI report associated with *eMIMO-Type* of 'CLASS B' ('beamformed'). The CSI process associated with 'CLASS B' ('beamformed') *eMIMO-Type* assigned as the 'RI-reference CSI process'. In this case, CQI and the PMI value $i_2$ associated with the CSI process configured with 'CLASS B' ('beamformed') *eMIMO-Type* as well as the PMI value $i_1$ associated with the CSI process configured with 'CLASS A' ('nonPrecoded') *eMIMO-Type* are calculated conditioned on the reported periodic RI for the 'configured 'RI-reference CSI process' (in this case, the CSI process associated with the CSI process configured with 'CLASS B' ('beamformed') *eMIMO-Type)* in the most recent RI reporting instance for the CSI process.

In scheme 3.5, a UE reports $i_1$ and RI upon decoding in subframe n either an uplink DCI format, or a Random Access Response Grant containing a CSI request field which is set to trigger a CSI report associated with *eMIMO-Type* of 'CLASS A' ('nonPrecoded'). The first PMI $i_1$ is calculated conditioned on the reported RI in the same A-CSI report. Else, a UE reports CQI, $i_2$, and RI upon decoding in subframe *n* either an uplink DCI format, or a Random Access Response Grant containing a CSI request field which is set to trigger a CSI report associated with *eMIMO-Type* of 'CLASS B' ('beamformed'). The PMI $i_2$ and CQI are calculated conditioned on the reported RI in the same A-CSI report. The value of RI in the CSI report triggered for *eMIMO-Type* of 'CLASS A' ('nonPrecoded') can be the same (either calculated jointly or the second RI is restricted to be the same as the first RI) or different (calculated independently) from that in the CSI report triggered for *eMIMO-Type* of 'CLASS B' ('beamformed').

In scheme 3.6, a UE reports $i_1$ and RI upon decoding in subframe n either an uplink DCI format, or a Random Access Response Grant containing a CSI request field which is set to trigger a CSI report associated with eMIMO-Type of 'CLASS A' ('nonPrecoded'). Else, a UE reports CQI and $i_2$ upon decoding in subframe n either an uplink DCI format, or a Random Access Response Grant containing a CSI request field which is set to trigger a CSI report associated with eMIMO-Type of 'CLASS B' ('beamformed'). The CSI process associated with 'CLASS A' ('nonPrecoded') eMIMO-Type assigned as the 'RI-reference CSI process'. In this case, CQI and the PMI value $i_2$ associated with the CSI process configured with 'CLASS B' ('beamformed') eMIMO-Type as well as the PMI value $i_1$ associated with the CSI process configured with 'CLASS A' ('nonPrecoded') eMIMO-Type are calculated conditioned on the reported periodic RI for the 'configured 'RI-reference CSI process' (in this case, the CSI process associated with the CSI process configured with 'CLASS A' ('nonPrecoded') *eMIMO-Type)* in the most recent RI reporting instance for the CSI process.

[Table 4]

| The third embodiment (A-CSI with two CSI processes), sub-embodiment 2 | | |
|---|---|---|
| Scheme | CSI content for A-CSI request indicating 'CLASS A' *eMIMO-Type,* CSI process 1 | CSI content for A-CSI request indicating 'CLASS B' *eMIMO-Type,* CSI process 2 |
| 3.4 | $i_1$ | CQI+$i_2$+RI |
| 3.5 | $i_1$+RI | CQI+$i_2$+RI |
| 3.6 | $i_1$+RI | CQI+$i_2$ |

For both sub-embodiments of the first embodiment, the first PMI value $i_1$ associated with 'CLASS A' ('nonPrecoded') *eMIMO-Type* can be replaced by a different type of feedback such as channel quantization feedback, quantized eigenvectors, or quantized channel covariance matrix. In such cases, the UE does not report the RI associated with 'CLASS A' ('nonPrecoded') *eMIMO-Type.* Alternatively, RI can be reported but represents a channel characteristic such as channel rank or the number of eigenvalues or singular values which indicates the dimensionality of the channel or the number of channel vectors reported by the UE.

In a fourth embodiment is an aperiodic CSI (A-CSI) counterpart of the second embodiment. In this embodiment, a first set of $K$ CSI-RS resources (or CSI-RS resource configurations) is associated with *eMIMO-Type* of 'CLASS B' ('beamformed') with K>1 CSI-RS resources (or CSI-RS resource configurations) and a second CSI-RS resource (or CSI-RS resource configuration) is associated with *eMIMO-Type* of 'CLASS B' ('beamformed') with one CSI-RS resource

$$P_1 = \sum_{i=1}^{K} P_{1,i}$$

(or CSI-RS resource configuration). The total number of CSI-RS ports of the first set is greater than or equal to the number of CSI-RS ports of the second CSI-RS resource $P_2$.

Two sub-embodiments are possible for aperiodic CSI (A-CSI) reporting. In a first sub-embodiment, both the first set of $K$ CSI-RS resources and the second CSI-RS resource can be associated with one CSI process. In a second sub-embodiment, the first set of $K$ CSI-RS resources is associated with a first CSI process and the second CSI-RS resource with a second CSI process. In this fourth embodiment, a CSI reported associated with one or more CSI-RS resources (or CSI-RS resource configurations) out of a total of $K$ CSI-RS resources associated with the first 'CLASS B' ('beamformed') *eMIMO-Type* setup can be triggered by a CSI request. A CSI reported associated with one CSI-RS resource (or CSI-RS resource configuration) associated with the second 'CLASS B' ('beamformed') *eMIMO-Type* setup can also be triggered by a CSI request. Two possibilities exist. In a first possibility, a UE is not requested to report an A-CSI including both CSI for one or more CSI-RS resources from the first 'CLASS B' ('beamformed') *eMIMO-Type* setup and CSI for the second

EP 3 907 899 B1

'CLASS B' ('beamformed') *eMIMO-Type* setup. In a second possibility, an A-CSI reported by a UE can include both CSI for one or more CSI-RS resources from the first 'CLASS B' ('beamformed') *eMIMO-Type* setup and CSI for the second 'CLASS B' ('beamformed') *eMIMO-Type* setup.

In either of the above two possibilities, UE performs aperiodic CSI reporting using the PUSCH in subframe $n+k$ on serving cell c, upon decoding in subframe $n$ either an uplink DCI format, or a Random Access Response Grant, for serving cell c if the respective CSI request field is set to trigger a report and is not reserved. Therefore, a UE performs an A-CSI reporting of a type associated with one or more CSI-RS resources (or CSI-RS resource configurations) out of a total of $K$ CSI-RS resources associated with the first *eMIMO-Type* of 'CLASS B' ('beamformed') if the respective CSI request field is set to trigger a CSI report associated with this first *eMIMO-Type* of 'CLASS B' ('beamformed'). Else, a UE performs an A-CSI reporting of a type associated with the second *eMIMO-Type* of 'CLASS B' ('beamformed') if the respective CSI request field is set to trigger a CSI report associated with this *eMIMO-Type* of 'CLASS B' ('beamformed').

For this embodiment, the number of bits for CSI request field can be increased to facilitate triggering of CSI reports not only for these two *eMIMO-Type* setups (the first 'CLASS B' with K CSI-RS resources and the second 'CLASS B' with 1 CSI-RS resource), but also for triggering one or more CSI-RS resources (or CSI-RS resource configurations) out of a total of $K$ CSI-RS resources associated with the first *eMIMO-Type* of 'CLASS B' ('beamformed'). For example, the number of bits for CSI request field can be increased by $N_T$ bits which indicates CSI request/trigger for a subset of K CSI-RS resources of the first 'CLASS B' or the second 'CLASS B'. Alternatively, instead of increasing the number of bits for CSI request field, a separate $N_T$-bit CSI request parameter can be introduced for the purpose of triggering an A-CSI report described above.

When only CSI process is used for both *eMIMO-Type* settings just as in the first sub-embodiment of the third embodiment, an additional higher layer (RRC) signaling can be introduced to indicate a function of a 'CLASS B' ('beamformed') *eMIMO-Type*. This function can correspond to CSI reporting such as the content of one CSI report. For example, for the first 'CLASS B' ('beamformed') *eMIMO-Type* with $K$ CSI-RS resources (or resource configurations), a CSI report can include a set of $K$ CSI reports, each corresponding to one of the K CSI-RS resources (or resource configurations) and each CSI report can include RI, CQI, and PMI derived from a particular choice of codebook. Since this set of $K$ CSI reports can be used by the eNB to estimate CSI for $P_1$-port CSI-RS, these CSI reports can correspond to a same value of RI. For the second 'CLASS B' ('beamformed') *eMIMO-Type* with one CSI-RS resource (or resource configuration), its corresponding CSI report can include RI, CQI, and PMI derived from a particular choice of codebook which can be the same as or different from the first choice of codebook. Therefore, this embodiment can be implemented with including a codebook selection parameter for each CSI-RS resource or resource configuration (in this case, each of the K+1 CSI-RS resources of resource configurations). This resource- or resource-configuration-specific codebook selection RRC parameter (termed, for example, *CBSelect_CSI-RS_Resource*) can be introduced in an NZP CSI-RS resource configuration information element (IE).

When two CSI processes are used (one for the first 'CLASS B' *eMIMO-Type* with $K$ CSI-RS resources, another for the second 'CLASS B' *eMIMO-Type* with 1 CSI-RS resources) just as in the second sub-embodiment of the third embodiment, a codebook selection indicator can be introduced for each of the two CSI processes.

In a variation of this fourth embodiment, when CRI is reported by the UE for the first set of $K$ CSI-RS resources (associated with *eMIMO-Type* of 'CLASS B' ('beamformed') with K>1 CSI-RS resources (or CSI-RS resource configurations)), instead of reporting K CSI reports (each associated with one of the K CSI-RS resources), the UE reports only one CSI containing only CRI (without CQI, without PMI, and without RI). This CRI indicates a recommended selection of one out of $K$ CSI-RS resources. For the second set of one CSI-RS resource (associated with *eMIMO-Type* of 'CLASS B' ('beamformed') with one CSI-RS resource (or CSI-RS resource configuration)), the UE reports one CSI containing CQI, PMI, and RI based on a codebook for $P_2$-port CSI-RS. This CSI calculation is conditioned on the last reported CRI associated with the first CSI process with K CSI-RS resources.

In yet another variation of this fourth embodiment, a first set of K=2 CSI-RS resources (or CSI-RS resource configurations) is associated with *eMIMO-Type* of 'CLASS B' ('beamformed') with K=2 CSI-RS resources (or CSI-RS resource configurations) and a second CSI-RS resource (or CSI-RS resource configuration) is associated with *eMIMO-Type* of 'CLASS B' ('beamformed') with one CSI-RS resource (or CSI-RS resource configuration). For the first set of K=2 CSI-RS resources (the first CSI-RS resource with $P_{1,1}$ ports and the second CSI-RS resource with $P_{1,2}$ ports), just as in the first embodiment, the UE can be configured to report only some of the CSI parameters. For example, for the first $P_{1,1}$-port CSI-RS, the UE can report either RI+ $i_{1,1}$ only or $i_{1,1}$ only. For the second $P_{1,2}$-port CSI-RS, the UE can report either RI+ $i_{1,2}$ only or $i_{2,2}$ only. Either one of the two CSI reports or both CSI reports can be reported with or without RI. If only one of the two CSI reports (labelled as CSI report A) contains an RI, the other CSI report (termed CSI report B) associated with the other CSI-RS resource is calculated conditioned on the RI from CSI report A. If each of the two CSI reports contains an RI, the two values of RI can be determined independently or set the same (for example, by setting one of CSI-RS resources as a reference for RI reporting). For the second set of one CSI-RS resource (associated with *eMIMO-Type* of 'CLASS B' ('beamformed') with one CSI-RS resource (or CSI-RS resource configuration)), the UE reports one CSI containing CQI, PMI, and RI based on a codebook for $P_2$-port CSI-RS. Alternatively, if RI is already reported for the first set of K=2 CSI-RS resources, only CQI+PMI can be reported for this $P_2$-port CSI-RS. In this case, CQI and PMI are calculated conditioned on the last reported RI associated with the first CSI process with K=2 CSI-RS resources (associated with *eMIMO-Type* of 'CLASS B' ('beamformed') with K=2 CSI-RS resources (or CSI-RS resource configurations)). In this case, the first CSI process can be configured as the RI reference process.

For calculating $i_{1,1}$ and $i_{1,2}$, a two-dimensional codebook such as a codebook used for 'CLASS A' *eMIMO-Type* can be used where the codebook parameters $(N_1,N_2)$ are set to either $(P_{1,1},P_{1,2})$ or $(P_{1,1}/2,P_{1,2})$, respectively. This implies that $i_{1,1}$ and $i_{1,2}$ are intended to represent two components of first PMI $i_1$ associated with $2P_{1,1}P_{1,2}$ or $P_{1,1}P_{1,2}$ CSI-RS ports. In this case, the calculation of $i_{1,1}$ and $i_{1,2}$ can be either independent or dependent on each other. For instance, $i_{1,2}$ is calculated conditioned on the reported $i_{1,1}$, or vice versa.

Alternatively, $i_{1,1}$ can be calculated using a $P_{1,1}$-port codebook while $i_{1,2}$ can be calculated using a $P_{1,2}$-port codebook. Likewise, the calculation of $i_{1,1}$ and $i_{1,2}$ can be either independent or dependent on each other. For instance, $i_{1,2}$ is calculated conditioned on the reported $i_{1,1}$, or vice versa. When more than one choices of codebook are available for a given number of CSI-RS ports (for each of the two PMI components), a codebook selection parameter for each CSI-RS resource or resource configuration (in this case, each of the *two* CSI-RS resources of resource configurations). This resource- or resource-configuration-specific codebook selection RRC parameter (termed, for example, *CBSelect_CSI-RS_Resource*) can be introduced in an NZP CSI-RS resource configuration information element (IE).

In a fifth embodiment, with configurable one CSI process with two eMIMO-Types, a UE can be configured with one CSI process which is configured with two *eMIMO-Types* where both a first CSI-RS resource (or CSI-RS resource configuration) and a second CSI-RS resource (or CSI-RS resource configuration) are associated with this single CSI process. Each of the two *eMIMO-Types* can be configured separately as either 'CLASS A'/'nonPrecoded' or 'CLASS B'/'beamformed'. When one of these two *eMIMO-Types* is assigned as 'CLASS B'/'beamformed', it can be associated with one or a plurality of CSI-RS resources (or CSI-RS resource configurations). Alternatively, any of the two *eMIMO-Types* can be configured with a new type such as 'CLASS C' or 'CLASS D'. For this embodiment, for each of the two *eMIMO-Types,* CQI reporting can be enabled or disabled via higher-layer signaling using an RRC parameter (for example, *CQIReportingEnabled*). Likewise, RI reporting can be enabled or disabled via higher-layer signaling using an RRC parameter (for example, *RIReportingEnabled*). Likewise, for an *eMIMO-Type* where two PMI values ($i_1$ and $i_2$) are reported, each of the two PMI values can be enabled or disabled via higher-layer signaling using an RRC parameter (for example, *i1ReportingEnabled* and *i2ReportingEnabled)*. When the first PMI value $i_1$ includes two components ($i_{1,1}$ and $i_{1,2}$), each of these two PMI components can be enabled or disabled via higher-layer signaling using an RRC parameter (for example, *i11ReportingEnabled* and *i12ReportingEnabled)*. For an *eMIMO-Type* where one PMI value ($i$) are reported, the PMI value can be enabled or disabled via higher-layer signaling using an RRC parameter (for example, *PMIReportingEnabled*). In addition, any combination of these configurations can be used. This embodiment entails full configurability.

In another alternative embodiment, only partial configurability is supported. For example, only the CSI parameters associated with one of the two *eMIMO-Types* can be enabled or disabled via higher-layer signaling using a single or separate RRC parameters.

Or only one or some of the CSI parameters associated with one of the two *eMIMO-Types* can be enabled or disabled via higher-layer signaling using a single RRC parameter (that is, one RRC parameter disabling or enabling the pertinent RRC parameters) or separate RRC parameters. As an example, when the first *eMIMO-Type* is set to be 'CLASS A'/'nonPrecoded', CQI, RI, and/or $i_2$ can be enabled or disabled using a single RRC parameter (that is, one RRC parameter disabling or enabling the three parameters) or separate RRC parameters (either three separate RRC parameters each enabling/disabling one CSI parameter, or one RRC parameter for enabling/disabling CQI and $i_2$ while the other RRC parameter for enabling/disabling RI). In this case, $i_1$ (which can include either one index or two components ($i_{1,1}$ and $i_{1,2}$)) reporting is performed for the first *eMIMO-Type.* Or, when the first *eMIMO-Type* is set to be 'CLASS A'/'nonPrecoded', CQI and/or $i_2$ can be enabled or disabled using a single RRC parameter (that is, one RRC parameter disabling or enabling the two parameters) or two separate RRC parameters (two RRC parameters, one RRC parameter for enabling/disabling CQI while the other RRC parameter for enabling/disabling $i_2$). In this case, RI and $i_1$ (which can include either one index or two components ($i_{1,1}$ and $i_{1,2}$)) reporting are performed for the first *eMIMO-Type.* In addition, any combination of these configurations can be used.

In a sixth embodiment, with configurable two CSI processes with two eMIMO-Types, a UE can be configured with two CSI processes where each CSI process is associated with one *eMIMO-Type.* Furthermore, a first CSI-RS resource (or CSI-RS resource configuration) and a second CSI-RS resource (or CSI-RS resource configuration) are associated with the first and the second CSI process, respectively. Each of the two *eMIMO-Types* can be configured separately as either 'CLASS A'/'nonPrecoded' or 'CLASS B'/'beamformed'. When one of these two *eMIMO-Types* is assigned as 'CLASS B'/'beamformed', it can be associated with one or a plurality of CSI-RS resources (or CSI-RS resource configurations). Alternatively, any of the two *eMIMO-Types* can be configured with a new type such as 'CLASS C' or 'CLASS D'.

For this embodiment, for each of the two *eMIMO-Types,* CQI reporting can be enabled or disabled via higher-layer signaling using an RRC parameter (for example, *CQIReportingEnabled*). Likewise, RI reporting can be enabled or disabled via higher-layer signaling using an RRC parameter (for example, *RIReportingEnabled*). Likewise, for an *eMIMO-*

*Type* where two PMI values ($i_1$ and $i_2$) are reported, each of the two PMI values can be enabled or disabled via higher-layer signaling using an RRC parameter (for example, *i1ReportingEnabled* and *i2ReportingEnabled*). When the first PMI value $i_1$ includes two components ($i_{1,1}$ and $i_{1,2}$), each of these two PMI components can be enabled or disabled via higher-layer signaling using an RRC parameter (for example, *i11ReportingEnabled* and *i12ReportingEnabled*). For an *eMIMO-Type* where one PMI value ($i$) are reported, the PMI value can be enabled or disabled via higher-layer signaling using an RRC parameter (for example, *PMIReportingEnabled*). This embodiment entails full configurability.

In another alternative embodiment, only partial configurability is supported. For example, only the CSI parameters associated with one of the two *eMIMO-Types* can be enabled or disabled via higher-layer signaling using a single or separate RRC parameters.

Or only one or some of the CSI parameters associated with one of the two *eMIMO-Types* can be enabled or disabled via higher-layer signaling using a single RRC parameter (that is, one RRC parameter disabling or enabling the pertinent RRC parameters) or separate RRC parameters. As an example, when the first *eMIMO-Type* is set to be 'CLASS A'/'nonPrecoded', CQI, RI, and/or $i_2$ can be enabled or disabled using a single RRC parameter (that is, one RRC parameter disabling or enabling the three parameters) or separate RRC parameters (either three separate RRC parameters each enabling/disabling one CSI parameter, or one RRC parameter for enabling/disabling CQI and $i_2$ while the other RRC parameter for enabling/disabling RI). In this case, $i_1$ (which can include either one index or two components ($i_{1,1}$ and $i_{1,2}$)) reporting is performed for the first *eMIMO-Type*. Or, when the first *eMIMO-Type* is set to be 'CLASS A'/'nonPrecoded', CQI and/or $i_2$ can be enabled or disabled using a single RRC parameter (that is, one RRC parameter disabling or enabling the two parameters) or two separate RRC parameters (two RRC parameters, one RRC parameter for enabling/disabling CQI while the other RRC parameter for enabling/disabling $i_2$). In this case, RI and $i_1$ (which can include either one index or two components ($i_{1,1}$ and $i_{1,2}$)) reporting are performed for the first *eMIMO-Type*. In addition, any combination of these configurations can be used.

In a seventh embodiment, dedicated CSI-RS resource for RI reporting, analogous to the first and the second embodiments where at least one periodic RI is reported in a separate set of subframes from the other CSI parameters, another (dedicated) CSI-RS resource or resource configuration can be allocated for a UE for RI calculation. This CSI-RS resource can be configured with lower time and/or frequency resolution. This CSI-RS resource can be associated with another (dedicated) CSI process or a same CSI process as one of the other CSI parameters.

For the second component of the present disclosure (that is, codebook design), for the above schemes of the sub-embodiments of the first and the third embodiments where the first *eMIMO-Type* is 'CLASS A'/'nonPrecoded', the second *eMIMO-Type* is 'CLASS B'/'beamformed' with one CSI-RS resource (or resource configuration), and $i_1$ (the first PMI value, which can include $i_{1,1}$ and $i_{1,2}$) is reported as a part of the CSI report associated with 'CLASS A'/'nonPrecoded' *eMIMO-Type,* a codebook or codebooks can be used to define the first PMI value $i_1$. Several alternatives of the codebook or codebooks for the first PMI value $i_1$ associated with 'CLASS A'/'nonPrecoded' *eMIMO-Type* are given as follows.

A first alternative is to use the codebooks associated with the RI values supported by a UE. For example, if a UE is capable of receiving and decoding up to 8-layer DL transmission, the codebooks associated with $RI \in \{1,2,3,4,5,6,7,8\}$ are applicable. Codebook subset restriction can additionally be applied to configure the UE to calculate CSI only based on a subset of the applicable RI values. In this case, the first PMI value $i_1$ can be calculated conditioned on the last reported RI associated with either the first *eMIMO-Type* (if RI reporting is performed or configured for the first *eMIMO-Type)* or the second *eMIMO-Type* (if RI reporting is performed or configured only for the second *eMIMO-Type).* For P-CSI, this corresponds to the last reported periodic RI. For A-CSI, this corresponds to the RI reported together with the other (triggered/requested) CSI parameters.

Some more examples are as follows. In a first example, if $RI^{(1)}$ reporting is performed or configured only for the first *eMIMO-Type,* then the first PMI, the second PMI, and CQI correspond to the reported $RI^{(1)}$ in the first *eMIMO-Type*. In a second example, if $RI^{(2)}$ reporting is performed or configured only for the second *eMIMO-Type,* then the first PMI, the second PMI, and CQI correspond to the reported $RI^{(2)}$ in the second *eMIMO-Type*. In a third example, if $RI^{(1)}$ and $RI^{(2)}$ reporting are performed or configured for both the first and the second *eMIMO-Types,* then the second PMI, and CQI correspond to the rank ($RI^{(2)}$) according to one of the following alternatives. Alt 0: $I^{(1)} = RI^{(2)}$; Alt 1: $RI^{(2)} \in [RI^{(1)} - a, RI^{(1)} + b]$ where $(a,b) = (0,1)$ if RI is odd and $(a,b) = (1,0)$ otherwise; and Alt 2: $1 \leq RI^{(2)} \leq RI^{(1)}$.

The above first codebook alternative is applicable to the schemes of the sub-embodiments of the first and the third embodiments.

A second alternative is to use the codebook(s) associated with only one RI value. For example, only codebook(s) associated with RI=1 are used for CSI calculation associated with the first *eMIMO-Type*. In such cases, RI reporting is not needed for the first *eMIMO-Type.* For the first *eMIMO-Type,* the UE calculates first PMI value $i_1$ conditioned on RI=1 (conditioned on transmission rank one). This second codebook alternative is applicable to the following schemes of the sub-embodiments of the first and the third embodiments: Schemes 2 or 3 of sub-embodiment 1 of embodiment 1; Schemes 2B or 3B of sub-embodiment 2 of embodiment 1; Schemes 3.1 of sub-embodiment 1 of embodiment 3; Schemes 3.4 of sub-embodiment 2 of embodiment 3.

A third alternative is to use the codebooks associated with a subset of the RI values supported by a UE. For example, if a UE is capable of receiving and decoding up to 8-layer DL transmission, only the codebooks associated with $RI \in \{1,3,5,7\}$ are applicable. Or if a UE is capable of receiving and decoding up to 8-layer DL transmission, only the codebooks associated with $RI \in \{1,3\}$ are applicable. Or if a UE is capable of receiving and decoding up to 8-layer DL transmission, only the codebooks associated with $RI \in \{1,5\}$ are applicable. Or if a UE is capable of receiving and decoding up to 8-layer DL transmission, only the codebooks associated with $RI \in \{3,7\}$ are applicable. Or if a UE is capable of receiving and decoding up to 8-layer DL transmission, only the codebooks associated with $RI \in \{1,7\}$ are applicable. In another example, if a UE is capable of receiving and decoding up to 4-layer DL transmission, only the codebooks associated with $RI \in \{1,3\}$ are applicable. Or if a UE is capable of receiving and decoding up to 4-layer DL transmission, only the codebooks associated with $RI \in \{1\}$ are applicable. Or if a UE is capable of receiving and decoding up to 4-layer DL transmission, only the codebooks associated with $RI \in \{3\}$ are applicable. In another example, if a UE is capable of receiving and decoding up to 2-layer DL transmission, only the codebooks associated with $RI \in \{1\}$ (reduced to the second alternative) are applicable. These examples are motivated by the redundancies in the set of first-stage precoders (associated with the first PMI value $i_1$) between RI=1 and 2 (at most 1 orthogonal beam within a group of beams), RI=3 and 4 (at most 2 orthogonal beams within a group of beams), RI=5 and 6 (at most 3 orthogonal beams within a group of beams), as well as RI=7 and 8 (at most 4 orthogonal beams within a group of beams). By removing such redundancies, the number of bits required for RI reporting of the first *eMIMO-Type* can be reduced by one bit. Or if the number of RI bits is unchanged, RI decoding performance at the eNB can be improved.

For this third alternative, therefore, an RI report is interpreted based on the set of rank-specific applicable codebooks. For example, if a UE is capable of receiving and decoding up to 8-layer DL transmission and the codebooks associated with $RI \in \{1,3,5,7\}$ are applicable, a two-bit RI report can be used. In this case, when the decimal equivalent of the bit sequence associated with the last (most recent) RI report is 0, the reported first PMI component $i_1$ refers to a codebook associated with rank-1 or 1-layer. When the decimal equivalent of the bit sequence associated with the last (most recent) RI report is 1, the reported first PMI component $i_1$ refers to a codebook associated with rank-3 or 3-layer. When the decimal equivalent of the bit sequence associated with the last (most recent) RI report is 2, the reported first PMI component $i_1$ refers to a codebook associated with rank-5 or 5-layer. When the decimal equivalent of the bit sequence associated with the last (most recent) RI report is 3, the reported first PMI component $i_1$ refers to a codebook associated with rank-7 or 7-layer. Or if a UE is capable of receiving and decoding up to 8-layer DL transmission and the codebooks associated with $RI \in \{1,3\}$ are applicable, a one-bit RI report can be used. In this case, when the decimal equivalent of the bit sequence associated with the last (most recent) RI report is 0, the reported first PMI component $i_1$ refers to a codebook associated with rank-1 or 1-layer. When the decimal equivalent of the bit sequence associated with the last (most recent) RI report is 1, the reported first PMI component $i_1$ refers to a codebook associated with rank-3 or 3-layer.

The above third codebook alternative is especially applicable to the following schemes of the sub-embodiments of the first and the third embodiments where the UE is configured with RI reporting for both the first and the second *eMIMO-Type:* Schemes 5, 6, or 7 of sub-embodiment 2 of embodiment 1; Schemes 5B, 6B, or 7B of sub-embodiment 3 of embodiment 1; Schemes 3.2 of sub-embodiment 1 of embodiment 3; Schemes 3.5 of sub-embodiment 2 of embodiment 3.

All the above embodiments pertain to the utilization of two eMIMO-Type settings. The following embodiments pertain to the utilization of multiple eMIMO-Type settings for supporting transmissions with large number of antenna elements. This can be done via CSI-RS "subsampling" implemented via multiple CSI-RS resources per CSI process with some additional signaling supports.

As the maximum number of CSI-RS ports is increased, for instance in case of NP CSI-RS, the amount of overhead for CSI-RS becomes excessive. With the current LTE specification, the maximum number of REs per PRB which can be allocated for CSI-RS is 40. If the CSI-RS ports are transmitted within one PRB and one subframe (implying 1 RE/PRB CSI-RS density), only 40 antenna ports can be supported. To support more than 40 ports and, at the same time, reduce the amount of CSI-RS overhead, subsampling in time, frequency, and/or beam (antenna port) domains can be used. But introducing CSI-RS subsampling in the current specification can prove inefficient and challenging.

Therefore, there is a need to introduce a support for more than 40 antenna ports in a manner compatible with the current Rel. 13 LTE specification.

For the above purposes, embodiments of the present disclosure includes at least two components. The first component pertains to the use of a plurality of CSI-RS resources per CSI process to support CSI-RS subsampling. The second component pertains to DL and UL signaling support.

For the first component, to support a large number of CSI-RS ports with subsampling (time, frequency, and/or spatial domains) in a given CSI process, a plurality of K non-zero-power (NZP) CSI-RS resource per CSI process are configured by an eNB for a UE. Each of the K CSI-RS resources is used for a subset of CSI-RS entities (whether in time, frequency, or spatial/port domains). At least four embodiments exist.

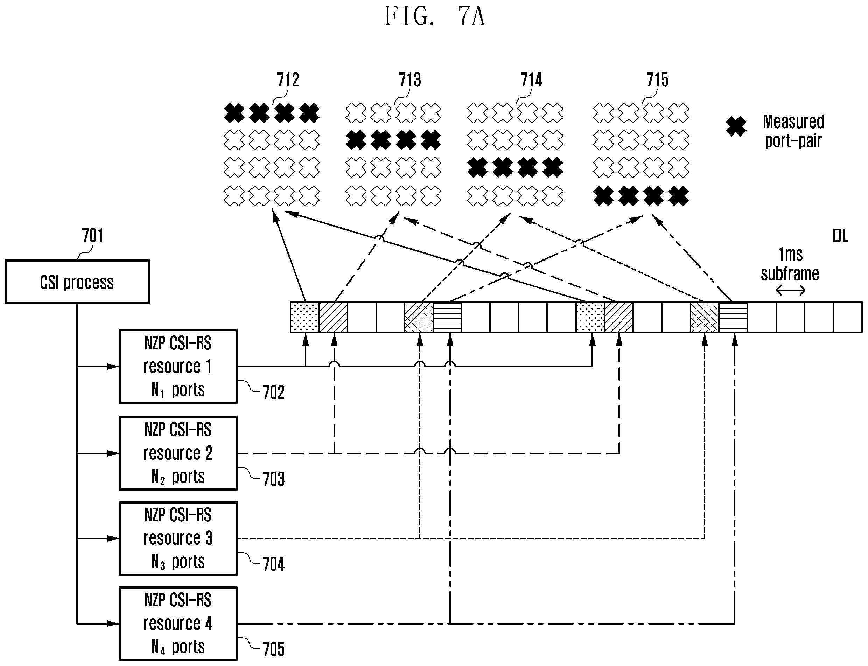

In a first embodiment (termed the time-port scheme), an eNB configures a UE with K CSI-RS resources wherein for a given CSI-RS-carrying subframe, only a subset of possible CSI-RS antenna ports is measured by the UE. This subset of antenna ports is associated with only one of the K CSI-RS resources. Alternatively, a few CSI-RS resources (for example, $K'<K$ resources) can also be used. This first embodiment can be illustrated in FIGURE 7A wherein a UE is configured with one CSI process 701 which includes K=4 NZP CSI-RS resources (701, 702, 703, and 704). In this example embodiment, each CSI-RS resource is assigned a distinct subframe offset and associated with a size-8 subset of the possible 32 ports (712, 713, 714, and 715, respectively). That is, $N_1=N_2=N_3=N_4=8$ in this case. While the choice of subset can be transparent to the UE, the UE knows which of the 4 CSI-RS resources it measures at a given subframe based on the CSI-RS resource configuration information. As the UE measures the k-th (k=1, 2, 3, 4) 8-port CSI-RS resource, it calculates and reports CSI. Two possible UE behaviors for CSI calculation and reporting can be perceived. First, the UE calculates and reports an 8-port CSI associated with only the k-th CSI-RS resource. In this behavior, four disjoint 8-port CSI calculations and reports are made. The UE assumes an 8-port codebook for each CSI-RS resource. Second, the UE calculates and reports a 32-port CSI associated with the most recent k-th CSI-RS resource along with the previously measured k'-th CSI-RS where $k \neq k'$. In this case, the UE combines at least the 4 most recent CSI-RS measurements and CSI calculations to generate a 32-port CSI reports. The UE assumes a 32-port codebook for the composite 32-port CSI-RS (composed from aggregating four CSI-RS resources). For either UE behavior, the index of CSI-RS resource can either be explicitly reported by the UE (via an UL control channel either as a separate UCI parameter or a part of CSI reporting) or implicitly inferred from CSI-RS resource configuration info available at the eNB.

For this embodiment, K CSI-RS resources are used to cover the possible CSI-RS ports. If there is no overlap between two CSI-RS resources (that is, the two CSI-RS resource configurations share at least one common CSI-RS port

$$\sum_{K=1}^{K} N_k$$

number/index), the total number of distinct CSI-RS ports that can be supported is . Alternatively, overlap among some of the port number(s) across at least two of K CSI-RS resources can be configured as well. For example, one CSI-RS resource can be configured with port numbers {15, 16, 17, 18, 19, 20, 21, 23} while another with {15, 17, 19, 21, 23, 25, 27, 29}.

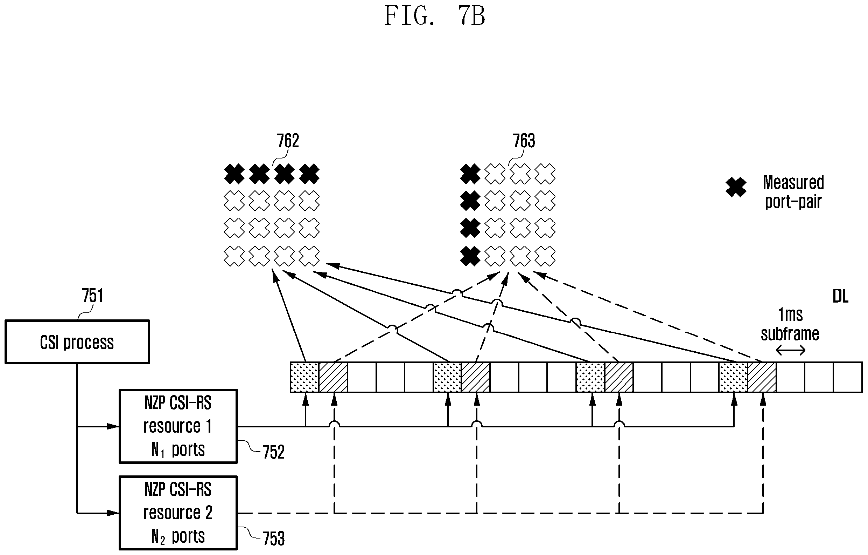

Alternatively, for 2D rectangular antenna port arrays, K=2 CSI-RS resources associated with vertical and horizontal dimensions can be configured for a UE. The UE measures these two CSI-RS resources and reports two CSIs, one for the horizontal dimension, the other one for the vertical dimension. The eNB can approximate the CSI associated with the 2D port array by taking the Kronecker product of the first CSI (or its component) and the second CSI (or its component). This embodiment is described in FIGURE 7B wherein a UE is configured with one CSI process 751 which includes K=2 NZP CSI-RS resources (751 and 752). In this example, each CSI-RS resource is assigned a distinct subframe offset and associated with a size-8 subset for each of the two dimensions (762 and 763, respectively). Each of these two CSI-RS resources is associated with a one-dimensional dual-polarized linear port array. That is, $N_1=N_2=8$ but $N_1+N_2=16$ is less than the total number of distinct CSI-RS ports (=32).

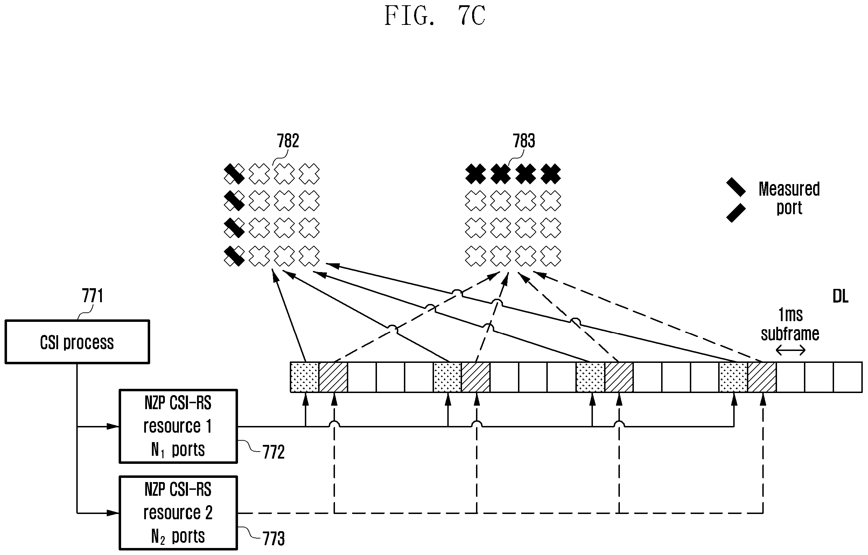

Alternatively, as illustrated in FIGURE 7C, one of these two CSI-RS resources can be associated with a one-dimensional single-polarized linear port array. That is, $N_1=4, N_2=8$ or $N_1=8, N_2=4$ but $N_1+N_2=12$ is less than the total number of distinct CSI-RS ports (=32). In this embodiment, a UE is configured with one CSI process 771 which includes K=2 NZP CSI-RS resources (772 and 773). In this example, each CSI-RS resource is assigned a distinct subframe offset and associated with a size-8 subset for each of the two dimensions (782 and 783, respectively). Analogous to the previous embodiment, two possible UE behaviors can be perceived. First, the UE calculates and reports an $N_k$-port CSI associated with only the k-th CSI-RS resource. In this behavior, two disjoint $N_k$-port CSI calculations and reports are made. Second, the UE calculates and reports a 32-port CSI associated with the most recent k-th CSI-RS resource along with the previously measured k'-th CSI-RS where $k \neq k'$. In this case, the UE combines at least the 2 most recent CSI-RS measurements and CSI calculations to generate a 32-port CSI reports. For either UE behavior, the index of CSI-RS resource can either be explicitly reported by the UE (via an UL control channel either as a separate UCI parameter or a part of CSI reporting) or implicitly inferred from CSI-RS resource configuration info available at the eNB. In the example embodiments illustrated in FIGUREs 7B and 7C, some overlap in the configured port numbers can occur between the two configured CSI-RS resources.

In a second embodiment (termed the time-frequency scheme), an eNB configures a UE with K CSI-RS resources wherein for a given CSI-RS-carrying subframe, possible CSI-RS antenna ports are measured by the UE. But within each of the CSI-RS-carrying subframes, only a subset of possible CSI-RS REs in frequency domain is measured. One subset of REs is associated with only one of the K CSI-RS resources. Alternatively, a few CSI-RS resources (for example, $K' < K$ resources) can also be used.

In a third embodiment (termed the frequency-port scheme), an eNB configures a UE with K CSI-RS resources wherein for a given CSI-RS-carrying subframe, possible CSI-RS antenna ports are measured by the UE. But within a given PRB or PRB group, only a subset of CSI-RS antenna ports is measured within a given PRB or PRB group (or in general, a set of REs). One subset of CSI-RS antenna ports in a given PRB or PRB group is associated with only one of the K CSI-RS resources. Alternatively, a few CSI-RS resources (for example, $K' < K$ resources) can also be used.

A fourth embodiment (termed the time-frequency-port scheme) is a combination of the previous three embodiments. Here, an eNB configures a UE with K CSI-RS resources wherein for a given CSI-RS-carrying subframe, possible CSI-RS antenna ports are measured by the UE. But within each of the CSI-RS-carrying subframes and a given PRB or PRB group, only a subset of CSI-RS antenna ports is measured. This subset of CSI-RS antenna ports and REs are associated with only one of the $K$ CSI-RS resources. Alternatively, a few CSI-RS resources (for example, $K'<K$ resources) can also be used.

For the second component, to facilitate the above CSI-RS subsampling based on configuring a UE with a plurality of ($K$) CSI-RS resources, some DL and/or UL signaling support need to be introduced. Several alternative embodiments are possible.

In a first embodiment, an eNB can configure a UE to report a CSI for each of the $K$ configured CSI-RS resources via a DL signaling either semi-statically (via RRC signaling - embodiment 1A) or dynamically (via L1 control channel - embodiment 1B). An example of semi-static signaling is an RRC parameter which configures the UE to measure each of the $K$ CSI-RS resources according to a predetermined pattern (such as a simple consecutive pattern/sequence {0,1, ..., $K$-1}) and consecutively reports a CSI for each of the $K$ CSI-RS resources. This parameter can be a flag which takes value from {TRUE, FALSE}. When this parameter is TRUE, the UE calculates and reports a CSI as the UE measures each of the $K$ CSI-RS resources consecutively (according to the predetermined pattern). That is, as the UE measures the $k$-th CSI-RS resource, the UE reports a $k$-th CSI associated with this CSI-RS resource. This example applies especially for periodic CSI reporting. An example of dynamic signaling is to utilize an UL grant to request/trigger CSI report. In this case, the associated CSI request field includes a requested CSI-RS resource index or set of CSI-RS resource indices. Along with CSI-RS resource configuration information, the UE measures the CSI-RS resource indicated in the CSI request field of the UL grant and reports its associated CSI.

In a second embodiment (embodiment 2), an eNB can configure a UE to report a CSI for each of the $K$ configured CSI-RS resources via a DL signaling semi-statically (via RRC signaling). Instead of utilizing DL signaling to indicate a CSI-RS resource index to be measured by the UE, the eNB can utilize an RRC parameter (a flag) which takes value from {TRUE, FALSE}. When this parameter is TRUE, the UE calculates and reports a CSI as the UE measures a CSI-RS resource of its choice. This CSI report includes CRI (CSI-RS resource indicator) which points to the measured CSI-RS resource. In this case, the UE can cycle across the $K$ configured CSI-RS resources (or a subset of the $K$ configured CSI-RS resources thereof) and report CSI for each of those resources. The corresponding CSI-RS resource for a given CSI reporting instance is indicated by the last reported periodic CRI (for periodic CSI reporting) or the reported CRI within the same reporting subframe (especially for aperiodic CSI reporting).

For either of these two embodiments, upon receiving the $K$ consecutive CSI reports, the eNB can process the incoming CSI reports to estimate the CSI associated with the larger port array. The above two embodiments can be summarized in TABLE 5.

[Table 5]

| Signaling support to enable CSI-RS subsampling with K>1 CSI-RS resources per CSI process | | | |
|---|---|---|---|
| Signaling embodiment | Parameter(s) to be signaled to UE | | |
| | Embodiment 1A | Embodiment 1B | Embodiment 2 |
| Higher-layer (RRC) signaling | Flag to enable K consecutive CSI reports, can also (optionally) include a sequence of CSI-RS resource indices | n/a | Flag to enable K consecutive CSI reports |
| L1 signaling | n/a | Via DLL1 control channel: Trigger in UL grant, can contain one CSI-RS resource index or a plurality of CSI-RS resource indices | Via UL control channel: CRI included in each CSI report or a subset of all CSI reports |

For the above embodiments, for the $k$-th configured CSI-RS resource ($k$=1,2, ..., $K$), a UE reports a CSI associated with $N_k$-port. The content of the CSI report associated with the $k$-th configured CSI-RS resource can include the relevant CSI parameters or only a subset of the relevant CSI parameters. In addition, the content of CSI report associated with the $k$-th CSI-RS resource can be different from the content of CSI report associated with the $k'$-th CSI-RS resource ($k' \neq k$). Examples of the content of a CSI report is CQI+RI+ $i_1$ (which can include $i_{1,1}$ and $i_{1,2}$)+$i_2$, RI+$i_1$ (which can include $i_{1,1}$ and $i_{1,2}$), $i_1$ only (which can include $i_{1,1}$ and $i_{1,2}$), RI+ $i_{1,1}$, $i_{1,1}$ only, RI+$i_{1,2}$, $i_{1,2}$ only, RI+$i_2$, $i_2$ only, CQI+RI (for CSI reporting without PMI), CQI+ $i_1$ (which can include $i_{1,1}$ and $i_{1,2}$)+$i_2$ (when RI reporting is not configured such as for MTC), or CQI only (when RI and PMI reporting are not configured).

In an example embodiment along the line of FIGURE 7C and partial CSI reporting described in the previous paragraph, assuming an example setup of $N_1$=4,$N_2$=8, the UE can be configured to report $i_{1,1}$ without CQI associated with the first CSI-RS resource (with $N_1$=4) and assuming a 32-port dual-stage codebook (with PMI values of $i_1$ including $i_{1,1}$ and $i_{1,2}$, and $i_2$). In addition, the UE can be configured to report $i_{1,2}$ without CQI associated with the second CSI-RS resource (with $N_2$=8) and assuming the same 32-port dual-stage codebook (with PMI values of $i_1$ including $i_{1,1}$ and $i_{1,2}$, and $i_2$). Either one of the two CSI reports or both CSI reports can be reported with or without RI. If only one of the two CSI reports (labelled as CSI report A) contains an RI, the other CSI report (termed CSI report B) associated with the other CSI-RS resource is calculated conditioned on the RI from CSI report A. If each of the two CSI reports contains an RI, the two values of RI can be determined independently or set the same (for example, by setting one of CSI-RS resources as a reference for RI reporting).

Alternatively, the CSI calculation associated with the first CSI-RS resource (with $N_1$=4) can assume a 4-port one-dimensional codebook. The choice of codebook can be either single-stage codebook designed for single-polarized array (hence associated with a single PMI) or dual-stage codebook designed for dual-polarized array (hence associated with two PMI values and only a first PMI value $i_1$ is reported). The CSI calculation associated with the second CSI-RS resource (with $N_2$=8) can assume an 8-port one-dimensional codebook. The choice of codebook can be a dual-stage codebook designed for dual-polarized array (hence associated with two PMI values and only a first PMI value $i_1$ is reported).

The above example embodiments (along the line of FIGURE 7C and partial CSI reporting) can be used to facilitate the eNB to obtain precoding information for the purpose of UE-specific beamforming on CSI-RS. Any of these embodiments can be used in conjunction with CLASS B *eMIMO-Type* with one CSI-RS resource. In this case, one CSI process is configured with three NZP CSI-RS resources wherein two resources are utilized for the UE to report two partial CSI reports described above and one resource for CLASS B *eMIMO-Type* with one CSI-RS resource (where the UE reports CQI+PMI+RI).

To configure a UE with a plurality of ($K$>1) CSI-RS resources within one CSI process for CSI-RS subsampling, at least one of the following components in the current LTE specification (Rel.13) can be utilized. This is especially relevant for the first subsampling embodiment (termed the time-port scheme). But it can be readily extended to the other three subsampling embodiments for those skilled in the art.

First, the RRC parameter *eMIMO-Type* (REF5), which takes value from *CSI-RS-ConfigEMIMO,* is set to 'beamformed' in REF5 which is equivalent to *eMIMO-Type* of 'CLASS B' in REF3. Alternatively, instead of utilizing 'beamformed'/'CLASS B' *eMIMO-Type,* a new *eMIMO-Type* can be defined for this purpose. For example, a new type called 'CLASS B-2' can be defined. Alternatively, this utilization can be considered as a variation of 'CLASS A' *eMIMO-Type* if one composite CSI is reported for the $K$ configured CSI-RS resources. Second, *CSI-RS-ConfigNZPIdListExt* (a list of $K$ - 1 NZP CSI-RS resource indices) is to be configured in the field *CSI-RS-ConfigBeamformed* in addition to *CSI-RS-ConfigNZPId* in the *CSI-Process* configuration. This is to add ($K$ - 1) additional NZP CSI-RS resources to the default one within the *CSI-Process* configuration. Third, channel and interference measurement restrictions (MRs) are configured and turned ON. This is done to avoid a UE from performing time interpolation across different CSI-RS resources. Fourth, as previously mentioned pertaining to TABLE 5, several example signaling schemes which do not necessarily preclude each other are possible. A first signaling scheme is to define a new RRC parameter which is a flag to enable a UE to measure $K$ consecutive CSI-RS resources (such as *AlternativeBeamformedKnaEnabled* $\in$ {TRUE, FALSE}). A second signaling scheme is to define a new RRC parameter which indicates a sequence of preconfigured CSI-RS resource indices (for the UE to measure and calculate CSI from). A third signaling scheme, which applies only to P-CSI reporting, is to use some of the reserved fields in *cri-ConfigIndex* of *cri-ReportConfig* in REF5 which is equivalent to $I_{CRI}$ in REF3.

For example, the first and second schemes are pertinent to embodiment 1A of TABLE 3. The first and third schemes are pertinent to signaling embodiment 2 of TABLE 5.

In an example embodiment for the third scheme, TABLE 7.2.2-1D in REF3]can be extended as shown in TABLE 6A. The first seven values of $I_{CRI}$ are used when CRI is reported by a UE. This set of $I_{CRI}$ values is used both for Rel. 13 'CLASS B'/'beamformed' *eMIMO-Type* with a plurality of CSI-RS resources (wherein the UE reports CRI together with CQI/PMI/RI when PMI is reported, or CQI/RI when PMI is not reported, or CQI for one-port CSI-RS assuming the recommended CSI-RS resource index from the CRI report) and embodiment 2 in TABLE 5. The last seven values of $I_{CRI}$ are used when CRI is preconfigured for and hence not reported by a UE (for example, used in combination with the above first or second scheme, or embodiments 1A and 1B in TABLE 5).

[Table 6A]

| Extension to Table 7.2.2-1D of REF3: Mapping of $I_{CRI}$ to $M_{CRI}$ when RI reporting is configured | | |
|---|---|---|
| $I_{CRI}$ | **Value of $M_{CRI}$** | **CRI mode** |
| 0 | 1 | *UE reports CRI* |
| 1 | 2 | |
| 2P | 4 | |
| 3 | 8 | |
| 4 | 16 | |
| 5 | 32 | |
| 6 | 64 | |
| 7 | 128 | |
| 8 | 1 | *CRI is preconfigured. UE does not report CRI. UE reports CSI for each of the configured CSI-RS resources.* p |
| 9 | 2 | |
| 10 | 4P | |
| 11 | 8 | |
| 12 | 16 | |
| 13 | 32 | |
| 14 | 64 | |
| 15 | 128 | |
| $16 < I_{CRI} \leq 1023$ | Reserved | |

Another possible extension is shown in TABLE 6B where only one reserved value of $I_{CRI}$ is used to indicate that CRI is not reported and the UE reports CSI (including CQI/PMI/RI when PMI is reported, or CQI/RI when PMI is not reported) for each of the $K$ configured NZP CSI-RS resources. For P-CSI, each of the $K$ CSI reports is reported based on the same procedure as a CSI report associated with a single CSI-RS resource. The assumed CSI-RS resource index for each CSI reporting instance can be signaled to the UE (according to one of the embodiments in TABLE 3) or predetermined.

[Table 6B]

| Extension to Table 7.2.2-1D of REF3: Mapping of $I_{CRI}$ to $M_{CRI}$ when RI reporting is configured | | |
|---|---|---|
| $I_{CRI}$ | **Value of $M_{CRI}$** | **CRI mode** |
| 0 | 1 | *UE reports CRI* |
| 1 | 2 | |
| 2 | 4 | |
| 3 | 8 | |
| 4 | 16 | |
| 5 | 32 | |
| 6 | 64 | |
| 7 | 128 | |
| 8 | *UE does not report CRI. CSI-RS resources ( UE reports GSI for each of the configured according to a given CRI sequence).* | |
| $9 < I_{CRI} \leq 1023$ | Reserved | |

For A-CSI reporting, the first and/or second scheme can be used. In this case, CRI is not reported by the UE especially if the eNB includes a CSI-RS resource index or a set of CSI-RS resource indices in the CSI request field in the associated UL grant. Upon receiving a CSI request containing a CRI or a set of $K'(\leq K)$ CRIs in an UL grant in subframe $n$, a UE reports CSI associated with the CSI-RS resource(s) indicated CRI or the indicated set of $K'$ CRIs.

Alternatively, upon receiving a CSI request in an UL grant, a UE reports $K$ CSI reports associated with $K$ configured CSI-RS resources. In this case, a CSI request field does not contain any CSI-RS resource index.

With the above two alternatives for A-CSI reporting, when $K'(\leq K)$ CSI reports associated with $K'(\leq K)$ CSI-RS resources are reported together in one aperiodic CSI reporting instance, these CSIs can be concatenated in at least two example arrangements. A first arrangement concatenates each CSI parameter (CQI, PMI, RI, or CRI) across $K'(\leq K)$ CSI reporting units. For example: $\{CQI_0, CQI_1, ..., CQI_{K'-1}\}$, $\{PMI_0, PMI_1, ..., PMI_{K'-1}\}$, $\{RI_0, RI_1, ..., RI_{K'-1}\}$. A second arrangement concatenates CSI reporting units $K'(\leq K)$, except for RI (since RI is encoded separately from CQI and PMI). For example: $\{CQI_0, PMI_0\}, \{CQI_1, PMI_1\}, ..., \{CQI_{K'-1}, PMI_{K'-1}\}, \{RI_0, RI_1, ..., RI_{K'-1}\}$.

Fifth, for each of the $K$ CSI reports associated with one of the $K$ NZP CSI-RS resources, a codebook selection parameter or a set of codebook parameters can be used to select a codebook which is assumed for CSI calculation. This assumes that there are at least two possible codebooks or codebook sets for a given number of CSI-RS ports. This codebook parameter or set of codebook parameters specific for each CSI-RS resource can be signaled semi-statically via higher-layer (RRC) signaling. Sixth, for each of the $K$ CSI reports associated with one of the $K$ NZP CSI-RS resources, a CSI content parameter can be used to indicate the content of the CSI when partial CSI reporting is supported. For example, a two-bit CSI content parameter can indicate whether full CSI (CQI+PMI+RI) or partial CSI A (for example, RI+$i_{1,1}$) or partial CSI B (for example, RI+ $i_{1,2}$) is reported.

In addition to the two components, an alternative embodiment for CSI reporting is as follows. As aforementioned, to feedback CSI reports associated with K>1 CSI-RS resources within one CSI process, each of the $K$ or $K'$ ($\leq K$) CSI reports can be performed consecutively (one-by-one). Alternatively, it is possible to feed back the $K$ or at least a set of $K'$ ($\leq K$) CSI reports - either triggered by one CSI request for A-CSI reporting (in that case, allowing the use of A-CSI mode 1-0 or 1-1 for multiple CSI-RS resources), or reported together periodically using format 4 or 5 PUCCH.

Yet another alternative embodiment on CSI-RS subsampling using one NZP CSI-RS resource is as follows. Referring to subsampling embodiment 1 (the time-port scheme) illustrated in FIGURE 7A, 7B, or 7C, an alternative embodiment configures a UE with only one ($K$=1) NZP CSI-RS resource per CSI process while the UE is configured with 'beamformed' of *eMIMO-Type* in REF5 or 'CLASS B' of *eMIMO-Type* in REF3. Channel measurement restriction is to be configured (turned ON) as well. In this case, the eNB can configure the UE to measure different sets of CSI-RS ports across different CSI-RS-carrying subframes associated with the single NZP CSI-RS resource configuration. This alternative embodiment is UE-transparent. For example, referring to the description in FIGURE 7A, 7B, or 7C, the UE can measure each instance of CSI-RS and feedback CSI reports associated with it. The eNB, knowing with which subset of CSI-RS ports each CSI report is associated, processes the multiple 8-port CSI reporting instances to approximate a CSI associated with the 32-port array.

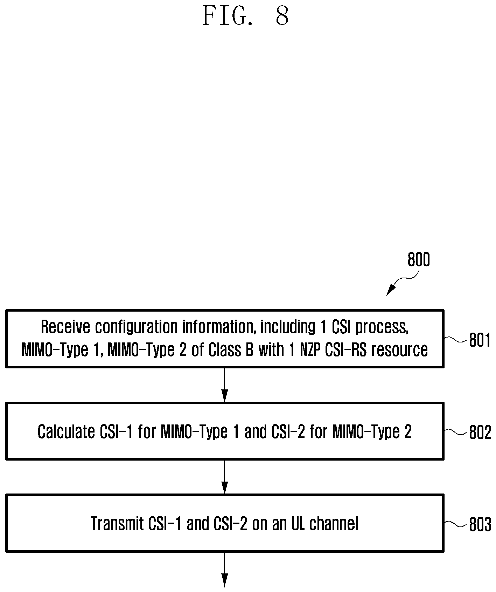

FIGURE 8 illustrates a flowchart for an example method 800 where a UE receives configuration information including one CSI process, a first MIMO Type, and a second MIMO Type according to an embodiment of the present disclosure. For example, the method 800 can be performed by the UE 116.

The method 800 begins with the UE receiving configuration information including one CSI process, a first MIMO Type, and a second MIMO Type (step 801) wherein the second MIMO Type is Class B and is associated with a single non-zero-power CSI Reference Signal (NZP CSI-RS) resource 2 of at most 8 ports (including 2, 4, or 8 antenna ports). At least two options are possible. In a first option, the first MIMO Type is Class A and is associated with a single non-zero-power (NZP) CSI-RS resource 1 of at least 8 antenna ports (including 8, 12, 16, 20, 24, 28, or 32 ports). In a second option, the first MIMO Type is Class B and is associated with multiple NZP CSI-RS resources, each resource comprising of at most 8 antenna ports (including 2, 4, or 8 ports).

In response to receipt of the configuration information, the UE calculates and reports a Channel State Information (CSI) for each of the two MIMO Types (step 802). Denoting these two CSIs as CSI-1 and CSI-2, respectively, in the first option, the CSI associated with the first MIMO Type (CSI-1), calculated in reference to the NZP CSI-RS resource 1, includes a first Precoding Matrix Indicator (PMI) $i_1$ from a codebook with at least two PMIs ($i_1, i_2$), and a Rank Indicator (RI). The RI associated with the first MIMO Type is either 1 or 3. In the second option, the CSI associated with the first MIMO Type (CSI-1) includes only a CSI-RS Resource Indicator (CRI). The CSI associated with the second MIMO Type (CSI-2), calculated in reference to the NZP CSI-RS resource 2, includes Channel Quality Indicator (CQI), PMI, and RI. The UE transmits CSI-1 and CSI-2 on an UL channel (step 803).

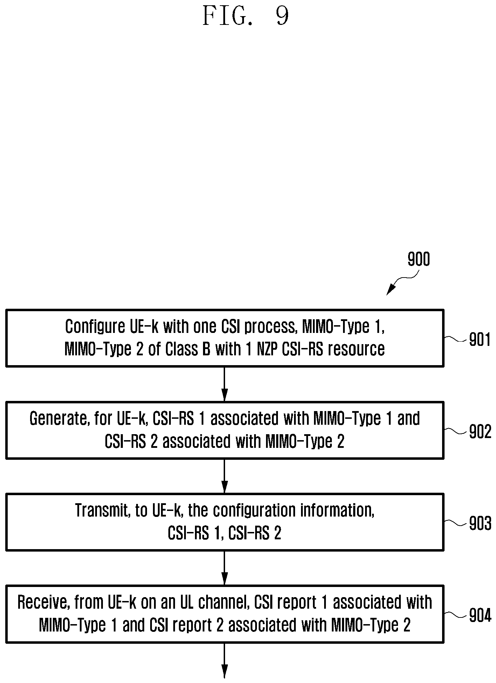

FIGURE 9 illustrates a flowchart for an example method 900 where a BS configures a UE (labeled as UE-k) with one CSI process, a first MIMO Type, and a second MIMO Type according to an embodiment of the present disclosure. For example, the method 900 can be performed by the eNB 102.

The method 900 begins with the BS configuring UE-k with one CSI process, a first MIMO Type, and a second MIMO Type (step 901) wherein the second MIMO Type is Class B and is associated with a single non-zero-power CSI Reference Signal (NZP CSI-RS) resource 2 of at most 8 ports (including 2, 4, or 8 antenna ports). At least two options are possible. In a first option, the first MIMO Type is Class A and is associated with a single non-zero-power (NZP) CSI-RS resource 1 of at least 8 antenna ports (including 8, 12, 16, 20, 24, 28, or 32 ports). In a second option, the first MIMO Type is Class B and is associated with multiple NZP CSI-RS resources, each resource comprising of at most 8 antenna ports (including 2, 4, or 8 ports). The BS also generates, for UE-k, two CSI-RSs: CSI-RS 1 associated with the first MIMO Type and CSI-RS 2 associated with the second MIMO Type (step 902). The BS transmits, to UE-k, the configuration information and the two CSI-RSs associated with the two MIMO Types (step 903).

The BS also receives a Channel State Information (CSI), from UE-k on an UL channel, for each of the two MIMO Types (step 904). Denoting these two CSIs as CSI-1 and CSI-2, respectively, in the first option, the CSI associated with the first MIMO Type (CSI-1), calculated in reference to the NZP CSI-RS resource 1, includes a first Precoding Matrix Indicator (PMI) $i_1$ from a codebook with at least two PMIs ($i_1, i_2$), and a Rank Indicator (RI). The RI associated with the first MIMO Type is either 1 or 3. In the second option, the CSI associated with the first MIMO Type (CSI-1) includes only a CSI-RS Resource Indicator (CRI). The CSI associated with the second MIMO Type (CSI-2), calculated in reference to the NZP CSI-RS resource 2, includes Channel Quality Indicator (CQI), PMI, and RI.

Although FIGURES 8 and 9 illustrate examples of methods for receiving configuration information and configuring a UE, respectively, various changes could be made to FIGURES 8 and 9. For example, while shown as a series of steps, various steps in each figure could overlap, occur in parallel, occur in a different order, occur multiple times, or not be performed in one or more embodiments.

Although the present disclosure has been described with example embodiments based on CSI process, any other entity which includes at least one CSI reporting and at least one RS for CSI measurement can be used. For instance, CSI process can be replaced with a link between a setting/configuration for CSI reporting and a setting/configuration for RS (or resource associated with or including RS) used for CSI measurement. This link can be included in a setting for CSI measurement. In this case, hybrid CSI schemes in the present disclosure can use either one link (for schemes using one CSI process with two eMIMO-Types) or two links (for schemes using two CSI processes with two eMIMO-Types).

Although the present disclosure has been described with example embodiments, various changes and modifications can be suggested by or to one skilled in the art. It is intended that the present disclosure encompass such changes and modifications as fall within the scope of the appended claims.

**Claims**

1. A terminal (116) in a wireless communication system (100), the terminal (116) comprising:

    a transceiver (310); and
    a processor (340) configured to:

       receive, from a base station (102) via the transceiver (310), a radio resource control, RRC, message including channel state information, CSI, configuration information, the CSI configuration information including a pair of a first channel state information reference signal, CSI-RS, resource configuration associated with a multiple input multiple output, MIMO, type as CLASS A and a second CSI-RS resource configuration associated with a MIMO type as CLASS B;
       receive, from the base station (102) via the transceiver (310), two CSI-RSs corresponding to the first CSI-RS resource configuration and the second CSI-RS resource configuration;
       obtain CSI associated with the first CSI-RS resource configuration and the second CSI-RS resource configuration; and

       transmit, to the base station (120) via the transceiver (310), CSI reports including the obtained CSI, and wherein, in case that a maximum number of downlink layers supported by the terminal (116) is 4 or 8, a rank indicator, RI, of the CSI associated with the first CSI-RS resource configuration is restricted as either 1 or 3.

2. A method performed by a terminal (116) in a wireless communication system (100), the method comprising:

    receiving, from a base station, a radio resource control, RRC, message including channel state information, CSI, configuration information, the CSI configuration information including a pair of a first channel state information reference signal, CSI-RS, resource configuration associated with a multiple input multiple output, MIMO, type as CLASS A and a second CSI-RS resource configuration associated with a MIMO type as CLASS B;
    receiving, from the base station, two CSI-RSs corresponding to the first CSI-RS resource configuration and the second CSI-RS resource configuration;

obtaining CSI associated with the first CSI-RS resource configuration and the second CSI-RS resource configuration; and

transmitting, to the base station, CSI reports including the obtained CSI,

wherein, in case that a maximum number of downlink layers supported by the terminal (116) is 4 or 8, a rank indicator, RI, of the CSI associated with the first CSI-RS resource configuration is restricted as either 1 or 3.

3. The terminal (116) of Claim 1 or the method of Claim 2, wherein the first CSI-RS resource configuration corresponds to a non-zero-power CSI-RS resource including at least 8 antenna ports.

4. The terminal (116) of Claim 1 or the method of Claim 2, wherein the CSI associated with the first CSI-RS resource configuration includes the RI and a first precoding matrix indicator, PMI, for the first CSI-RS resource configuration, and

wherein the first PMI is determined based on the RI.

5. The terminal (116) of Claim 1 or the method of Claim 2, wherein the CSI associated with the second CSI-RS resource configuration includes a channel quality indicator, CQI, for the second CSI-RS resource configuration.

6. The terminal (116) of Claim 1 or the method of Claim 2, wherein the MIMO type as CLASS A corresponds to a non-precoded CSI-RS which is cell-specific, and

wherein the MIMO type as CLASS B corresponds to a beamformed CSI-RS which is cell-specific or terminal-specific.

7. The terminal of Claim 1 or the method of Claim 2, wherein in case that the CSI is triggered via a CSI request field included in downlink control information, DCI, either the CSI associated with the first CSI-RS resource configuration or the CSI associated with the second CSI-RS resource configuration is triggered based on configuration associated with the CSI request field.

8. A base station (102) in a wireless communication system (100), the base station (102) comprising:

a transceiver (372a-372n); and
a processor (378) configured to:

transmit, to a terminal (116) via the transceiver (372a-372n), a radio resource control, RRC, message including channel state information, CSI, configuration information, the CSI configuration information including a pair of channel state information reference signal, CSI-RS, resource configuration associated with a multiple input multiple output, MIMO, type as CLASS A and a second CSI-RS resource configuration associated with a MIMO type as CLASS B;

transmit, to the terminal (116) via the transceiver (372a-372n), two CSI-RSs corresponding to the first CSI-RS resource configuration and the second CSI-RS resource configuration; and

receive, from the terminal (116) via the transceiver (372a-372n), CSI reports including the CSI associated with the first CSI-RS resource configuration and the second CSI-RS resource configuration,

wherein, in case that a maximum number of downlink layers supported by the terminal (116) is 4 or 8, a rank indicator, RI, of the CSI associated with the first CSI-RS resource configuration is restricted as either 1 or 3.

9. A method performed by a base station (102) in a wireless communication system (100), the method comprising:

transmitting, to a terminal (116), a radio resource control, RRC, message including channel state information, CSI, configuration information, the CSI configuration information including a pair of channel state information reference signal, CSI-RS, resource configuration associated with a multiple input multiple output, MIMO, type as CLASS A and a second CSI-RS resource configuration associated with a MIMO type as CLASS B;

transmitting, to the terminal (116), two CSI-RSs corresponding to the first CSI-RS resource configuration and the second CSI-RS resource configuration; and

receiving, from the terminal (116), CSI reports including the CSI associated with the first CSI-RS resource configuration and the second CSI-RS resource configuration,

wherein, in case that a maximum number of downlink layers supported by the terminal (116) is 4 or 8, a rank indicator, RI, of the CSI associated with the first CSI-RS resource configuration is restricted as either 1 or 3.

10. The base station (102) of Claim 8 or the method of Claim 9, wherein the first CSI-RS resource configuration corresponds to a non-zero-power CSI-RS resource including at least 8 antenna ports.

11. The base station (102) of Claim 8 or the method of Claim 9, wherein the CSI associated with the first CSI-RS resource configuration includes the RI and a first precoding matrix indicator, PMI, for the first CSI-RS resource configuration, and
wherein the first PMI is determined based on the RI.

12. The base station (102) of Claim 8 or the method of Claim 9, wherein the CSI associated with the second CSI-RS resource configuration includes a channel quality indicator, CQI, for the second CSI-RS resource configuration.

13. The base station (102) of Claim 8 or the method of Claim 9, wherein the MIMO type as CLASS A corresponds to a non-precoded CSI-RS which is cell-specific, and
wherein the MIMO type as CLASS B corresponds to a beamformed CSI-RS which is cell-specific or terminal-specific.

14. The base station (102) of Claim 8 or the method of Claim 9, wherein in case that the CSI is triggered via a CSI request field included in downlink control information, DCI, either the CSI associated with the first CSI-RS resource configuration or the CSI associated with the second CSI-RS resource configuration is triggered based on configuration associated with the CSI request field.

**Patentansprüche**

1. Endgerät (116) in einem drahtlosen Kommunikationssystem (100), wobei das Endgerät (116) Folgendes umfasst:

einen Transceiver (310); und
einen Prozessor (340), der zu Folgendem konfiguriert ist:

Empfangen einer Radio Resource Control(RRC)-Nachricht, die Kanalzustandsinformations(CSI)-Konfigurationsinformationen enthält, über den Transceiver (310) von einer Basisstation (102), wobei die CSI-Konfigurationsinformationen ein Paar aus einer ersten Kanalzustandsinformations-Referenzsignal(CSI-RS)-Ressourcenkonfiguration, die mit einem Mehrfacheingangs-Mehrfachausgangs(MIMO)-Typ der KLASSE A assoziiert ist, und einer zweiten CSI-RS-Ressourcenkonfiguration enthalten, die mit einem MIMO-Typ der KLASSE B assoziiert ist;
Empfangen von zwei CSI-RSs, die der ersten CSI-RS-Ressourcenkonfiguration und der CSI-RS-Ressourcenkonfiguration entsprechen, über den Transceiver (310) von der Basisstation (102);
Erhalten von CSI, die mit der ersten CSI-RS-Ressourcenkonfiguration und der zweiten CSI-RS-Ressourcenkonfiguration assoziiert sind; und
Übertragen von CSI-Berichten, die die erhaltenen CSI enthalten, über den Transceiver (310) an die Basisstation (120), und

wobei, falls eine maximale Anzahl von Downlink-Schichten, die von dem Endgerät (116) unterstützt werden, 4 oder 8 beträgt, ein Ranganzeiger, RI, der CSI, die mit der ersten CSI-RS-Ressourcenkonfiguration assoziiert sind, auf entweder 1 oder 3 beschränkt ist.

2. Verfahren, das von einem Endgerät (116) in einem drahtlosen Kommunikationssystem (100) ausgeführt wird, wobei das Verfahren Folgendes umfasst:

Empfangen einer Radio Resource Control(RRC)-Nachricht, die Kanalzustandsinformations(CSI)-Konfigurationsinformationen enthält, von einer Basisstation, wobei die CSI-Konfigurationsinformationen ein Paar aus einer ersten Kanalzustandsinformations-Referenzsignal(CSI-RS)-Ressourcenkonfiguration, die mit einem Mehrfacheingangs-Mehrfachausgangs(MIMO)-Typ der KLASSE A assoziiert ist, und einer zweiten CSI-RS-Ressourcenkonfiguration enthalten, die mit einem MIMO-Typ der KLASSE B assoziiert ist;
Empfangen von zwei CSI-RSs, die der ersten CSI-RS-Ressourcenkonfiguration und der zweiten CSI-RS-Ressourcenkonfiguration entsprechen, von der Basisstation;
Erhalten von CSI, die mit der ersten CSI-RS-Ressourcenkonfiguration und der zweiten CSI-RS-Ressourcenkonfiguration assoziiert sind; und
Übertragen von CSI-Berichten, die die erhaltenen CSI enthalten, an die Basisstation,
wobei, falls eine maximale Anzahl von Downlink-Schichten, die von dem Endgerät (116) unterstützt werden, 4 oder 8 beträgt, ein Ranganzeiger, RI, der CSI, die mit der ersten CSI-RS-Ressourcenkonfiguration assoziiert sind, auf entweder 1 oder 3 beschränkt ist.

3. Endgerät (116) nach Anspruch 1 oder Verfahren nach Anspruch 2, wobei die erste CSI-RS-Ressourcenkonfiguration einer CSI-RS-Ressource mit Nicht-Null-Leistung entspricht, die mindestens 8 Antennenanschlüsse enthält.

4. Endgerät (116) nach Anspruch 1 oder Verfahren nach Anspruch 2, wobei die CSI, die mit der ersten CSI-RS-Ressourcenkonfiguration assoziiert sind, den RI und einen ersten Vorcodierungsmatrixanzeiger, PMI, für die erste CSI-RS-Ressourcenkonfiguration enthalten, und
wobei der erste PMI basierend auf dem RI bestimmt wird.

5. Endgerät (116) nach Anspruch 1 oder Verfahren nach Anspruch 2, wobei die CSI, die mit der zweiten CSI-RS-Ressourcenkonfiguration assoziiert sind, einen Kanalqualitätsanzeiger, CQI, für die zweite CSI-RS-Ressourcenkonfiguration enthalten.

6. Endgerät (116) nach Anspruch 1 oder Verfahren nach Anspruch 2, wobei der MIMO-Typ der KLASSE A einem nicht vorcodierten CSI-RS entspricht, das zellenspezifisch ist, und
wobei der MIMO-Typ der KLASSE B einem strahlenförmigen CSI-RS entspricht, das zellenspezifisch oder endgerätspezifisch ist.

7. Endgerät nach Anspruch 1 oder Verfahren nach Anspruch 2, wobei, falls die CSI über ein CSI-Anforderungsfeld ausgelöst werden, das in den Downlink-Steuerungsinformationen, DCI, enthalten ist, entweder die CSI, die mit der ersten CSI-RS-Ressourcenkonfiguration assoziiert sind, oder die CSI, die mit der zweiten CSI-RS-Ressourcenkonfiguration assoziiert sind, basierend auf der Konfiguration ausgelöst werden, die mit dem CSI-Anforderungsfeld assoziiert ist.

8. Basisstation (102) in einem drahtlosen Kommunikationssystem (100), wobei die Basisstation (102) Folgendes umfasst:

einen Transceiver (372a-372n); und
einen Prozessor (378), der zu Folgendem konfiguriert ist:

Übertragen einer Radio Resource Control(RRC)-Nachricht, die Kanalzustandsinformations(CSI)-Konfigurationsinformationen enthält, über den Transceiver (372a-372n) an ein Endgerät (116), wobei die CSI-Konfigurationsinformationen ein Paar aus einer Kanalzustandsinformations-Referenzsignal(CSI-RS)-Ressourcenkonfiguration, die mit einem Mehrfacheingangs-Mehrfachausgangs(MIMO)-Typ der KLASSE A assoziiert ist, und einer zweiten CSI-RS-Ressourcenkonfiguration enthalten, die mit einem MIMO-Typ der KLASSE B assoziiert ist;
Übertragen von zwei CSI-RSs, die der ersten CSI-RS-Ressourcenkonfiguration und der zweiten CSI-RS-Ressourcenkonfiguration entsprechen, über den Transceiver (372a-372n) an das Endgerät (116); und
Empfangen von CSI-Berichten, die die CSI enthalten, die mit der ersten CSI-RS-Ressourcenkonfiguration und der zweiten CSI-RS-Ressourcenkonfiguration assoziiert sind, über den Transceiver (372a-372n) von dem Endgerät (116),

wobei, falls eine maximale Anzahl von Downlink-Schichten, die von dem Endgerät (116) unterstützt werden, 4 oder 8 beträgt, ein Ranganzeiger, RI, der CSI, die mit der ersten CSI-RS-Ressourcenkonfiguration assoziiert sind, auf entweder 1 oder 3 beschränkt ist.

9. Verfahren, das von einer Basisstation (102) in einem drahtlosen Kommunikationssystem (100) ausgeführt wird, wobei das Verfahren Folgendes umfasst:

Übertragen einer Radio Resource Control(RRC)-Nachricht, die Kanalzustandsinformations(CSI)-Konfigurationsinformationen enthält, an ein Endgerät (116), wobei die CSI-Konfigurationsinformationen ein Paar aus einer Kanalzustandsinformations-Referenzsignal(CSI-RS)-Ressourcenkonfiguration, die mit einem Mehrfacheingangs-Mehrfachausgangs(MIMO)-Typ der KLASSE A assoziiert ist, und einer zweiten CSI-RS-Ressourcenkonfiguration enthalten, die mit einem MIMO-Typ der KLASSE B assoziiert ist;
Übertragen von zwei CSI-RSs, die der ersten CSI-RS-Ressourcenkonfiguration und der zweiten CSI-RS-Ressourcenkonfiguration entsprechen, an das Endgerät (116); und

Empfangen von CSI-Berichten, die die CSI enthalten, die mit der ersten CSI-RS-Ressourcenkonfiguration und der zweiten CSI-RS-Ressourcenkonfiguration assoziiert sind, von dem Endgerät (116),

wobei, falls eine maximale Anzahl von Downlink-Schichten, die von dem Endgerät (116) unterstützt werden, 4 oder 8 beträgt, ein Ranganzeiger, RI, der CSI, die mit der ersten CSI-RS-Ressourcenkonfiguration assoziiert sind, auf entweder 1 oder 3 beschränkt ist.

10. Basisstation (102) nach Anspruch 8 oder Verfahren nach Anspruch 9, wobei die erste CSI-RS-Ressourcenkonfiguration einer CSI-RS-Ressource mit Nicht-Null-Leistung entspricht, die mindestens 8 Antennenanschlüsse enthält.

11. Basisstation (102) nach Anspruch 8 oder Verfahren nach Anspruch 9, wobei die CSI, die mit der ersten CSI-RS-Ressourcenkonfiguration assoziiert sind, den RI und einen ersten Vorcodierungsmatrixanzeiger, PMT, für die erste CSI-RS-Ressourcenkonfiguration enthalten, und

wobei der erste PMI basierend auf dem RI bestimmt wird.

12. Basisstation (102) nach Anspruch 8 oder Verfahren nach Anspruch 9, wobei die CSI, die mit der zweiten CSI-RS-Ressourcenkonfiguration assoziiert sind, einen Kanalqualitätsanzeiger, CQI, für die zweite CSI-RS-Ressourcenkonfiguration enthalten.

13. Basisstation (102) nach Anspruch 8 oder Verfahren nach Anspruch 9, wobei der MIMO-Typ der KLASSE A einem nicht vorcodierten CSI-RS entspricht, das zellenspezifisch ist, und

wobei der MIMO-Typ der KLASSE B einem strahlenförmigen CSI-RS entspricht, das zellenspezifisch oder endgerätspezifisch ist.

14. Basisstation (102) nach Anspruch 8 oder Verfahren nach Anspruch 9, wobei, falls die CSI über ein CSI-Anforderungsfeld ausgelöst werden, das in den Downlink-Steuerungsinformationen, DCI, enthalten ist, entweder die CSI, die mit der ersten CSI-RS-Ressourcenkonfiguration assoziiert sind, oder die CSI, die mit der zweiten CSI-RS-Ressourcenkonfiguration assoziiert sind, basierend auf der Konfiguration ausgelöst werden, die mit dem CSI-Anforderungsfeld assoziiert ist.

**Revendications**

1. Terminal (116) dans un système de communication sans fil (100), le terminal (116) comprenant :

   un émetteur-récepteur (310) ; et
   un processeur (340) configuré pour :

   recevoir, d'une station de base (102) via l'émetteur-récepteur (310), un message de contrôle de ressources radio, RRC, incluant des informations de configuration d'informations d'état de canal, CSI, les informations de configuration CSI incluant une paire d'une première configuration de ressources de signal de référence d'informations d'état de canal, CSI-RS, associée à un type d'entrées multiples et sorties multiples, MIMO, en tant que CLASSE A et une deuxième configuration de ressources CSI-RS associée à un type MIMO en tant que CLASSE B ;
   recevoir, de la station de base (102) via l'émetteur-récepteur (310), deux CSI-RS correspondant à la première configuration de ressources CSI-RS et à la deuxième configuration de ressources CSI-RS ;
   obtenir des CSI associées à la première configuration de ressources CSI-RS et à la deuxième configuration de ressources CSI-RS ; et

   transmettre, à la station de base (120) via l'émetteur-récepteur (310), des rapports CSI incluant les CSI obtenues, et
   où, dans le cas où un nombre maximum de couches de liaison descendante prises en charge par le terminal (116) est de 4 ou 8, un indicateur de rang, RI, des CSI associées à la première configuration de ressources CSI-RS est limité soit à 1 soit à 3.

2. Procédé exécuté par un terminal (116) dans un système de communication sans fil (100), le procédé comprenant :

   recevoir, d'une station de base, un message de contrôle de ressources radio, RRC, incluant des informations de configuration d'informations d'état de canal, CSI, les informations de configuration CSI incluant une paire d'une première configuration de ressources de signal de référence d'informations d'état de canal, CSI-RS, associée à un type d'entrées multiples et sorties multiples, MIMO, en tant que CLASSE A et une deuxième configuration de ressources CSI-RS associée à un type MIMO en tant que CLASSE B ;

recevoir, de la station de base, deux CSI-RS correspondant à la première configuration de ressources CSI-RS et à la deuxième configuration de ressources CSI-RS ;

obtenir des CSI associées à la première configuration de ressources CSI-RS et à la deuxième configuration de ressources CSI-RS ; et

transmettre, à la station de base, des rapports CSI incluant les CSI obtenues,

où, dans le cas où un nombre maximum de couches de liaison descendante prises en charge par le terminal (116) est de 4 ou 8, un indicateur de rang, RI, des CSI associées à la première configuration de ressources CSI-RS est limité soit à 1 soit à 3.

3. Terminal (116) selon la revendication 1 ou procédé selon la revendication 2, où la première configuration de ressource CSI-RS correspond à une ressource CSI-RS de puissance non nulle incluant au moins 8 ports d'antenne.

4. Terminal (116) selon la revendication 1 ou procédé selon la revendication 2, où les CSI associées à la première configuration de ressources CSI-RS incluent le RI et un premier indicateur de matrice de précodage, PMI, pour la première configuration de ressources CSI-RS, et

où le premier PMI est déterminé sur la base du RI.

5. Terminal (116) selon la revendication 1 ou procédé selon la revendication 2, où les CSI associées à la deuxième configuration de ressources CSI-RS incluent un indicateur de qualité de canal, CQI, pour la deuxième configuration de ressources CSI-RS.

6. Terminal (116) selon la revendication 1 ou procédé selon la revendication 2, où le type MIMO en tant que CLASSE A correspond à une CSI-RS non précodée qui est spécifique à une cellule, et

où le type MIMO en tant que CLASSE B correspond à une CSI-RS formée en faisceau qui est spécifique à une cellule ou spécifique à un terminal.

7. Terminal selon la revendication 1 ou procédé selon la revendication 2, où dans le cas où les CSI sont déclenchées via un champ de requête CSI inclus dans les informations de commande de liaison descendante, DCI, soit les CSI associées à la première configuration de ressources CSI-RS, soit les CSI associées à la deuxième configuration de ressource CSI-RS sont déclenchées sur la base de la configuration associée au champ de requête CSI.

8. Station de base (102) dans un système de communication sans fil (100), la station de base (102) comprenant :

un émetteur-récepteur (372a-372n) ; et
un processeur (378) configuré pour :

transmettre, à un terminal (116) via l'émetteur-récepteur (372a-372n), un message de contrôle de ressources radio, RRC, incluant des informations de configuration d'informations d'état de canal, CSI, les informations de configuration CSI incluant une paire d'une première configuration de ressources de signal de référence d'informations d'état de canal, CSI-RS, associée à un type d'entrées multiples et sorties multiples, MIMO, en tant que CLASSE A et une deuxième configuration de ressources CSI-RS associée à un type MIMO en tant que CLASSE B ;

transmettre, au terminal (116) via l'émetteur-récepteur (372a-372n), deux CSI-RS correspondant à la première configuration de ressources CSI-RS et à la deuxième configuration de ressources CSI-RS; et

recevoir, du terminal (116) via l'émetteur-récepteur (372a-372n), des rapports CSI incluant les CSI associées à la première configuration de ressources CSI-RS et à la deuxième configuration de ressources CSI-RS,

où, dans le cas où un nombre maximum de couches de liaison descendante prises en charge par le terminal (116) est de 4 ou 8, un indicateur de rang, RI, des CSI associées à la première configuration de ressources CSI-RS est limité soit à 1 soit à 3.

9. Procédé exécuté par une station de base (102) dans un système de communication sans fil (100), le procédé comprenant :

transmettre, à un terminal (116), un message de contrôle de ressources radio, RRC, incluant des informations de configuration d'informations d'état de canal, CSI, les informations de configuration CSI incluant une paire d'une première configuration de ressources de signal de référence d'informations d'état de canal, CSI-RS, associée à un type d'entrées multiples et sorties multiples, MIMO, en tant que CLASSE A et une deuxième configuration de ressources CSI-RS associée à un type MIMO en tant que CLASSE B ;

transmettre, au terminal (116), deux CSI-RS correspondant à la première configuration de ressources CSI-RS et à la deuxième configuration de ressources CSI-RS ; et

recevoir, du terminal (116), des rapports CSI incluant les CSI associées à la première configuration de ressources CSI-RS et à la deuxième configuration de ressources CSI-RS,

où, dans le cas où un nombre maximum de couches de liaison descendante prises en charge par le terminal (116) est de 4 ou 8, un indicateur de rang, RI, des CSI associées à la première configuration de ressources CSI-RS est limité soit à 1 soit à 3.

10. Station de base (102) selon la revendication 8 ou procédé selon la revendication 9, où la première configuration de ressource CSI-RS correspond à une ressource CSI-RS de puissance non nulle incluant au moins 8 ports d'antenne.

11. Station de base (102) selon la revendication 8 ou procédé selon la revendication 9, où les CSI associées à la première configuration de ressources CSI-RS incluent le RI et un premier indicateur de matrice de précodage, PMI, pour la première configuration de ressources CSI-RS, et

où le premier PMI est déterminé sur la base du RI.

12. Station de base (102) selon la revendication 8 ou procédé selon la revendication 9, où les CSI associées à la deuxième configuration de ressources CSI-RS incluent un indicateur de qualité de canal, CQI, pour la deuxième configuration de ressources CSI-RS.

13. Station de base (102) selon la revendication 8 ou procédé selon la revendication 9, où le type MIMO en tant que CLASSE A correspond à une CSI-RS non précodée qui est spécifique à une cellule, et

où le type MIMO en tant que CLASSE B correspond à une CSI-RS formée en faisceau qui est spécifique à une cellule ou spécifique à un terminal.

14. Station de base (102) selon la revendication 8 ou procédé selon la revendication 9, où, dans le cas où les CSI sont déclenchées via un champ de requête CSI inclus dans les informations de commande de liaison descendante, DCI, soit les CSI associées à la première configuration de ressources CSI-RS, soit les CSI associées à la deuxième configuration de ressource CSI-RS sont déclenchées sur la base de la configuration associée au champ de requête CSI.

FIG. 1

EP 3 907 899 B1

# FIG. 2A

FIG. 2B

250

From Channel → | 255 DC | → | 260 Remove Cyclic Prefix | → | 265 S-to-P | → | 270 Size N FFT | → | 275 P-to-S | → | 280 Channel Decod. & Demod. | → Data Out

FIG. 3A

116

305
310 RF TRANSCEIVER

325 RX PROCESSING CIRCUITRY
315 TX PROCESSING CIRCUITRY

330 SPEAKER
320 MICROPHONE
345 I/O IF

340 PROCESSOR

350 INPUT
355 DISPLAY

360 MEMORY
361 OPERATING SYSTEM
362 APPLICATIONS

FIG. 3B

EP 3 907 899 B1

## FIG. 4

Row-first indexing

400

Longer-first indexing

410

Shorter-first indexing

420

FIG. 5A

EP 3 907 899 B1

500

1 subframe

··· UE-k

| | eMIMO-Type | |
|---|---|---|
| | Scheme 1 | Scheme 2 |
| 501 — UE-k reports $i_1$ or $(i_{1,1}, i_{1,2})$ | CLASS A | CLASS A |
| 502 — UE-k reports RI | CLASS A | CLASS B |
| 503 — UE-k reports CQI+$i_2$ | CLASS B | CLASS B |

# FIG. 5B

| | | eMIMO-Type |
|---|---|---|
| | | Scheme 3 |
| 511 | UE-k reports $i_1$ or $(i_{1,1}, i_{1,2})$ | CLASS A |
| 512 | UE-k reports RI+CQI+$i_2$ | CLASS B |

EP 3 907 899 B1

# FIG. 5C

EP 3 907 899 B1

| | | eMIMO-Type |
|---|---|---|
| | | Scheme 4 |
| 521 | ▨ UE-k reports $i_1$ or $(i_{1,1}, i_{1,2}) + RI$ | CLASS A |
| 522 | ▨ UE-k reports CQI+$i_2$ | CLASS B |

# FIG. 5D

EP 3 907 899 B1

| | | eMIMO-Type |
|---|---|---|
| | | Scheme 5 |
| 531 | ▮ UE-k reports $i_1$ or $(i_{1,1}, i_{1,2})$ | CLASS A (CSI process 1) |
| 532 | ▨ UE-k reports RI | CLASS A (CSI process 1) |
| 533 | ▨ UE-k reports CQI+$i_2$ | CLASS B (CSI process 2) |
| 534 | ▤ UE-k reports RI | CLASS B (CSI process 2) |

FIG. 5E

EP 3 907 899 B1

| | | eMIMO-Type |
| --- | --- | --- |
| | | Scheme 6 |
| 541 | ▮ UE-k reports $i_1$ or $(i_{1,1}, i_{1,2})$ + RI | CLASS A (CSI process 1) |
| 542 | ▨ UE-k reports CQI+$i_2$ | CLASS B (CSI process 2) |
| 543 | ▤ UE-k reports RI | CLASS B (CSI process 2) |

## FIG. 5F

550

1 subframe

UE-k

| | eMIMO-Type |
|---|---|
| | Scheme 7 |
| 551 ▨ UE-k reports $i_1$ or $(i_{1,1}, i_{1,2})$ + RI | CLASS A (CSI process 1) |
| 552 ▧ UE-k reports RI+CQI+$i_2$ | CLASS B (CSI process 2) |

# FIG. 6A

| | eMIMO-Type |
|---|---|
| | Scheme 5B |
| 601 ▦ UE-k reports $i_1$ or ($i_{1,1}$, $i_{1,2}$) | CLASS A [1st CSI-RS resource] |
| 602 ▨ UE-k reports RI | CLASS A [1st CSI-RS resource] |
| 603 ▧ UE-k reports CQI+$i_2$ | CLASS B [2nd CSI-RS resource] |
| 604 ▤ UE-k reports RI | CLASS B [2nd CSI-RS resource] |

EP 3 907 899 B1

FIG. 6B

610

1 subframe

⟷

··· UE-k

EP 3 907 899 B1

| | | eMIMO-Type |
|---|---|---|
| | | Scheme 6B |
| 611 | ▣ UE-k reports $i_1$ or $(i_{1,1}, i_{1,2}) + RI$ | CLASS A (1st CSI-RS resource) |
| 612 | ▨ UE-k reports CQI+$i_2$ | CLASS B (2nd CSI-RS resource) |
| 613 | ▥ UE-k reports RI | CLASS B (2nd CSI-RS resource) |

# FIG. 6C

| | | eMIMO-Type |
|---|---|---|
| | | Scheme 7B |
| 621 | ▓ UE-k reports $i_1$ or $(i_{1,1}, i_{1,2})$ + RI | CLASS A ($1^{st}$ CSI-RS resource) |
| 622 | ▨ UE-k reports RI+CQI+$i_2$ | CLASS B ($2^{nd}$ CSI-RS resource) |

EP 3 907 899 B1

FIG. 7A

FIG. 7B

# FIG. 7C

EP 3 907 899 B1

FIG. 8

800

| Receive configuration information, including 1 CSI process, MIMO-Type 1, MIMO-Type 2 of Class B with 1 NZP CSI-RS resource | ～801 |

| Calculate CSI-1 for MIMO-Type 1 and CSI-2 for MIMO-Type 2 | ～802 |

| Transmit CSI-1 and CSI-2 on an UL channel | ～803 |

# FIG. 9

900

┌─────────────────────────────────────────────────┐
│ Configure UE-k with one CSI process, MIMO-Type 1,│
│ MIMO-Type 2 of Class B with 1 NZP CSI-RS resource│    901
└─────────────────────────────────────────────────┘
                        │
                        ▼
┌─────────────────────────────────────────────────┐
│ Generate, for UE-k, CSI-RS 1 associated with MIMO-Type 1 and │
│ CSI-RS 2 associated with MIMO-Type 2             │    902
└─────────────────────────────────────────────────┘
                        │
                        ▼
┌─────────────────────────────────────────────────┐
│ Transmit, to UE-k, the configuration information,│
│ CSI-RS 1, CSI-RS 2                               │    903
└─────────────────────────────────────────────────┘
                        │
                        ▼
┌─────────────────────────────────────────────────┐
│ Receive, from UE-k on an UL channel, CSI report 1 associated with │
│ MIMO-Type 1 and CSI report 2 associated with MIMO-Type 2 │    904
└─────────────────────────────────────────────────┘
                        │
                        ▼

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3382903 A1

**Non-patent literature cited in the description**

- *3GPP Draft; 36213-C70 S00-S09 EBFDMIMO213 DRAFTCR R1-157500*, 15 November 2015
- Handling collision between nonPrecoded type and beamformed type CSI reports. *3GPP TSG RAN WG1 Meeting #84, R1-160534*